(19)

Europäisches Patentamt
European Patent Office
Office européen des brevets

(11) **EP 4 723 644 A1**

(12) **EUROPEAN PATENT APPLICATION**
published in accordance with Art. 153(4) EPC

(43) Date of publication:
08.04.2026 Bulletin 2026/15

(21) Application number: 24815703.4

(22) Date of filing: 17.04.2024

(51) International Patent Classification (IPC):
$H04N\ 19/82^{(2014.01)}$    $H04N\ 19/132^{(2014.01)}$
$H04N\ 19/176^{(2014.01)}$    $H04N\ 19/70^{(2014.01)}$
$H04N\ 19/124^{(2014.01)}$    $H04N\ 19/426^{(2014.01)}$
$H04N\ 19/117^{(2014.01)}$    $H04N\ 19/186^{(2014.01)}$

(52) Cooperative Patent Classification (CPC):
H04N 19/117; H04N 19/124; H04N 19/132;
H04N 19/176; H04N 19/186; H04N 19/426;
H04N 19/70; H04N 19/82

(86) International application number:
PCT/KR2024/005142

(87) International publication number:
WO 2024/248324 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.05.2023  KR 20230068625
25.08.2023  KR 20230112285

(71) Applicant: Samsung Electronics Co., Ltd.
Suwon-si, Gyeonggi-do 16677 (KR)

(72) Inventors:
• PIAO, Yinji
  Suwon-si, Gyeonggi-do 16677 (KR)
• PARK, Minsoo
  Suwon-si, Gyeonggi-do 16677 (KR)
• PARK, Minwoo
  Suwon-si, Gyeonggi-do 16677 (KR)
• CHOI, Kwangpyo
  Suwon-si, Gyeonggi-do 16677 (KR)

(74) Representative: Appleyard Lees IP LLP
G Mill
Dean Clough Industrial Park
Halifax HX3 5AH (GB)

(54) **IMAGE DECODING METHOD, IMAGE DECODING DEVICE, IMAGE ENCODING METHOD, AND IMAGE ENCODING DEVICE**

(57)    Provided are an image decoding method and apparatus and an image encoding method and apparatus which involve obtaining a first representative value of a current block with respect to residual samples or prediction samples of the current block, and a second representative value of each of neighboring blocks with respect to residual samples or prediction samples of each of the neighboring blocks of the current block, obtaining a filter index indicating one in-loop filter set among a plurality of in-loop filter sets, based on the first representative value and the second representative value, and performing in-loop filtering on the current block, based on the one in-loop filter set determined by the filter index.

FIG. 22

## Description

### Technical Field

The present disclosure relates to an image decoding method, an image decoding apparatus, an image encoding method, and an image encoding apparatus, and more particularly, to image decoding and encoding that perform in-loop filtering.

### Background Art

A codec such as H.266 Advanced Video Coding (H.264 AVC), High Efficiency Video Coding (HEVC), and Versatile Video Coding (VVC), may split an image into blocks, and each block may be prediction encoded and prediction decoded via inter prediction or intra prediction.

The intra prediction corresponds to a method of compressing an image by removing spatial redundancy in the image, and the inter prediction corresponds to a method of compressing an image by removing temporal redundancy between images.

In an encoding and decoding process, a current block is reconstructed by using a prediction block of the current block and a residual block of the current block. In order to enhance an image quality of a reconstructed image, in-loop filtering is performed on the current block.

Recently, as hardware or artificial intelligence technology develops, technologies for additionally using a residual sample or a prediction sample in addition to a reconstructed sample, when in-loop filtering is performed, are proposed. Accordingly, there is demand for a method of reducing a size of a buffer for storing a residual sample or a prediction sample.

### Disclosure of Invention

### Solution to Problem

According to an embodiment of the present disclosure, an image decoding method may include: obtaining a first representative value of a current block with respect to residual samples or prediction samples of the current block, and a second representative value of each of neighboring blocks with respect to residual samples or prediction samples of each of the neighboring blocks of the current block; obtaining a filter index indicating one in-loop filter set among a plurality of in-loop filter sets, based on the first representative value and the second representative value; and performing in-loop filtering on the current block, based on the one in-loop filter set determined by the filter index.

According to an embodiment of the present disclosure, an image decoding apparatus may include: memory storing one or more instructions; and at least one processor configured to operate according to the one or more instructions. The at least one processor may be configured to obtain a first representative value of a current block with respect to residual samples or prediction samples of the current block, and a second representative value of each of neighboring blocks with respect to residual samples or prediction samples of each of the neighboring blocks of the current block. The at least one processor may be configured to obtain a filter index indicating one in-loop filter set among a plurality of in-loop filter sets, based on the first representative value and the second representative value. The at least one processor may be configured to perform in-loop filtering on the current block, based on the one in-loop filter set determined by the filter index.

According to an embodiment of the present disclosure, an image encoding method may include: obtaining a first representative value of a current block with respect to residual samples or prediction samples of the current block, and a second representative value of each of neighboring blocks with respect to residual samples or prediction samples of each of the neighboring blocks of the current block; obtaining a filter index indicating one in-loop filter set among a plurality of in-loop filter sets, based on the first representative value and the second representative value; and performing in-loop filtering on the current block, based on the one in-loop filter set determined by the filter index.

According to an embodiment of the present disclosure, an image encoding apparatus may include: memory storing one or more instructions; and at least one processor configured to operate according to the one or more instructions. The at least one processor may be configured to obtain a first representative value of a current block with respect to residual samples or prediction samples of the current block, and a second representative value of each of neighboring blocks with respect to residual samples or prediction samples of each of the neighboring blocks of the current block. The at least one processor may be configured to obtain a filter index indicating one in-loop filter set among a plurality of in-loop filter sets, based on the first representative value and the second representative value. The at least one processor may be configured to perform in-loop filtering on the current block, based on the one in-loop filter set determined by the filter index.

**Brief Description of Drawings**

FIG. 1 illustrates a schematic block diagram of an image decoding apparatus according to an embodiment of the present disclosure.

FIG. 2 is a flowchart of an image decoding method according to an embodiment of the present disclosure.

FIG. 3 illustrates a process, performed by an image decoding apparatus, of determining at least one coding unit by splitting a current coding unit, according to an embodiment of the present disclosure.

FIG. 4 illustrates a process, performed by an image decoding apparatus, of determining at least one coding unit by splitting a non-square coding unit, according to an embodiment of the present disclosure.

FIG. 5 illustrates a process, performed by an image decoding apparatus, of splitting a coding unit based on at least one of block shape information and split shape mode information, according to an embodiment of the present disclosure.

FIG. 6 illustrates a method, performed by an image decoding apparatus, of determining a preset coding unit from among an odd number of coding units, according to an embodiment of the present disclosure.

FIG. 7 illustrates an order of processing a plurality of coding units when an image decoding apparatus determines the plurality of coding units by splitting a current coding unit, according to an embodiment of the present disclosure.

FIG. 8 illustrates a process, performed by an image decoding apparatus, of determining that a current coding unit is to be split into an odd number of coding units, when the coding units are not processable in a preset order, according to an embodiment of the present disclosure.

FIG. 9 illustrates a process, performed by an image decoding apparatus, of determining at least one coding unit by splitting a first coding unit, according to an embodiment of the present disclosure.

FIG. 10 illustrates that a shape into which a second coding unit is splittable is restricted when the second coding unit having a non-square shape, which is determined when an image decoding apparatus splits a first coding unit, satisfies a preset condition, according to an embodiment of the present disclosure.

FIG. 11 illustrates a process, performed by an image decoding apparatus, of splitting a square coding unit when split shape mode information is unable to indicate that the square coding unit is split into four square coding units, according to an embodiment of the present disclosure.

FIG. 12 illustrates that a processing order between a plurality of coding units may be changed depending on a process of splitting a coding unit, according to an embodiment of the present disclosure.

FIG. 13 illustrates a process of determining a depth of a coding unit as a shape and size of the coding unit change, when the coding unit is recursively split such that a plurality of coding units are determined, according to an embodiment of the present disclosure.

FIG. 14 illustrates depths that are determinable based on shapes and sizes of coding units, and part indexes (PIDs) that are for distinguishing the coding units, according to an embodiment of the present disclosure.

FIG. 15 illustrates that a plurality of coding units are determined based on a plurality of preset data units included in a picture, according to an embodiment of the present disclosure.

FIG. 16 illustrates a processing block serving as a unit for determining a determination order of reference coding units included in a picture, according to an embodiment of the present disclosure.

FIG. 17 is a diagram illustrating a process of encoding and decoding an image.

FIG. 18 is a diagram for describing a method of determining an in-loop filter of a current block, based on residual samples, according to an embodiment of the present disclosure.

FIG. 19 is a diagram for describing a method of determining an in-loop filter of a current block, based on a representative value of residual samples, according to an embodiment of the present disclosure.

FIG. 20 is a diagram for describing a method of determining an in-loop filter of a current block, based on a representative value of residual samples, according to an embodiment of the present disclosure.

FIG. 21 is a diagram for describing a method of determining an in-loop filter of a current block, based on a representative value of residual samples, according to an embodiment of the present disclosure.

FIG. 22 is a flowchart of an image decoding method according to an embodiment of the present disclosure.

FIG. 23 is a block diagram illustrating a configuration of an image decoding apparatus according to an embodiment of the present disclosure.

FIG. 24 is a flowchart of an image encoding method according to an embodiment of the present disclosure.

FIG. 25 is a block diagram illustrating a configuration of an image encoding apparatus according to an embodiment of the present disclosure.

**Mode for the Invention**

Throughout the present disclosure, the expression "at least one of a, b or c" indicates only a, only b, only c, both a and b, both a and c, both b and c, all of a, b, and c, or variations thereof.

Advantages and features of embodiments and methods of accomplishing the same may be understood more readily by reference to the embodiments and the accompanying drawings. In this regard, the present disclosure may have different forms and should not be construed as being limited to the embodiments set forth herein. Rather, these embodiments are provided so that this present disclosure will be thorough and complete and will fully convey the concept of the present disclosure to one of ordinary skill in the art.

The terms used in the specification will be briefly defined, and the embodiments will be described in detail.

All terms including descriptive or technical terms which are used in the specification should be construed as having meanings that are obvious to one of ordinary skill in the art. However, the terms may have different meanings according to the intention of one of ordinary skill in the art, precedent cases, or the appearance of new technologies. Also, some terms may be arbitrarily selected by the applicant, and in this case, the meaning of the selected terms will be described in detail in the detailed description of the present disclosure. Therefore, the terms used in the present disclosure should not be interpreted based on only their names but have to be defined based on the meaning of the terms together with the descriptions throughout the specification.

In the following specification, the singular forms include plural forms unless the context clearly indicates otherwise.

Throughout the specification, when a part "includes" or "comprises" an element, unless there is a particular description contrary thereto, the part may further include other elements, not excluding the other elements.

Also, numerals (e.g., "first", "second", and the like) in descriptions of the specification are used only to distinguish one element from another element.

In the following descriptions, terms such as "unit" indicate a software or hardware element and the "unit" performs certain functions. However, the "unit" is not limited to software or hardware. The "unit" may be formed so as to be in an addressable storage medium, or may be formed so as to operate one or more processors. Thus, for example, the term "unit" may refer to elements such as software elements, object-oriented software elements, class elements, and task elements, and may include processes, functions, attributes, procedures, subroutines, segments of program code, drivers, firmware, micro codes, circuits, data, a database, data structures, tables, arrays, or variables. A function provided by the elements and "units" may be associated with the smaller number of elements and "units", or may be divided into additional elements and "units".

According to an embodiment of the disclosure, the "unit" may include a processor and memory. The term "processor" should be interpreted broadly to include a general purpose processor, a central processing unit (CPU), a microprocessor, a digital signal processor (DSP), a controller, a microcontroller, a state machine, and the like. In some environments, the "processor" may refer to an application specific semiconductor (ASIC), a programmable logic device (PLD), a field programmable gate array (FPGA), or the like. The term "processor" may refer to a combination of processing devices such as, for example, a combination of a DSP and a microprocessor, a combination of a plurality of microprocessors, a combination of one or more microprocessors in conjunction with a DSP core, or a combination of any other such configurations.

The processor may include various circuits and/or a plurality of processors. For example, the term "processor" used herein including claims may include various types of processing circuitry including at least one processor. One or more processors in the at least one processor may be configured to individually in a distributed manner and/or collectively perform various functions to be described here. As used herein, "processor", "at least one processor", and "one or more processors" may be configured to perform various functions. However, the recited terms cover a situation in which one processor performs a part of functions and other processor(s) performs the other part of the functions, and a situation in which one processor may perform all functions. Also, at least one processor may include a combination of processors configured to perform a variety of the disclosed functions in a distributed manner. The at least one processor may execute program instructions to achieve or perform various functions.

The term "memory" should be interpreted broadly to include any electronic component capable of storing electronic information. The term "memory" may refer to various types of processor-readable media such as random access memory (RAM), a read-only memory (ROM), a non-volatile random access memory (NVRAM), a programmable read-only memory (PROM), an eraseprogrammable read-only memory (EPROM), an electrically erasable PROM (EEPROM), a flash memory, a magnetic or optical data storage device, registers, and the like. When the processor can read information from memory and/or write information to the memory, the memory is said to be in an electronic communication state with the processor. The memory integrated in the processor is in an electronic communication state with the processor.

Hereinafter, an "image" may be a static image such as a still image of a video or may be a dynamic image such as a moving image, that is, the video itself.

Hereinafter, a "sample" denotes data assigned to a sampling position of an image, i.e., data to be processed. For example, pixel values of an image in a spatial domain and transform coefficients on a transform domain may be samples. A unit including at least one such sample may be defined as a block.

Also, in the present specification, a "current block" may indicate a block of a largest coding unit, coding unit, prediction unit, or transform unit of a current image to be encoded or decoded, a subblock of the block, a group of subblocks, or a group of blocks.

Hereinafter, an embodiment will be described in detail with reference to the accompanying drawings to allow one of skill in the art to easily implement the embodiment. In addition, portions irrelevant to the description will be omitted in the drawings for a clear description of the present disclosure.

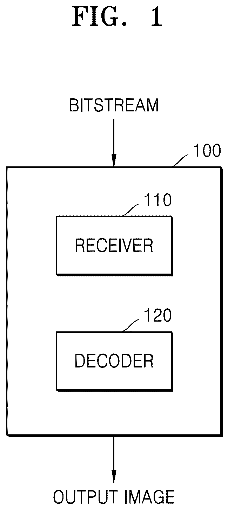

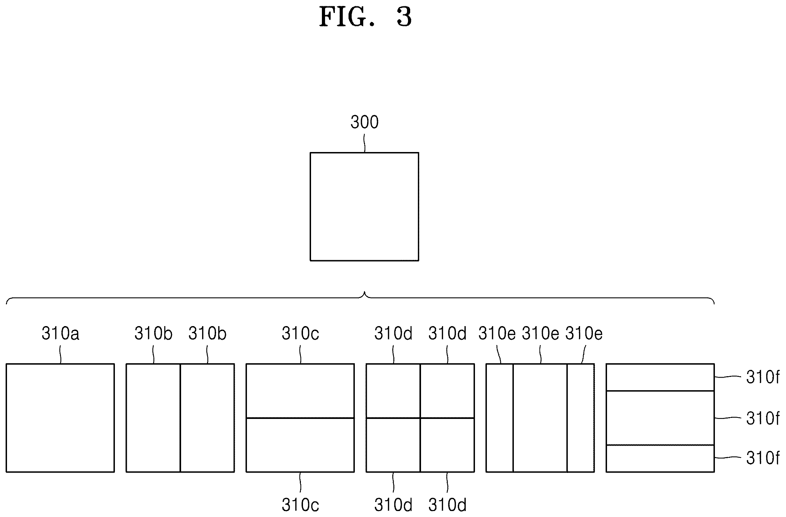

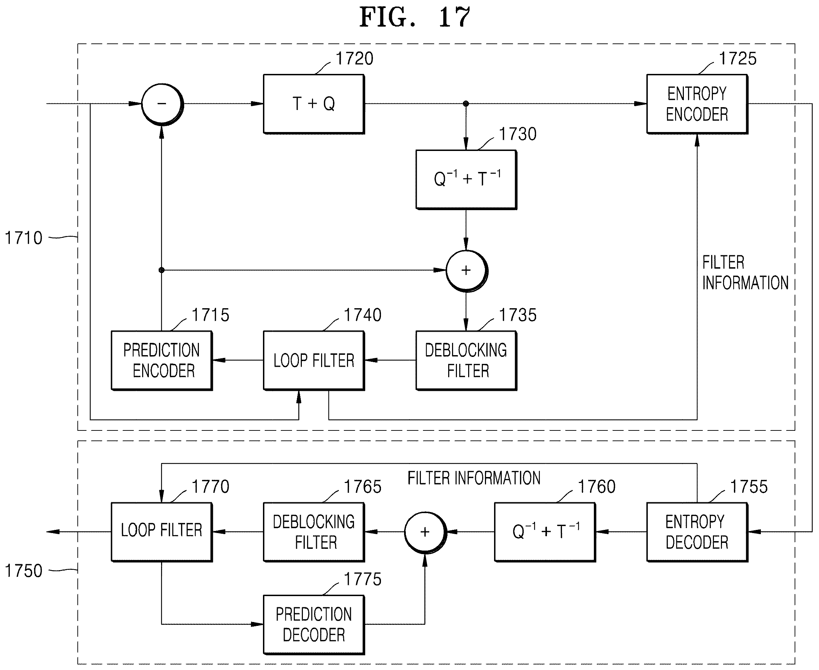

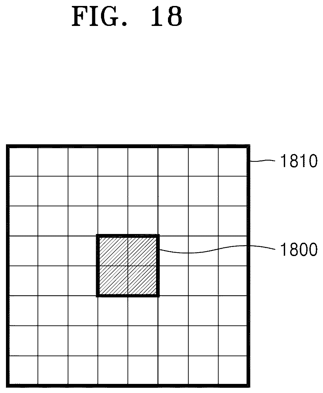

Hereinafter, with reference to FIGS. 1 to 16, an image encoding apparatus and an image decoding apparatus, and an image encoding method and an image decoding method will be described in detail according to an embodiment of the present disclosure. With reference to FIGS. 3 to 16, a method of determining a data unit of an image according to an embodiment of the present disclosure will be described, with reference to FIG. 17, image encoding and decoding processes will be described, and with reference to FIGS. 18 to 32, according to an embodiment of the present disclosure, image encoding/decoding methods by which a first representative value of a current block with respect to residual samples or prediction samples of the current block and a second representative value of each of neighboring blocks with respect to residual samples or prediction samples of each of the neighboring blocks of the current block, a filter index indicating one in-loop filter set among a plurality of in-loop filter sets, based on the first representative value and the second representative value, and in-loop filtering is performed on the current block, based on the in-loop filter set determined by the filter index will be described below.

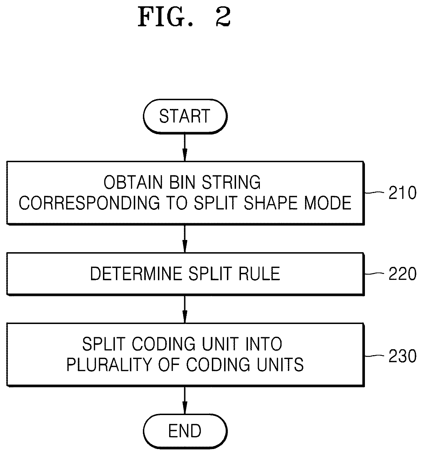

Hereinafter, with reference to FIGS. 1 and 2, according to an embodiment of the present disclosure, a method and apparatus for adaptively selecting a context model, based on various shapes of coding units, will now be described in detail.

FIG. 1 illustrates a schematic block diagram of an image decoding apparatus according to an embodiment of the present disclosure.

An image decoding apparatus 100 may include a receiver 110 and a decoder 120. The receiver 110 and the decoder 120 may include at least one processor. Also, the receiver 110 and the decoder 120 may include memory storing instructions to be performed by the at least one processor.

The receiver 110 may receive a bitstream. The bitstream includes information of an image encoded by a video encoding apparatus 2200 to be described below. Also, the bitstream may be transmitted from the video encoding apparatus 2200. The video encoding apparatus 2200 and the image decoding apparatus 100 may be connected by wire or wirelessly, and the receiver 110 may receive the bitstream by wire or wirelessly. The receiver 110 may receive the bitstream from a storage medium such as an optical medium, a hard disk, or the like. The decoder 120 may reconstruct an image based on information obtained from the received bitstream. The decoder 120 may obtain, from the bitstream, a syntax element for reconstructing the image. The decoder 120 may reconstruct the image based on the syntax element.

Operations of the image decoding apparatus 100 will be described in detail with reference to FIG. 2.

FIG. 2 is a flowchart of an image decoding method according to an embodiment of the present disclosure.

According to an embodiment of the present disclosure, the receiver 110 receives a bitstream.

The image decoding apparatus 100 obtains, from a bitstream, a bin string corresponding to a split shape mode of a coding unit (operation 210). The image decoding apparatus 100 determines a split rule of the coding unit (operation 220). Also, the image decoding apparatus 100 splits the coding unit into a plurality of coding units, based on at least one of the bin strings corresponding to the split shape mode and the split rule (operation 230). The image decoding apparatus 100 may determine an allowable first range of a size of the coding unit, according to a height to width ratio of the coding unit, so as to determine the split rule. The image decoding apparatus 100 may determine an allowable second range of the size of the coding unit, according to the split shape mode of the coding unit, so as to determine the split rule.

Hereinafter, splitting of a coding unit will be described in detail according to an embodiment of the present disclosure.

First, one picture may be split into one or more slices or one or more tiles. One slice or one tile may be a sequence of one or more largest coding units (coding tree units (CTUs)). There is a largest coding block (coding tree block (CTB)) conceptually compared to a largest coding unit (CTU).

The largest coding block (CTB) indicates an NxN block including NxN samples (where, N is an integer). Each color component may be split into one or more largest coding blocks.

A largest coding unit (CTU) of a case where a picture includes three sample arrays (sample arrays for Y, Cr, and Cb components) is a unit including a largest coding block of a luma sample, two corresponding largest coding blocks of chroma samples, and syntax structures used to encode the luma sample and the chroma samples. A largest coding unit of a case where a picture is a monochrome picture is a unit including a largest coding block of a monochrome sample and syntax structures used to encode the monochrome samples. A largest coding unit of a case where a picture is a picture encoded in color planes separated according to color components is a unit including syntax structures used to encode the picture and samples of the picture.

One largest coding block (CTB) may be split into MxN coding blocks including MxN samples (where, M and N are integers).

A coding unit (CU) of a case where a picture has sample arrays for Y, Cr, and Cb components is a unit including a coding block of a luma sample, two corresponding coding blocks of chroma samples, and syntax structures used to encode the luma sample and the chroma samples. A coding unit of a case where a picture is a monochrome picture is a unit including a coding block of a monochrome sample and syntax structures used to encode the monochrome samples. A coding unit of a case where a picture is a picture encoded in color planes separated according to color components is a unit including syntax structures used to encode the picture and samples of the picture.

As described above, a largest coding block and a largest coding unit are conceptually distinguished from each other, and a coding block and a coding unit are conceptually distinguished from each other. That is, a (largest) coding unit refers to a data structure including a (largest) coding block including a corresponding sample and a syntax structure corresponding to the (largest) coding block. However, because it is understood by one of ordinary skill in the art that a (largest) coding unit or a (largest) coding block refers to a block of a preset size including a preset number of samples, a largest coding block and a largest coding unit, or a coding block and a coding unit are mentioned in the following specification without being distinguished unless otherwise described.

An image may be split into largest coding units (CTUs). A size of each largest coding unit may be determined based on information obtained from a bitstream. A shape of each largest coding unit may be a square shape of the same size. However, the present disclosure is not limited thereto.

For example, information about a maximum size of a luma coding block may be obtained from a bitstream. For example, the maximum size of the luma coding block indicated by the information about the maximum size of the luma coding block may be one of 4x4, 8x8, 16x16, 32x32, 64x64, 128x128, and 256x256.

For example, information about a luma block size difference and a maximum size of a luma coding block that may be split into two may be obtained from a bitstream. The information about the luma block size difference may refer to a size difference between a luma largest coding unit and a largest luma coding block that may be split into two. Accordingly, when the information about the maximum size of the luma coding block that may be split into two and the information about the luma block size difference obtained from the bitstream are combined with each other, a size of the luma largest coding unit may be determined. A size of a chroma largest coding unit may be determined by using the size of the luma largest coding unit. For example, when a Y:Cb:Cr ratio is 4:2:0 according to a color format, a size of a chroma block may be half a size of a luma block, and a size of a chroma largest coding unit may be half a size of a luma largest coding unit.

According to an embodiment of the present disclosure, because information about a maximum size of a luma coding block that is binary splittable is obtained from a bitstream, the maximum size of the luma coding block that is binary splittable may be variably determined. In contrast, a maximum size of a luma coding block that is ternary splittable may be fixed. For example, the maximum of the luma coding block that is ternary splittable in an I-picture may be 32x32, and the maximum of the luma coding block that is ternary splittable in a P-picture or a B-picture may be 64x64.

Also, a largest coding unit may be hierarchically split into coding units based on split shape mode information obtained from a bitstream. At least one of information indicating whether to perform quad splitting, information indicating whether to perform multi-splitting, split direction information, and split type information may be obtained as the split shape mode information from the bitstream.

For example, the information indicating whether to perform quad splitting may indicate whether a current coding unit is to be quad split (QUAD_SPLIT) or not.

When the current coding unit is not quad split, the information indicating whether to perform multi-splitting may indicate whether the current coding unit is to be no longer split (NO_SPLIT) or to be binary/ternary split.

When the current coding unit is binary split or ternary split, the split direction information indicates that the current coding unit is split in one of a horizontal direction and a vertical direction.

When the current coding unit is split in the horizontal direction or the vertical direction, the split type information indicates that the current coding unit is binary split or ternary split.

A split mode of the current coding unit may be determined according to the split direction information and the split type information. A split mode when the current coding unit is binary split in the horizontal direction may be determined to be a binary horizontal split mode (SPLIT_BT_HOR), a split mode when the current coding unit is ternary split in the horizontal direction may be determined to be a ternary horizontal split mode (SPLIT_TT_HOR), a split mode when the current coding unit is binary split in the vertical direction may be determined to be a binary vertical split mode (SPLIT_BT_VER), and a split mode when the current coding unit is ternary split in the vertical direction may be determined to be a ternary vertical split mode SPLIT_BT_VER.

The image decoding apparatus 100 may obtain, from the bitstream, the bin string of the split shape mode information. A form of the bitstream received by the image decoding apparatus 100 may include fixed length binary code, unary code, truncated unary code, pre-determined binary code, or the like. The bin string is information in a binary number. The bin string may include at least one bit. The image decoding apparatus 100 may obtain the split shape mode information corresponding to the bin string, based on the split rule. The image decoding apparatus 100 may determine whether to quad-split a coding unit, whether not to split a coding unit, a split direction, and a split type, based on one bin string.

The coding unit may be smaller than or equal to the largest coding unit. For example, because a largest coding unit is a coding unit having a maximum size, the largest coding unit is one of coding units. When split shape mode information about a largest coding unit indicates that splitting is not performed, a coding unit determined in the largest coding unit has the same size as that of the largest coding unit. When split shape mode information about a largest coding unit indicates that splitting is performed, the largest coding unit may be split into coding units. Also, when split shape mode information about a coding unit indicates that splitting is performed, the coding unit may be split into smaller coding units. However, the splitting of the image is not limited thereto, and the largest coding unit and the coding unit may not be distinguished. The splitting of the coding unit will be described in detail with reference to FIGS. 3 to 16.

Also, one or more prediction blocks for prediction may be determined from a coding unit. The prediction block may be equal to or smaller than the coding unit. Also, one or more transform blocks for transformation may be determined from a coding unit. The transform block may be equal to or smaller than the coding unit.

The shapes and sizes of the transform block and prediction block may not be related to each other.

In another embodiment, prediction may be performed by using a coding unit as a prediction unit. Also, transformation may be performed by using a coding unit as a transform block.

The splitting of the coding unit will be described in detail with reference to FIGS. 3 to 16. A current block and a neighboring block of the present disclosure may indicate one of the largest coding unit, the coding unit, the prediction block, and the transform block. Also, the current block of the current coding unit is a block that is currently being decoded or encoded or a block that is currently being split. The neighboring block may be a block reconstructed before the current block. The neighboring block may be spatially or temporally adjacent to the current block. The neighboring block may be located at one of lower left, left, upper left, top, upper right, right, lower right of the current block.

FIG. 3 illustrates a process, performed by an image decoding apparatus, of determining at least one coding unit by splitting a current coding unit, according to an embodiment of the present disclosure.

A block shape may include 4Nx4N, 4Nx2N, 2Nx4N, 4NxN, Nx4N, 32NxN, Nx32N, 16NxN, Nx16N, 8NxN, or Nx8N. Here, N may be a positive integer. Block shape information is information indicating at least one of a shape, a direction, a height to width ratio, or size of a coding unit.

The shape of the coding unit may include a square and a non-square. When the lengths of the width and height of the coding unit are the same (i.e., when the block shape of the coding unit is 4Nx4N), the image decoding apparatus 100 may determine the block shape information of the coding unit to be a square. The image decoding apparatus 100 may determine the shape of the coding unit to be a non-square.

When the width and the height of the coding unit are different from each other (i.e., when the block shape of the coding unit is 4Nx2N, 2Nx4N, 4NxN, Nx4N, 32NxN, Nx32N, 16NxN, Nx16N, 8NxN, or Nx8N), the image decoding apparatus 100 may determine the block shape information of the coding unit to be a non-square shape. When the shape of the coding unit is non-square, the image decoding apparatus 100 may determine the height to width ratio among the block shape information of the coding unit to be at least one of 1:2, 2:1, 1:4, 4:1, 1:8, 8:1, 1:16, 16:1, 1:32, or 32:1. Also, the image decoding apparatus 100 may determine whether the coding unit is in a horizontal direction or a vertical direction, based on the length of the width and the length of the height of the coding unit. Also, the image decoding apparatus 100 may determine the size of the coding unit, based on at least one of the length of the width, the length of the height, or the area of the coding unit.

According to an embodiment of the present disclosure, the image decoding apparatus 100 may determine the shape of the coding unit by using the block shape information, and may determine a splitting method of the coding unit by using the split shape mode information. That is, a coding unit splitting method indicated by the split shape mode information may be determined based on a block shape indicated by the block shape information used by the image decoding apparatus 100.

The image decoding apparatus 100 may obtain the split shape mode information from a bitstream. However, an embodiment is not limited thereto, and the image decoding apparatus 100 and the video encoding apparatus 2200 may determine pre-agreed split shape mode information, based on the block shape information. The image decoding apparatus 100 may determine the pre-agreed split shape mode information with respect to a largest coding unit or a smallest coding unit. For example, the image decoding apparatus 100 may determine split shape mode information with respect to the largest coding unit to be a quad split. Also, the image decoding apparatus 100 may determine split shape mode information regarding the smallest coding unit to be "no split". In particular, the image decoding apparatus 100 may determine the size of the largest coding unit to be 256x256. The image decoding apparatus 100 may determine the pre-agreed split shape mode information to be a quad split. The quad split is a split shape mode in which the width and the height of the coding unit are both bisected. The image decoding apparatus 100 may obtain a coding unit of a 128x128 size from the largest coding unit of a 256x256 size, based on the split shape mode information. Also, the image decoding apparatus 100 may determine the size of the smallest coding unit to be 4x4. The image decoding apparatus 100 may obtain split shape mode information indicating "no split" with respect to the smallest coding unit.

According to an embodiment of the present disclosure, the image decoding apparatus 100 may use the block shape information indicating that the current coding unit has a square shape. For example, the image decoding apparatus 100 may determine whether not to split a square coding unit, whether to vertically split the square coding unit, whether to horizontally split the square coding unit, or whether to split the square coding unit into four coding units, based on the split shape mode information. Referring to FIG. 3, when the block shape information of a current coding unit 300 indicates a square shape, the decoder 120 may determine that a coding unit 310a having the same size as the current coding unit 300 is not split, based on the split shape mode information indicating no split, or may determine coding units 310b, 310c, 310d, 310e, 310f, etc. split based on the split shape mode information indicating a preset splitting method.

Referring to FIG. 3, according to an embodiment of the present disclosure, the image decoding apparatus 100 may determine two coding units 310b obtained by splitting the current coding unit 300 in a vertical direction, based on the split shape mode information indicating to perform splitting in a vertical direction. The image decoding apparatus 100 may determine two coding units 310c obtained by splitting the current coding unit 300 in a horizontal direction, based on the split shape mode information indicating to perform splitting in a horizontal direction. The image decoding apparatus 100 may determine four coding units 310d obtained by splitting the current coding unit 300 in vertical and horizontal directions, based on the split shape mode information indicating to perform splitting in vertical and horizontal directions. According to an embodiment of the present disclosure, the image decoding apparatus 100 may determine three coding units 310e obtained by splitting the current coding unit 300 in a vertical direction, based on the split shape mode information indicating to perform ternary-splitting in a vertical direction. The image decoding apparatus 100 may determine three coding units 310f obtained by splitting the current coding unit 300 in a horizontal direction, based on the split shape mode information indicating to perform ternary-splitting in a horizontal direction. However, splitting methods of the square coding unit are not limited to the above-described methods, and the split shape mode information may indicate various methods. Preset splitting methods of splitting the square coding unit will be described in detail below in relation to various embodiments.

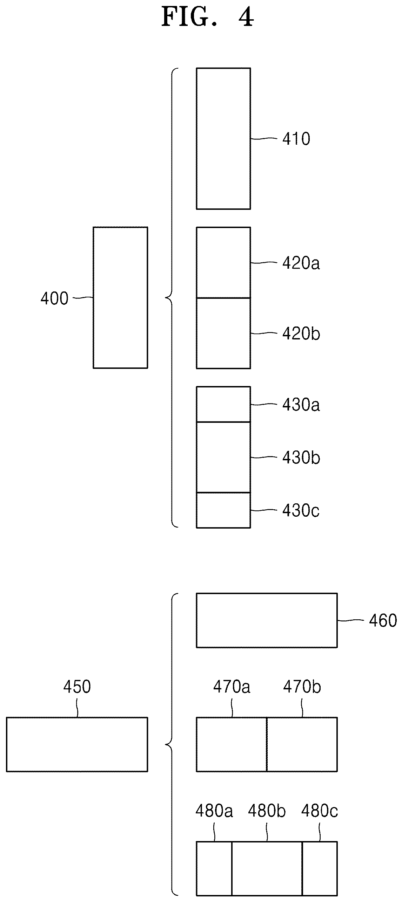

FIG. 4 illustrates a process, performed by an image decoding apparatus, of determining at least one coding unit by splitting a non-square coding unit, according to an embodiment of the present disclosure.

According to an embodiment of the present disclosure, the image decoding apparatus 100 may use block shape information indicating that a current coding unit has a non-square shape. The image decoding apparatus 100 may determine whether not to split the non-square current coding unit or whether to split the non-square current coding unit by using a preset splitting method, based on split shape mode information. Referring to FIG. 4, when the block shape information of a current coding unit 400 or 450 indicates a non-square shape, the image decoding apparatus 100 may determine that a coding unit 410 or 460 having the same size as the current coding unit 400 or 450 is not split, based on the split shape mode information indicating no split, or may determine coding units 420a, 420b, 430a, 430b, 430c, 470a, 470b, 480a, 480b, and 480c split based on the split shape mode information indicating a preset splitting method. Preset splitting methods of splitting a non-square coding unit will be described in detail below in relation to various embodiments.

According to an embodiment of the present disclosure, the image decoding apparatus 100 may determine a splitting method of a coding unit by using the split shape mode information and, in this case, the split shape mode information may indicate the number of one or more coding units generated by splitting a coding unit. Referring to FIG. 4, when the split shape mode information indicates to split the current coding unit 400 or 450 into two coding units, the image decoding apparatus 100 may determine two coding units 420a and 420b, or 470a and 470b included in the current coding unit 400 or 450, by splitting the current coding unit 400 or 450 based on the split shape mode information.

According to an embodiment of the present disclosure, when the image decoding apparatus 100 splits the non-square current coding unit 400 or 450 based on the split shape mode information, the image decoding apparatus 100 may consider the location of a long side of the non-square current coding unit 400 or 450 so as to split a current coding unit. For example, the image decoding apparatus 100 may determine a plurality of coding units by splitting the current coding unit 400 or 450 in a direction of splitting a long side of the current coding unit 400 or 450, in consideration of the shape of the current coding unit 400 or 450.

According to an embodiment of the present disclosure, when the split shape mode information indicates to split (ternary-split) a coding unit into an odd number of blocks, the image decoding apparatus 100 may determine an odd number of coding units included in the current coding unit 400 or 450. For example, when the split shape mode information indicates to split the current coding unit 400 or 450 into three coding units, the image decoding apparatus 100 may split the current coding unit 400 or 450 into three coding units 430a, 430b, and 430c, or 480a, 480b, and 480c.

According to an embodiment of the present disclosure, a height to width ratio of the current coding unit 400 or 450 may be 4:1 or 1:4. When the height to width ratio is 4:1, the block shape information may be a horizontal direction because the length of the width is longer than the length of the height. When the height to width ratio is 1:4, the block shape information may be a vertical direction because the length of the width is shorter than the length of the height. The image decoding apparatus 100 may determine to split a current coding unit into the odd number of blocks, based on the split shape mode information. Also, the image decoding apparatus 100 may determine a split direction of the current coding unit 400 or 450, based on the block shape information of the current coding unit 400 or 450. For example, when the current coding unit 400 is in the vertical direction, the image decoding apparatus 100 may determine the coding units 430a, 430b, and 430c by splitting the current coding unit 400 in the horizontal direction. Also, when the current coding unit 450 is in the horizontal direction, the image decoding apparatus 100 may determine the coding units 480a, 480b, and 480c by splitting the current coding unit 450 in the vertical direction.

According to an embodiment of the present disclosure, the image decoding apparatus 100 may determine the odd number of coding units included in the current coding unit 400 or 450, and not all the determined coding units may have the same size. For example, a preset coding unit 430b or 480b from among the determined odd number of coding units 430a, 430b, and 430c, or 480a, 480b, and 480c may have a size different from the size of the other coding units 430a and 430c, or 480a and 480c. That is, coding units that may be determined by splitting the current coding unit 400 or 450 may have multiple sizes and, in some cases, all of the odd number of coding units 430a, 430b, and 430c, or 480a, 480b, and 480c may have different sizes.

According to an embodiment of the present disclosure, when the split shape mode information indicates to split a coding unit into the odd number of blocks, the image decoding apparatus 100 may determine the odd number of coding units included in the current coding unit 400 or 450, and in addition, may put a preset restriction on at least one coding unit from among the odd number of coding units generated by splitting the current coding unit 400 or 450. Referring to FIG. 4, the image decoding apparatus 100 may set a decoding process regarding the coding unit 430b or 480b to be different from that of the other coding units 430a and 430c, or 480a or 480c, the coding unit 430b or 480b being located at the center among the three coding units 430a, 430b, and 430c or 480a, 480b, and 480c generated as the current coding unit 400 or 450 is split. For example, the image decoding apparatus 100 may restrict the coding unit 430b or 480b at the center location to be no longer split or to be split only a preset number of times, unlike the other coding units 430a and 430c, or 480a and 480c.

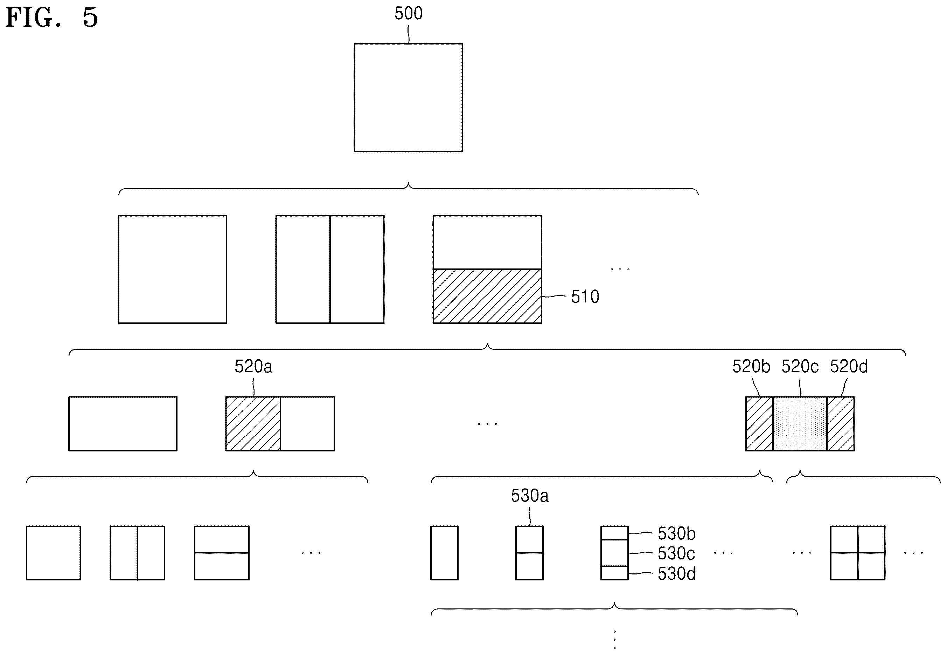

FIG. 5 illustrates a process, performed by an image decoding apparatus, of splitting a coding unit based on at least one of block shape information and split shape mode information, according to an embodiment of the present disclosure.

According to an embodiment of the present disclosure, the image decoding apparatus 100 may determine to split or not to split a square first coding unit 500 into coding units, based on at least one of the block shape information and the split shape mode information. According to an embodiment of the present disclosure, when the split shape mode information indicates to split the first coding unit 500 in a horizontal direction, the image decoding apparatus 100 may determine a second coding unit 510 by splitting the first coding unit 500 in a horizontal direction. A first coding unit, a second coding unit, and a third coding unit used according to an embodiment of the present disclosure are terms used to understand a relation before and after a coding unit is split. For example, a second coding unit may be determined by splitting a first coding unit, and a third coding unit may be determined by splitting the second coding unit. Hereinafter, it will be understood that the structure of the first coding unit, the second coding unit, and the third coding unit follows the above descriptions.

According to an embodiment of the present disclosure, the image decoding apparatus 100 may determine to split or not to split the determined second coding unit 510 into coding units, based on the split shape mode information. Referring to FIG. 5, the image decoding apparatus 100 may or may not split the non-square second coding unit 510, which is determined by splitting the first coding unit 500, into one or more third coding units 520a, or 520b, 520c, and 520d based on the split shape mode information. The image decoding apparatus 100 may obtain the split shape mode information, and may obtain a plurality of various-shaped second coding units (e.g., the second coding unit 510) by splitting the first coding unit 500, based on the obtained split shape mode information, and the second coding unit 510 may be split by using a splitting method of the first coding unit 500 based on the split shape mode information. According to an embodiment of the present disclosure, when the first coding unit 500 is split into the second coding units 510 based on the split shape mode information of the first coding unit 500, the second coding unit 510 may also be split into the third coding units (e.g., 520a, or 520b, 520c, and 520d) based on the split shape mode information of the second coding unit 510. That is, a coding unit may be recursively split based on the split shape mode information of each coding unit. Therefore, a square coding unit may be determined by splitting a non-square coding unit, and a non-square coding unit may be determined by recursively splitting the square coding unit.

Referring to FIG. 5, a preset coding unit from among the odd number of third coding units 520b, 520c, and 520d determined by splitting the non-square second coding unit 510 (e.g., a coding unit at a center location or a square coding unit) may be recursively split. According to an embodiment of the present disclosure, the square third coding unit 520b from among the odd number of third coding units 520b, 520c, and 520d may be split in a horizontal direction into a plurality of fourth coding units. A non-square fourth coding unit 530b or 530d from among a plurality of fourth coding units 530a, 530b, 530c, and 530d may be split into a plurality of coding units again. For example, the non-square fourth coding unit 530b or 530d may be split into the odd number of coding units again. A method that may be used to recursively split a coding unit will be described below in relation to various embodiments.

According to an embodiment of the present disclosure, the image decoding apparatus 100 may split each of the third coding units 520a, or 520b, 520c, and 520d into coding units, based on the split shape mode information. Also, the image decoding apparatus 100 may determine not to split the second coding unit 510 based on the split shape mode information. According to an embodiment of the present disclosure, the image decoding apparatus 100 may split the non-square second coding unit 510 into the odd number of third coding units 520b, 520c, and 520d. The image decoding apparatus 100 may put a preset restriction on a preset third coding unit from among the odd number of third coding units 520b, 520c, and 520d. For example, the image decoding apparatus 100 may restrict the third coding unit 520c at a center location from among the odd number of third coding units 520b, 520c, and 520d to be no longer split or to be split a settable number of times.

Referring to FIG. 5, the image decoding apparatus 100 may restrict the third coding unit 520c, which is at the center location from among the odd number of third coding units 520b, 520c, and 520d included in the non-square second coding unit 510, to be no longer split, to be split by using a preset splitting method (e.g., split into only four coding units or split by using a splitting method of the second coding unit 510), or to be split only a preset number of times (e.g., split only n times (where n>0)). However, the restrictions on the third coding unit 520c at the center location are not limited to the above-described examples, and may include various restrictions for decoding the third coding unit 520c at the center location differently from the other third coding units 520b and 520d.

According to an embodiment of the present disclosure, the image decoding apparatus 100 may obtain the split shape mode information, which is used to split a current coding unit, from a preset location in the current coding unit.

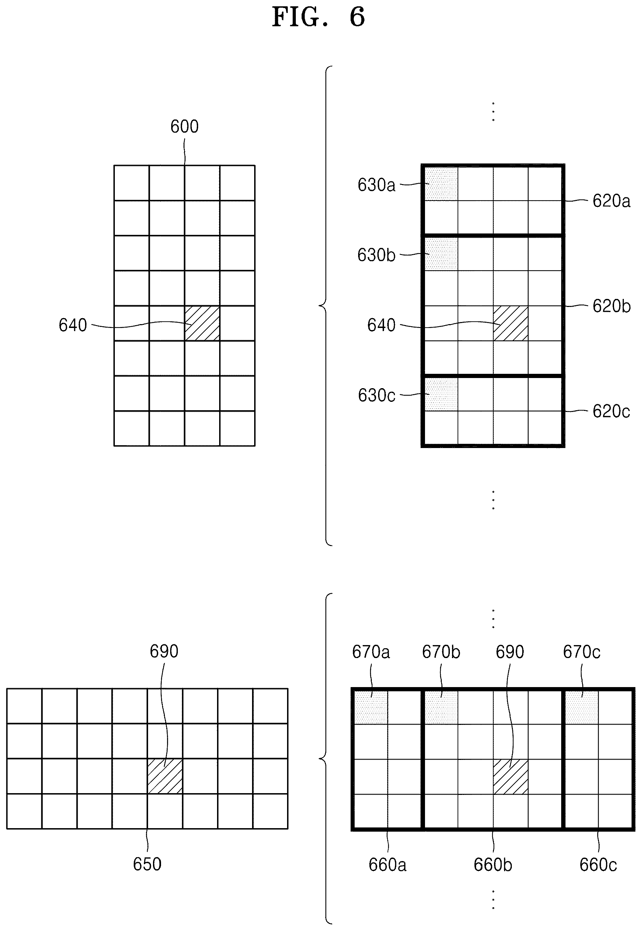

FIG. 6 illustrates a method, performed by an image decoding apparatus, of determining a preset coding unit from among an odd number of coding units, according to an embodiment of the present disclosure.

Referring to FIG. 6, split shape mode information of a current coding unit 600 or 650 may be obtained from a sample of a preset location (e.g., a sample 640 or 690 of a center location) from among a plurality of samples included in the current coding unit 600 or 650. However, the preset location in the current coding unit 600, from which at least one piece of the split shape mode information may be obtained, is not limited to the center location in FIG. 6, and may include various locations included in the current coding unit 600 (e.g., top, bottom, left, right, upper left, lower left, upper right, and lower right locations). The image decoding apparatus 100 may obtain the split shape mode information from the preset location and may determine to split or not to split the current coding unit into various-shaped and various-sized coding units.

According to an embodiment of the present disclosure, when the current coding unit is split into a preset number of coding units, the image decoding apparatus 100 may select one of the coding units. Various methods may be used to select one of a plurality of coding units, and descriptions of the methods will be described below in relation to various embodiments.

According to an embodiment of the present disclosure, the image decoding apparatus 100 may split the current coding unit into a plurality of coding units, and may determine a coding unit at a preset location.

According to an embodiment of the present disclosure, image decoding apparatus 100 may use information indicating locations of the odd number of coding units so as to determine a coding unit at a center location from among the odd number of coding units. Referring to FIG. 6, the image decoding apparatus 100 may determine the odd number of coding units 620a, 620b, and 620c or the odd number of coding units 660a, 660b, and 660c by splitting the current coding unit 600 or the current coding unit 650. The image decoding apparatus 100 may determine the middle coding unit 620b or the middle coding unit 660b by using information about the locations of the odd number of coding units 620a, 620b, and 620c or the odd number of coding units 660a, 660b, and 660c. For example, the image decoding apparatus 100 may determine the coding unit 620b of the center location by determining the locations of the coding units 620a, 620b, and 620c based on information indicating locations of preset samples included in the coding units 620a, 620b, and 620c. In detail, the image decoding apparatus 100 may determine the coding unit 620b at the center location by determining the locations of the coding units 620a, 620b, and 620c based on information indicating locations of upper left samples 630a, 630b, and 630c of the coding units 620a, 620b, and 620c.

According to an embodiment of the present disclosure, the information indicating the locations of the upper left samples 630a, 630b, and 630c, which are included in the coding units 620a, 620b, and 620c, respectively, may include information about locations or coordinates of the coding units 620a, 620b, and 620c in a picture. According to an embodiment of the present disclosure, the information indicating the locations of the upper left samples 630a, 630b, and 630c, which are included in the coding units 620a, 620b, and 620c, respectively, may include information indicating widths or heights of the coding units 620a, 620b, and 620c included in the current coding unit 600, and the widths or heights may correspond to information indicating differences between the coordinates of the coding units 620a, 620b, and 620c in the picture. That is, the image decoding apparatus 100 may determine the coding unit 620b at the center location by directly using the information about the locations or coordinates of the coding units 620a, 620b, and 620c in the picture, or by using the information about the widths or heights of the coding units, which correspond to the difference values between the coordinates.

According to an embodiment of the present disclosure, information indicating the location of the upper left sample 630a of the upper coding unit 620a may include coordinates $(x_a, y_a)$, information indicating the location of the upper left sample 630b of the middle coding unit 620b may include coordinates $(x_b, y_b)$, and information indicating the location of the upper left sample 630c of the lower coding unit 620c may include coordinates $(x_c, y_c)$. The image decoding apparatus 100 may determine the middle coding unit 620b by using the coordinates of the upper left samples 630a, 630b, and 630c which are included in the coding units 620a, 620b, and 620c, respectively. For example, when the coordinates of the upper left samples 630a, 630b, and 630c are sorted in an ascending or descending order, the coding unit 620b including the coordinates $(x_b, y_b)$ of the sample 630b at a center location may be determined as a coding unit at a center location from among the coding units 620a, 620b, and 620c determined by splitting the current coding unit 600. However, the coordinates indicating the locations of the upper left samples 630a, 630b, and 630c may include coordinates indicating absolute locations in the picture, or may use coordinates (dxb, dyb) indicating a relative location of the upper left sample 630b of the middle coding unit 620b and coordinates (dxc, dyc) indicating a relative location of the upper left sample 630c of the lower coding unit 620c with reference to the location of the upper left sample 630a of the upper coding unit 620a. A method of determining a coding unit at a preset location by using coordinates of a sample included in the coding unit, as information indicating a location of the sample, is not limited to the above-described method, and may include various arithmetic methods of using the coordinates of the sample.

According to an embodiment of the present disclosure, the image decoding apparatus 100 may split the current coding unit 600 into a plurality of coding units 620a, 620b, and 620c, and may select one of the coding units 620a, 620b, and 620c based on a preset criterion. For example, the image decoding apparatus 100 may select the coding unit 620b that has a size different from that of the others, from among the coding units 620a, 620b, and 620c.

According to an embodiment of the present disclosure, the image decoding apparatus 100 may determine the width or height of each of the coding units 620a, 620b, and 620c by using the coordinates (xa, ya) that is the information indicating the location of the upper left sample 630a of the upper coding unit 620a, the coordinates (xb, yb) that is the information indicating the location of the upper left sample 630b of the middle coding unit 620b, and the coordinates (xc, yc) that is the information indicating the location of the upper left sample 630c of the lower coding unit 620c. The image decoding apparatus 100 may determine the respective sizes of the coding units 620a, 620b, and 620c by using the coordinates (xa, ya), (xb, yb), and (xc, yc) indicating the locations of the coding units 620a, 620b, and 620c. According to an embodiment of the present disclosure, the image decoding apparatus 100 may determine the width of the upper coding unit 620a to be the width of the current coding unit 600. The image decoding apparatus 100 may determine the height of the upper coding unit 620a to be yb-ya. According to an embodiment of the present disclosure, the image decoding apparatus 100 may determine the width of the middle coding unit 620b to be the width of the current coding unit 600. The image decoding apparatus 100 may determine the height of the middle coding unit 620b to be yc-yb. According to an embodiment of the present disclosure, the image decoding apparatus 100 may determine the width or height of the lower coding unit by using the width or height of the current coding unit or the widths or heights of the upper and middle coding units 620a and 620b. The image decoding apparatus 100 may determine a coding unit that has a size different from that of the others, based on the determined widths and heights of the coding units 620a, 620b, and 620c. Referring to FIG. 6, the image decoding apparatus 100 may determine the middle coding unit 620b that has a size different from the size of the upper and lower coding units 620a and 620c, as the coding unit of the preset location. However, the above-described method, performed by the image decoding apparatus 100, of determining a coding unit having a size different from the size of the other coding units merely corresponds to an example of determining a coding unit at a preset location by using the sizes of coding units that are determined based on coordinates of samples, and thus, various methods of determining a coding unit at a preset location by comparing the sizes of coding units that are determined based on coordinates of preset samples may be used.

The image decoding apparatus 100 may determine the width or height of each of the coding units 660a, 660b, and 660c by using the coordinates (xd, yd) that is information indicating the location of a upper left sample 670a of the left coding unit 660a, the coordinates (xe, ye) that is information indicating the location of a upper left sample 670b of the middle coding unit 660b, and the coordinates (xf, yf) that is information indicating a location of the upper left sample 670c of the right coding unit 660c. The image decoding apparatus 100 may determine the respective sizes of the coding units 660a, 660b, and 660c by using the coordinates (xd, yd), (xe, ye), and (xf, yf) indicating the locations of the coding units 660a, 660b, and 660c.

According to an embodiment of the present disclosure, the image decoding apparatus 100 may determine the width of the left coding unit 660a to be xe-xd. The image decoding apparatus 100 may determine the height of the left coding unit 660a to be the height of the current coding unit 650. According to an embodiment of the present disclosure, the image decoding apparatus 100 may determine the width of the middle coding unit 660b to be xf-xe. The image decoding apparatus 100 may determine the height of the middle coding unit 660b to be the height of the current coding unit 600. According to an embodiment of the present disclosure, the image decoding apparatus 100 may determine the width or height of the right coding unit 660c by using the width or height of the current coding unit 650 or the widths or heights of the left and middle coding units 660a and 660b. The image decoding apparatus 100 may determine a coding unit that has a size different from that of the others, based on the determined widths and heights of the coding units 660a, 660b, and 660c. Referring to FIG. 6, the image decoding apparatus 100 may determine the middle coding unit 660b that has a size different from the sizes of the left and right coding units 660a and 660c, as the coding unit of the preset location. However, the above-described method, performed by the image decoding apparatus 100, of determining a coding unit having a size different from the size of the other coding units merely corresponds to an example of determining a coding unit at a preset location by using the sizes of coding units that are determined based on coordinates of samples, and thus, various methods of determining a coding unit at a preset location by comparing the sizes of coding units that are determined based on coordinates of preset samples may be used.

However, locations of samples considered to determine locations of coding units are not limited to the above-described upper left locations, and information about arbitrary locations of samples included in the coding units may be used.

According to an embodiment of the present disclosure, the image decoding apparatus 100 may select a coding unit at a preset location from among an odd number of coding units determined by splitting the current coding unit, by considering the shape of the current coding unit. For example, when the current coding unit has a non-square shape, a width of which is longer than a height, the image decoding apparatus 100 may determine the coding unit at the preset location in a horizontal direction. That is, the image decoding apparatus 100 may determine one of coding units at different locations in a horizontal direction and may put a restriction on the coding unit. When the current coding unit has a non-square shape, a height of which is longer than a width, the image decoding apparatus 100 may determine the coding unit at the preset location in a vertical direction. That is, the image decoding apparatus 100 may determine one of coding units at different locations in a vertical direction and may put a restriction on the coding unit.

According to an embodiment of the present disclosure, the image decoding apparatus 100 may use information indicating respective locations of an even number of coding units so as to determine the coding unit at the preset location from among the even number of coding units. The image decoding apparatus 100 may determine an even number of coding units by splitting (binary-splitting) the current coding unit, and may determine the coding unit at the preset location by using the information about the locations of the even number of coding units. An operation related thereto may correspond to the operation of determining a coding unit at a preset location (e.g., a center location) from among an odd number of coding units, which has been described in detail above in relation to FIG. 6, and thus, detailed descriptions thereof are not provided here.

According to an embodiment of the present disclosure, when a non-square current coding unit is split into a plurality of coding units, preset information about a coding unit at a preset location may be used in a splitting operation to determine the coding unit at the preset location from among the plurality of coding units. For example, the image decoding apparatus 100 may use at least one of block shape information or split shape mode information, which is stored in a sample included in a middle coding unit, in a splitting operation to determine a coding unit at a center location from among the plurality of coding units determined by splitting the current coding unit.

Referring to FIG. 6, the image decoding apparatus 100 may split the current coding unit 600 into the plurality of coding units 620a, 620b, and 620c based on the split shape mode information, and may determine the coding unit 620b at a center location from among the plurality of the coding units 620a, 620b, and 620c. Furthermore, the image decoding apparatus 100 may determine the coding unit 620b at the center location, in consideration of a location from which the split shape mode information is obtained. That is, the split shape mode information of the current coding unit 600 may be obtained from the sample 640 at a center location of the current coding unit 600 and, when the current coding unit 600 is split into the plurality of coding units 620a, 620b, and 620c based on the split shape mode information, the coding unit 620b including the sample 640 may be determined as the coding unit at the center location. However, information used to determine the coding unit at the center location is not limited to the split shape mode information, and various types of information may be used to determine the coding unit at the center location.

According to an embodiment of the present disclosure, preset information for identifying the coding unit at the preset location may be obtained from a preset sample included in a coding unit to be determined. Referring to FIG. 6, the image decoding apparatus 100 may use the split shape mode information that is obtained from a sample at a preset location in the current coding unit 600 (e.g., a sample at a center location of the current coding unit 600) to determine a coding unit at a preset location from among the plurality of the coding units 620a, 620b, and 620c determined by splitting the current coding unit 600 (e.g., a coding unit at a center location from among a plurality of split coding units). That is, the image decoding apparatus 100 may determine the sample at the preset location by considering a block shape of the current coding unit 600, may determine the coding unit 620b including a sample, from which preset information (e.g., the split shape mode information) may be obtained, from among the plurality of coding units 620a, 620b, and 620c determined by splitting the current coding unit 600, and may put a preset restriction on the coding unit 620b. Referring to FIG. 6, according to an embodiment of the present disclosure, the image decoding apparatus 100 may determine the sample 640 at the center location of the current coding unit 600 as the sample from which the preset information may be obtained, and may put a preset restriction on the coding unit 620b including the sample 640, in a decoding operation. However, the location of the sample from which the preset information may be obtained is not limited to the above-described location, and may include arbitrary locations of samples included in the coding unit 620b to be determined for a restriction.

According to an embodiment of the present disclosure, the location of the sample from which the preset information may be obtained may be determined based on the shape of the current coding unit 600. According to an embodiment of the present disclosure, the block shape information may indicate whether the current coding unit has a square or non-square shape, and the location of the sample from which the preset information may be obtained may be determined based on the shape. For example, the image decoding apparatus 100 may determine a sample located on a boundary for splitting at least one of a width or height of the current coding unit in half, as the sample from which the preset information may be obtained, by using at least one of information about the width of the current coding unit or information about the height of the current coding unit. As another example, when the block shape information of the current coding unit indicates a non-square shape, the image decoding apparatus 100 may determine one of samples adjacent to a boundary for splitting a long side of the current coding unit in half, as the sample from which the preset information may be obtained.

According to an embodiment of the present disclosure, when the current coding unit is split into a plurality of coding units, the image decoding apparatus 100 may use the split shape mode information so as to determine a coding unit at a preset location from among the plurality of coding units. According to an embodiment of the present disclosure, the image decoding apparatus 100 may obtain the split shape mode information from a sample at a preset location in a coding unit, and may split the plurality of coding units, which are generated by splitting the current coding unit, by using the split shape mode information, which is obtained from the sample of the preset location in each of the plurality of coding units. That is, a coding unit may be recursively split based on the split shape mode information that is obtained from the sample at the preset location in each coding unit. An operation of recursively splitting a coding unit has been described above in relation to FIG. 5, and thus, detailed descriptions thereof are not provided here.

According to an embodiment of the present disclosure, the image decoding apparatus 100 may determine one or more coding units by splitting the current coding unit, and may determine an order of decoding the one or more coding units, based on a preset block (e.g., the current coding unit).

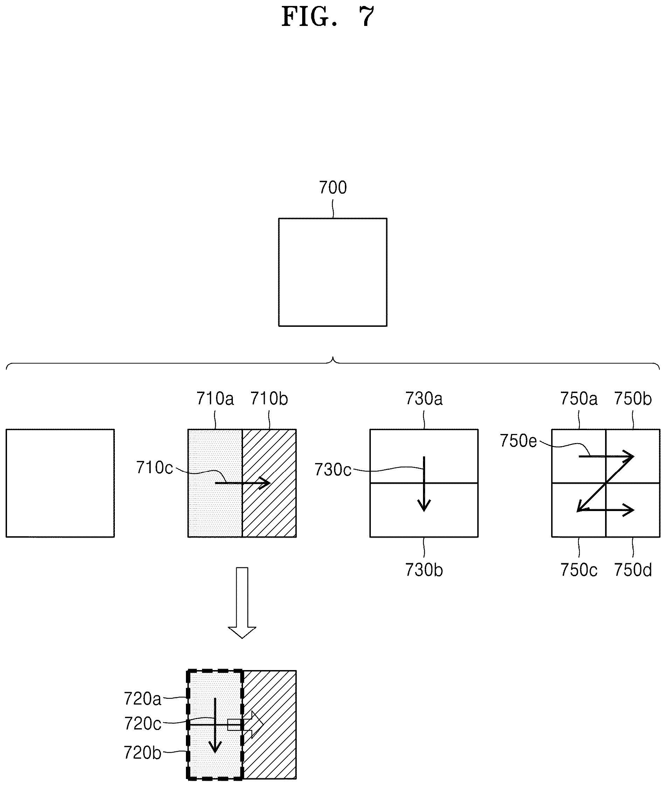

FIG. 7 illustrates an order of processing a plurality of coding units when an image decoding apparatus determines the plurality of coding units by splitting a current coding unit, according to an embodiment of the present disclosure.

According to an embodiment of the present disclosure, the image decoding apparatus 100 may determine second coding units 710a and 710b by splitting a first coding unit 700 in a vertical direction, may determine second coding units 730a and 730b by splitting the first coding unit 700 in a horizontal direction, or may determine second coding units 750a to 750d by splitting the first coding unit 700 in vertical and horizontal directions, based on split shape mode information.

Referring to FIG. 7, the image decoding apparatus 100 may determine to process the second coding units 710a and 710b that are determined by splitting the first coding unit 700 in a vertical direction, in a horizontal direction order 710c. The image decoding apparatus 100 may determine to process the second coding units 730a and 730b that are determined by splitting the first coding unit 700 in a horizontal direction, in a vertical direction order 730c. The image decoding apparatus 100 may determine to process the second coding units 750a to 750d that are determined by splitting the first coding unit 700 in vertical and horizontal directions, in a preset order for processing coding units in a row and then processing coding units in a next row (e.g., in a raster scan order or Z-scan order 750e).

According to an embodiment of the present disclosure, the image decoding apparatus 100 may recursively split coding units. Referring to FIG. 7, the image decoding apparatus 100 may determine the plurality of coding units 710a, 710b, 730a, 730b, 750a, 750b, 750c, and 750d by splitting the first coding unit 700, and may recursively split each of the determined plurality of coding units 710a, 710b, 730a, 730b, 750a, 750b, 750c, and 750d. A splitting method of the plurality of coding units 710a, 710b, 730a, 730b, 750a, 750b, 750c, and 750d may correspond to a splitting method of the first coding unit 700. Accordingly, each of the plurality of coding units 710a, 710b, 730a, 730b, 750a, 750b, 750c, and 750d may be independently split into a plurality of coding units. Referring to FIG. 7, the image decoding apparatus 100 may determine the second coding units 710a and 710b by splitting the first coding unit 700 in a vertical direction, and may determine to independently split or not to split each of the second coding units 710a and 710b.

According to an embodiment of the present disclosure, the image decoding apparatus 100 may determine third coding units 720a and 720b by splitting the left second coding unit 710a in a horizontal direction, and may not split the right second coding unit 710b.

According to an embodiment of the present disclosure, a processing order of coding units may be determined based on an operation of splitting a coding unit. In other words, a processing order of split coding units may be determined based on a processing order of coding units immediately before being split. The image decoding apparatus 100 may determine a processing order of the third coding units 720a and 720b determined by splitting the left second coding unit 710a, independently of the right second coding unit 710b. Because the third coding units 720a and 720b are determined by splitting the left second coding unit 710a in a horizontal direction, the third coding units 720a and 720b may be processed in a vertical direction order 720c. Because the left and right second coding units 710a and 710b are processed in the horizontal direction order 710c, the right second coding unit 710b may be processed after the third coding units 720a and 720b included in the left second coding unit 710a are processed in the vertical direction order 720c. An operation of determining a processing order of coding units based on a coding unit before being split is not limited to the above-described example, and it should be understood that various methods may be used to independently process coding units that are split and determined to various shapes, in a preset order.

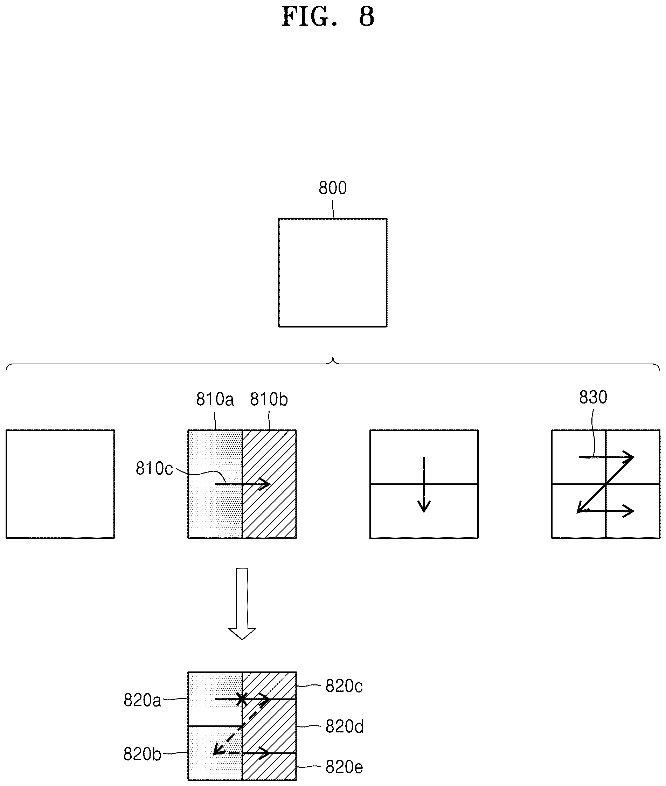

FIG. 8 illustrates a process, performed by an image decoding apparatus, of determining that a current coding unit is to be split into an odd number of coding units, when the coding units are not processable in a preset order, according to an embodiment of the present disclosure.

According to an embodiment of the present disclosure, the image decoding apparatus 100 may determine whether the current coding unit is split into an odd number of coding units, based on obtained split shape mode information.

Referring to FIG. 8, a square first coding unit 800 may be split into non-square second coding units 810a and 810b, and the second coding units 810a and 810b may be independently split into third coding units 820a and 820b, and 820c, 820d and 820e. According to an embodiment of the present disclosure, the image decoding apparatus 100 may determine the plurality of third coding units 820a and 820b by splitting the left second coding unit 810a in a horizontal direction, and may split the right second coding unit 810b into the odd number of third coding units 820c to 820e.

According to an embodiment of the present disclosure, the image decoding apparatus 100 may determine whether that is any coding unit being split into an odd number of coding units, by determining whether the third coding units 820a and 820b, and 820c to 820e are processable in a preset order. Referring to FIG. 8, the image decoding apparatus 100 may determine the third coding units 820a and 820b, and 820c, 820d and 820e by recursively splitting the first coding unit 800. The image decoding apparatus 100 may determine whether any of the first coding unit 800, the second coding units 810a and 810b, and the third coding units 820a and 820b, and 820c, 820d and 820e are split into an odd number of coding units, based on at least one of the block shape information or the split shape mode information. For example, the right second coding unit 810b among the second coding units 810a and 810b may be split into an odd number of third coding units 820c, 820d, and 820e. A processing order of a plurality of coding units included in the first coding unit 800 may be a preset order (e.g., a Z-scan order 830), and the image decoding apparatus 100 may determine whether the third coding units 820c, 820d, and 820e, which are determined by splitting the right second coding unit 810b into an odd number of coding units, satisfy a condition for processing in the preset order.

According to an embodiment of the present disclosure, the image decoding apparatus 100 may determine whether the third coding units 820a and 820b, and 820c, 820d and 820e included in the first coding unit 800 satisfy the condition for processing in the preset order, and the condition relates to whether at least one of a width or height of the second coding units 810a and 810b is split in half along a boundary of the third coding units 820a and 820b, and 820c, 820d and 820e. For example, the third coding units 820a and 820b that are determined when the height of the left second coding unit 810a of the non-square shape is split in half may satisfy the condition. It may be determined that the third coding units 820c to 820e do not satisfy the condition because the boundaries of the third coding units 820c to 820e that are determined when the right second coding unit 810b is split into three coding units are unable to split the width or height of the right second coding unit 810b in half. When the condition is not satisfied as described above, the image decoding apparatus 100 may determine disconnection of a scan order, and may determine that the right second coding unit 810b is split into an odd number of coding units, based on a result of the determination. According to an embodiment of the present disclosure, when a coding unit is split into an odd number of coding units, the image decoding apparatus 100 may put a preset restriction on a coding unit at a preset location from among the split coding units, and the restriction or the preset location is described above in relation to various embodiments, and thus, detailed descriptions thereof are not provided here.

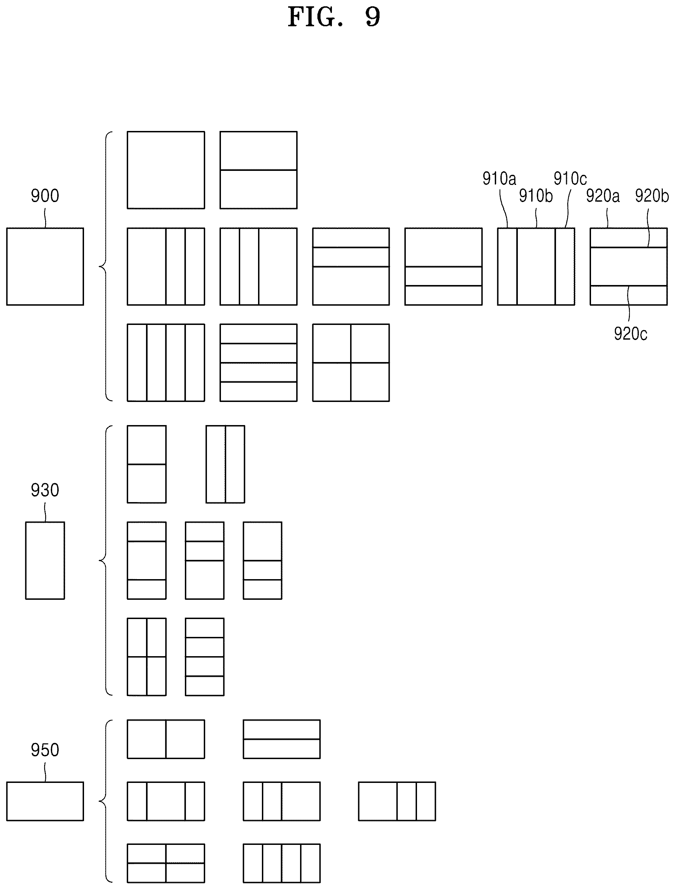

FIG. 9 illustrates a process, performed by an image decoding apparatus, of determining at least one coding unit by splitting a first coding unit, according to an embodiment of the present disclosure.

According to an embodiment of the present disclosure, the image decoding apparatus 100 may split the first coding unit 900, based on split shape mode information obtained via the receiver 110. The square first coding unit 900 may be split into four square coding units, or may be split into a plurality of non-square coding units. For example, referring to FIG. 9, when the split shape mode information indicates to split the first coding unit 900 into non-square coding units, the image decoding apparatus 100 may split the first coding unit 900 into a plurality of non-square coding units. In detail, when the split shape mode information indicates to determine an odd number of coding units by splitting the first coding unit 900 in a horizontal direction or a vertical direction, the image decoding apparatus 100 may split the square first coding unit 900 into an odd number of coding units that are second coding units 910a, 910b, and 910c determined by splitting the square first coding unit 900 in a vertical direction or second coding units 920a, 920b, and 920c determined by splitting the square first coding unit 900 in a horizontal direction.

According to an embodiment of the present disclosure, the image decoding apparatus 100 may determine whether the second coding units 910a, 910b, 910c, 920a, 920b, and 920c included in the first coding unit 900 satisfy a condition for processing in a preset order, and the condition relates to whether at least one of a width or height of the first coding unit 900 is split in half along a boundary of the second coding units 910a, 910b, 910c, 920a, 920b, and 920c. Referring to FIG. 9, because boundaries of the second coding units 910a, 910b, and 910c determined by splitting the square first coding unit 900 in a vertical direction do not split the width of the first coding unit 900 in half, it may be determined that the first coding unit 900 does not satisfy the condition for processing in the preset order. In addition, because boundaries of the second coding units 920a, 920b, and 920c determined by splitting the square first coding unit 900 in a horizontal direction do not split the height of the first coding unit 900 in half, it may be determined that the first coding unit 900 does not satisfy the condition for processing in the preset order. When the condition is not satisfied as described above, the image decoding apparatus 100 may determine disconnection of a scan order, and may determine that the first coding unit 900 is split into an odd number of coding units, based on a result of the determination. According to an embodiment of the present disclosure, when a coding unit is split into an odd number of coding units, the image decoding apparatus 100 may put a preset restriction on a coding unit at a preset location from among the split coding units, and the restriction or the preset location is described above in relation to various embodiments, and thus, detailed descriptions thereof are not provided here.

According to an embodiment of the present disclosure, the image decoding apparatus 100 may determine various-shaped coding units by splitting a first coding unit.

Referring to FIG. 9, the image decoding apparatus 100 may split the square first coding unit 900 or a non-square first coding unit 930 or 950 into various-shaped coding units.

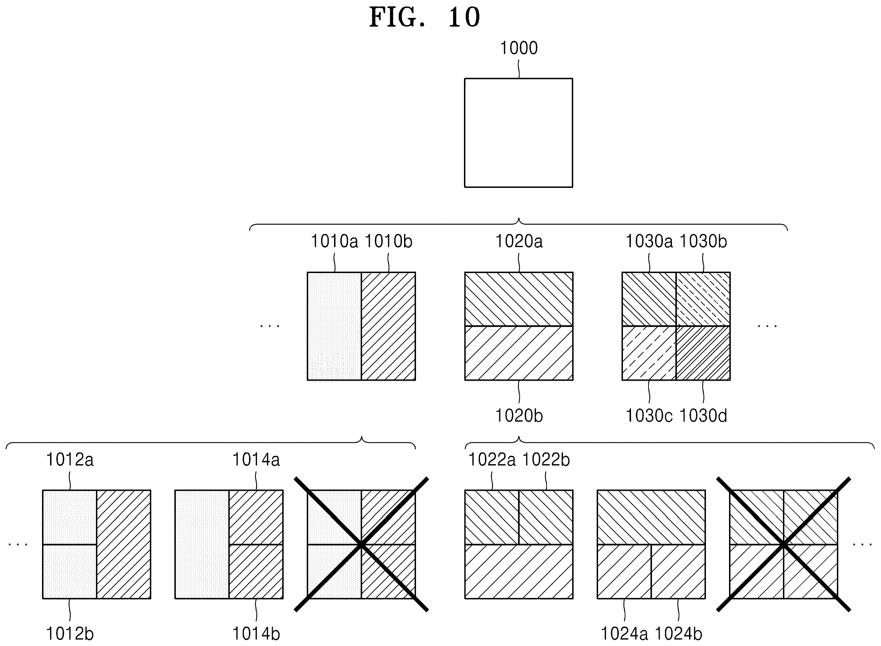

FIG. 10 illustrates that a shape into which a second coding unit is splittable is restricted when the second coding unit having a non-square shape, which is determined when an image decoding apparatus splits a first coding unit, satisfies a preset condition, according to an embodiment of the present disclosure.

According to an embodiment of the present disclosure, the image decoding apparatus 100 may determine to split the square first coding unit 1000 into non-square second coding units 1010a, 1010b, 1020a, and 1020b, based on split shape mode information obtained via the receiver 110. The second coding units 1010a, 1010b, 1020a, and 1020b may be independently split. Accordingly, the image decoding apparatus 100 may determine to split or not to split each of the second coding units 1010a, 1010b, 1020a, and 1020b into a plurality of coding units, based on the split shape mode information of each of the second coding units 1010a, 1010b, 1020a, and 1020b. According to an embodiment of the present disclosure, the image decoding apparatus 100 may determine third coding units 1012a and 1012b by splitting the non-square left second coding unit 1010a that is determined by splitting the first coding unit 1000 in a vertical direction, in a horizontal direction. However, when the left second coding unit 1010a is split in a horizontal direction, the image decoding apparatus 100 may restrict the right second coding unit 1010b not to be split in a horizontal direction in which the left second coding unit 1010a is split. When third coding units 1014a and 1014b are determined by splitting the right second coding unit 1010b in a same direction, the third coding units 1012a and 1012b or 1014a and 1014b may be determined in a manner that the left and right second coding units 1010a and 1010b are independently split in a horizontal direction. However, this case serves equally as a case in which the image decoding apparatus 100 splits the first coding unit 1000 into four square second coding units 1030a, 1030b, 1030c, and 1030d, based on the split shape mode information, and may be inefficient in terms of image decoding.

According to an embodiment of the present disclosure, the image decoding apparatus 100 may determine third coding units 1022a and 1022b or 1024a and 1024b by splitting the non-square second coding unit 1020a or 1020b which is determined by splitting the first coding unit 1000 in a horizontal direction, in a vertical direction. However, when a second coding unit (e.g., the upper second coding unit 1020a) is split in a vertical direction, for the above-described reason, the image decoding apparatus 100 may restrict the other second coding unit (e.g., the lower second coding unit 1020b) not to be split in a vertical direction in which the upper second coding unit 1020a is split.

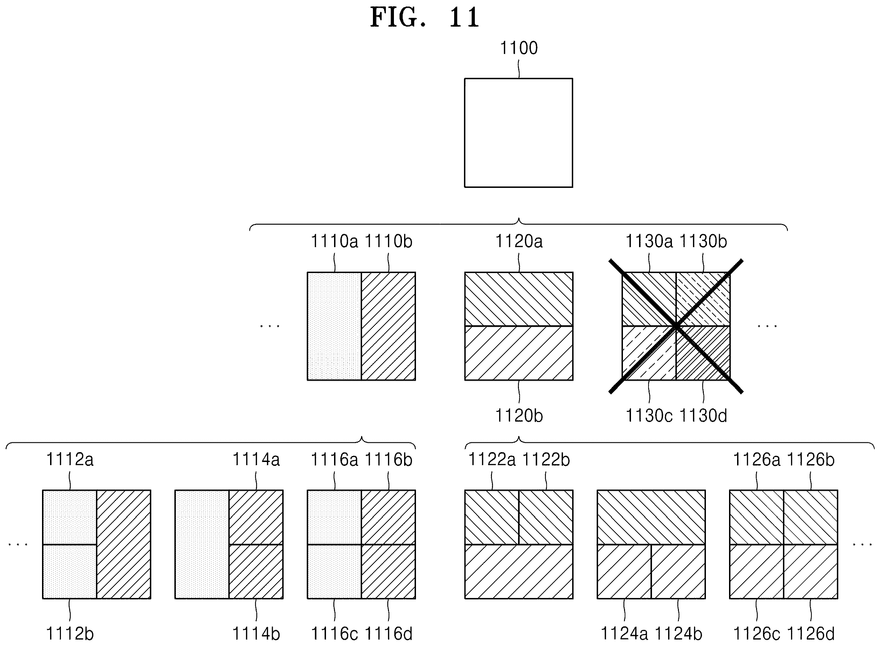

FIG. 11 illustrates a process, performed by an image decoding apparatus, of splitting a square coding unit when split shape mode information is unable to indicate that the square coding unit is split into four square coding units, according to an embodiment of the present disclosure.

According to an embodiment of the present disclosure, the image decoding apparatus 100 may determine second coding units 1110a, 1110b, 1120a, 1120b, etc. by splitting a first coding unit 1100, based on split shape mode information. The split shape mode information may include information about various methods of splitting a coding unit but, the information about various splitting methods may not include information for splitting a coding unit into four square coding units. According to such split shape mode information, the image decoding apparatus 100 may not split the square first coding unit 1100 into four square second coding units 1130a, 1130b, 1130c, and 1130d. Based on the split shape mode information, the image decoding apparatus 100 may determine the non-square second coding units 1110a, 1110b, 1120a, 1120b, etc.

According to an embodiment of the present disclosure, the image decoding apparatus 100 may independently split the non-square second coding units 1110a, 1110b, 1120a, 1120b, etc. Each of the second coding units 1110a, 1110b, 1120a, 1120b, etc. may be recursively split in a preset order, and this splitting method may correspond to a method of splitting the first coding unit 1100, based on the split shape mode information.

For example, the image decoding apparatus 100 may determine square third coding units 1112a and 1112b by splitting the left second coding unit 1110a in a horizontal direction, and may determine square third coding units 1114a and 1114b by splitting the right second coding unit 1110b in a horizontal direction. Furthermore, the image decoding apparatus 100 may determine square third coding units 1116a, 1116b, 1116c, and 1116d by splitting both of the left and right second coding units 1110a and 1110b in a horizontal direction. In this case, coding units having the same shape as the four square second coding units 1130a, 1130b, 1130c, and 1130d split from the first coding unit 1100 may be determined.

As another example, the image decoding apparatus 100 may determine square third coding units 1122a and 1122b by splitting the upper second coding unit 1120a in a vertical direction, and may determine square third coding units 1124a and 1124b by splitting the lower second coding unit 1120b in a vertical direction. Furthermore, the image decoding apparatus 100 may determine square third coding units 1126a, 1126b, 1126c, and 1126d by splitting both of the upper and lower second coding units 1120a and 1120b in a vertical direction. In this case, coding units having the same shape as the four square second coding units 1130a, 1130b, 1130c, and 1130d split from the first coding unit 1100 may be determined.

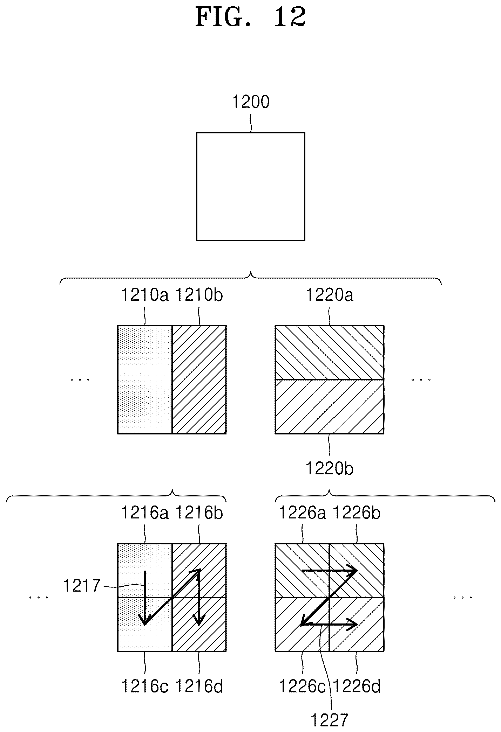

FIG. 12 illustrates that a processing order between a plurality of coding units may be changed depending on a process of splitting a coding unit, according to an embodiment of the present disclosure.

According to an embodiment of the present disclosure, the image decoding apparatus 100 may split a first coding unit 1200, based on split shape mode information. When a block shape indicates a square shape and the split shape mode information indicates to split the first coding unit 1200 in at least one of a horizontal direction and a vertical direction, the image decoding apparatus 100 may determine second coding units (for examples, second coding units 1210a, 1210b, 1220a, 1220b, etc.) by splitting the first coding unit 1200. Referring to FIG. 12, the non-square second coding units 1210a, 1210b, 1220a, and 1220b determined by splitting the first coding unit 1200 in only a horizontal direction or vertical direction may be independently split based on the split shape mode information of each coding unit. For example, the image decoding apparatus 100 may determine third coding units 1216a, 1216b, 1216c, and 1216d by splitting the second coding units 1210a and 1210b, which are generated by splitting the first coding unit 1200 in a vertical direction, in a horizontal direction, and may determine third coding units 1226a, 1226b, 1226c, and 1226d by splitting the second coding units 1220a and 1220b, which are generated by splitting the first coding unit 1200 in a horizontal direction, in a horizontal direction. An operation of splitting the second coding units 1210a, 1210b, 1220a, and 1220b is described above with reference to FIG. 11, and thus, detailed descriptions thereof are not provided here.

According to an embodiment of the present disclosure, the image decoding apparatus 100 may process coding units in a preset order. An operation of processing coding units in a preset order is described above with reference to FIG. 7, and thus, detailed descriptions thereof are not provided here. Referring to FIG. 12, the image decoding apparatus 100 may determine four square third coding units 1216a, 1216b, 1216c, and 1216d, and 1226a, 1226b, 1226c, and 1226d by splitting the square first coding unit 1200. According to an embodiment of the present disclosure, the image decoding apparatus 100 may determine processing orders of the third coding units 1216a, 1216b, 1216c, and 1216d, and 1226a, 1226b, 1226c, and 1226d, based on a splitting method of the first coding unit 1200.

According to an embodiment of the present disclosure, the image decoding apparatus 100 may determine the third coding units 1216a, 1216b, 1216c, and 1216d by splitting the second coding units 1210a and 1210b generated by splitting the first coding unit 1200 in a vertical direction, in a horizontal direction, and may process the third coding units 1216a, 1216b, 1216c, and 1216d in a processing order 1217 for initially processing the third coding units 1216a and 1216c, which are included in the left second coding unit 1210a, in a vertical direction and then processing the third coding unit 1216b and 1216d, which are included in the right second coding unit 1210b, in a vertical direction.

According to an embodiment of the present disclosure, the image decoding apparatus 100 may determine the third coding units 1226a, 1226b, 1226c, and 1226d by splitting the second coding units 1220a and 1220b generated by splitting the first coding unit 1200 in a horizontal direction, in a vertical direction, and may process the third coding units 1226a, 1226b, 1226c, and 1226d in a processing order 1227 for initially processing the third coding units 1226a and 1226b, which are included in the upper second coding unit 1220a, in a horizontal direction and then processing the third coding unit 1226c and 1226d, which are included in the lower second coding unit 1220b, in a horizontal direction.

Referring to FIG. 12, the square third coding units 1216a, 1216b, 1216c, and 1216d, and 1226a, 1226b, 1226c, and 1226d may be determined by splitting the second coding units 1210a and 1210b, and 1220a and 1220b, respectively. Although the second coding units 1210a and 1210b are determined by splitting the first coding unit 1200 in a vertical direction differently from the second coding units 1220a and 1220b which are determined by splitting the first coding unit 1200 in a horizontal direction, the third coding units 1216a, 1216b, 1216c, and 1216d, and 1226a, 1226b, 1226c, and 1226d split therefrom eventually show sameshaped coding units split from the first coding unit 1200. Accordingly, by recursively splitting a coding unit in different manners based on the split shape mode information, the image decoding apparatus 100 may process a plurality of coding units in different orders even when the coding units are eventually determined to be the same shape.

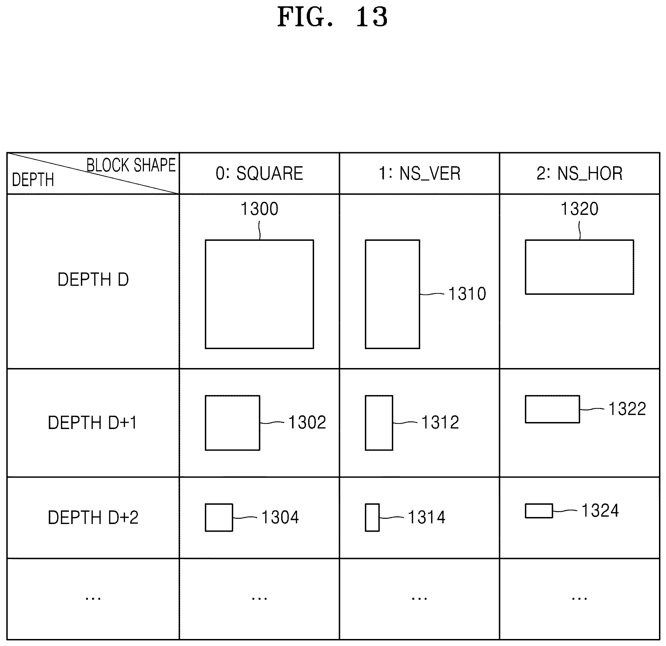

FIG. 13 illustrates a process of determining a depth of a coding unit as a shape and size of the coding unit change, when the coding unit is recursively split such that a plurality of coding units are determined, according to an embodiment of the present disclosure.

According to an embodiment of the present disclosure, the image decoding apparatus 100 may determine the depth of the coding unit, based on a preset criterion. For example, the preset criterion may be the length of a long side of the coding unit. When the length of a long side of a coding unit before being split is 2n times (n>0) the length of a long side of a split current coding unit, the image decoding apparatus 100 may determine that a depth of the current coding unit is increased from a depth of the coding unit before being split, by n. Hereinafter, a coding unit having an increased depth is expressed as a coding unit of a lower depth.

Referring to FIG. 13, according to an embodiment of the present disclosure, the image decoding apparatus 100 may determine a second coding unit 1302 and a third coding unit 1304 of lower depths by splitting a square first coding unit 1300 based on block shape information indicating a square shape (for example, the block shape information may be expressed as '0: SQUARE'). Assuming that the size of the square first coding unit 1300 is $2N \times 2N$, the second coding unit 1302 determined by splitting a width and height of the first coding unit 1300 in 1/2 may have a size of $N \times N$. Furthermore, the third coding unit 1304 determined by splitting a width and height of the second coding unit 1302 in 1/2 may have a size of $N/2 \times N/2$. In this case, a width and height of the third coding unit 1304 are 1/4 times those of the first coding unit 1300. When a depth of the first coding unit 1300 is D, a depth of the second coding unit 1302, the width and height of which are 1/2 times those of the first coding unit 1300, may be D+1, and a depth of the third coding unit 1304, the width and height of which are 1/4 times those of the first coding unit 1300, may be D+2.

According to an embodiment of the present disclosure, the image decoding apparatus 100 may determine a second coding unit 1312 or 1322 and a third coding unit 1314 or 1324 of lower depths by splitting a non-square first coding unit 1310 or 1320 based on block shape information indicating a non-square shape (e.g., the block shape information may be expressed as '1: NS_VER' indicating a non-square shape, a height of which is longer than a width, or as '2: NS_HOR' indicating a non-square shape, a width of which is longer than a height).

The image decoding apparatus 100 may determine a second coding unit 1302, 1312, or 1322 by splitting at least one of a width and a height of the first coding unit 1310 having a size of N×2N. That is, the image decoding apparatus 100 may determine the second coding unit 1302 having a size of N×N or the second coding unit 1322 having a size of N×N/2 by splitting the first coding unit 1310 in a horizontal direction, or may determine the second coding unit 1312 having a size of N/2×N by splitting the first coding unit 1310 in horizontal and vertical directions.

According to an embodiment of the present disclosure, the image decoding apparatus 100 may determine the second coding unit (e.g., the second coding unit 1302, 1312, 1322, etc.) by splitting at least one of a width and a height of the first coding unit 1320 having a size of 2N×N. That is, the image decoding apparatus 100 may determine the second coding unit 1302 having a size of N×N or the second coding unit 1312 having a size of N/2×N by splitting the first coding unit 1320 in a vertical direction, or may determine the second coding unit 1322 having a size of N×N/2 by splitting the first coding unit 1320 in horizontal and vertical directions.

According to an embodiment of the present disclosure, the image decoding apparatus 100 may determine a third coding unit 1304, 1314, or 1324 by splitting at least one of a width and a height of the second coding unit 1302 having a size of N×N. That is, the image decoding apparatus 100 may determine the third coding unit 1304 having a size of N/2×N/2, the third coding unit 1314 having a size of N/4×N/2, or the third coding unit 1324 having a size of N/2×N/4 by splitting the second coding unit 1302 in vertical and horizontal directions.

According to an embodiment of the present disclosure, the image decoding apparatus 100 may determine the third coding unit (e.g., the third coding unit 1304, 1314, 1324, etc.) by splitting at least one of a width and a height of the second coding unit 1312 having a size of N/2×N. That is, the image decoding apparatus 100 may determine the third coding unit 1304 having a size of N/2×N/2 or the third coding unit 1324 having a size of N/2×N/4 by splitting the second coding unit 1312 in a horizontal direction, or may determine the third coding unit 1314 having a size of N/4×N/2 by splitting the second coding unit 1312 in vertical and horizontal directions.

According to an embodiment of the present disclosure, the image decoding apparatus 100 may determine the third coding unit (e.g., the third coding unit 1304, 1314, 1324, etc.) by splitting at least one of a width and a height of the second coding unit 1322 having a size of N×N/2. That is, the image decoding apparatus 100 may determine the third coding unit 1304 having a size of N/2×N/2 or the third coding unit 1314 having a size of N/4×N/2 by splitting the second coding unit 1322 in a vertical direction, or may determine the third coding unit 1324 having a size of N/2×N/4 by splitting the second coding unit 1322 in vertical and horizontal directions.

According to an embodiment of the present disclosure, the image decoding apparatus 100 may split the square coding unit 1300, 1302, or 1304 in a horizontal or vertical direction. For example, the image decoding apparatus 100 may determine the first coding unit 1310 having a size of N×2N by splitting the first coding unit 1300 having a size of 2N×2N in a vertical direction, or may determine the first coding unit 1320 having a size of 2N×N by splitting the first coding unit 1300 in a horizontal direction. According to an embodiment of the present disclosure, when a depth is determined based on the length of the longest side of a coding unit, a depth of a coding unit determined by splitting the first coding unit 1300 having a size of 2N×2N in a horizontal or vertical direction may be the same as the depth of the first coding unit 1300.

According to an embodiment of the present disclosure, a width and height of the third coding unit 1314 or 1324 may be 1/4 times those of the first coding unit 1310 or 1320. When a depth of the first coding unit 1310 or 1320 is D, a depth of the second coding unit 1312 or 1322, the width and height of which are 1/2 times those of the first coding unit 1310 or 1320, may be D+1, and a depth of the third coding unit 1314 or 1324, the width and height of which are 1/4 times those of the first coding unit 1310 or 1320, may be D+2.

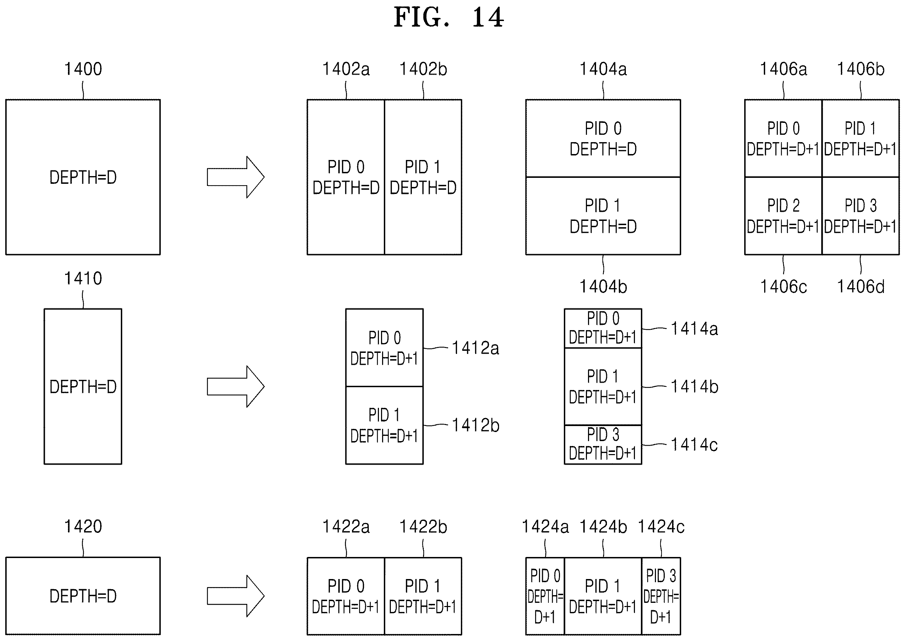

FIG. 14 illustrates depths that are determinable based on shapes and sizes of coding units, and part indexes (PIDs) that are for distinguishing the coding units, according to an embodiment of the present disclosure.

According to an embodiment of the present disclosure, the image decoding apparatus 100 may determine various-shape second coding units by splitting a square first coding unit 1400. Referring to FIG. 14, the image decoding apparatus 100 may determine second coding units 1402a and 1402b, 1404a and 1404b, and 1406a, 1406b, 1406c, and 1406d by splitting the first coding unit 1400 in at least one of a vertical direction and a horizontal direction based on split shape mode information. That is, the image decoding apparatus 100 may determine the second coding units 1402a and 1402b, 1404a and 1404b, and 1406a, 1406b, 1406c, and 1406d, based on the split shape mode information of the first coding unit 1400.

According to an embodiment of the present disclosure, a depth of the second coding units 1402a and 1402b, 1404a and 1404b, and 1406a, 1406b, 1406c, and 1406d, which are determined based on the split shape mode information of the square first coding unit 1400, may be determined based on the length of a long side thereof. For example, because the length of a side of the square first coding unit 1400 equals the length of a long side of the non-square second coding units 1402a and 1402b, and 1404a and 1404b, the first coding unit 1400 and the non-square second coding units 1402a and 1402b, and 1404a and 1404b may have the same depth, e.g., D. However, when the image decoding apparatus 100 splits the first coding unit 1400 into the four square second coding units 1406a, 1406b, 1406c, and 1406d based on the split shape mode information, because the length of a side of the square second coding units 1406a, 1406b, 1406c, and 1406d is 1/2 times the length of a side of the first coding unit 1400, a depth of the second coding units 1406a, 1406b, 1406c, and 1406d may be D+1 which is lower than the depth D of the first coding unit 1400 by 1.

According to an embodiment of the present disclosure, the image decoding apparatus 100 may determine a plurality of second coding units 1412a and 1412b, and 1414a, 1414b, and 1414c by splitting a first coding unit 1410, a height of which is longer than a width, in a horizontal direction based on the split shape mode information. According to an embodiment of the present disclosure, the image decoding apparatus 100 may determine a plurality of second coding units 1422a and 1422b, and 1424a, 1424b, and 1424c by splitting a first coding unit 1420, a width of which is longer than a height, in a vertical direction based on the split shape mode information.

According to an embodiment of the present disclosure, depths of the second coding units 1412a and 1412b, and 1414a, 1414b, and 1414c, or 1422a and 1422b, and 1424a, 1424b, and 1424c that are determined based on the split shape mode information of the non-square first coding unit 1410 or 1420 may be determined based on the length of a long side thereof. For example, because the length of a side of the square second coding units 1412a and 1412b is 1/2 times the length of a long side of the first coding unit 1410 having a non-square shape, a height of which is longer than a width, a depth of the square second coding units 1412a and 1412b is D+1 which is lower than the depth D of the non-square first coding unit 1410 by 1.

Furthermore, the image decoding apparatus 100 may split the non-square first coding unit 1410 into an odd number of second coding units 1414a, 1414b, and 1414c based on the split shape mode information. The odd number of second coding units 1414a, 1414b, and 1414c may include the non-square second coding units 1414a and 1414c and the square second coding unit 1414b. In this case, because the length of a long side of the non-square second coding units 1414a and 1414c and the length of a side of the square second coding unit 1414b are 1/2 times the length of a long side of the first coding unit 1410, a depth of the second coding units 1414a, 1414b, and 1414c may be D+1 which is lower than the depth D of the non-square first coding unit 1410 by 1. The image decoding apparatus 100 may determine depths of coding units split from the first coding unit 1420 having a non-square shape, a width of which is longer than a height, by using the above-described method of determining depths of coding units split from the first coding unit 1410.

According to an embodiment of the present disclosure, the image decoding apparatus 100 may determine PIDs for identifying split coding units, based on a size ratio between the coding units when an odd number of split coding units do not have equal sizes. Referring to FIG. 14, a coding unit 1414b of a center location among an odd number of split coding units 1414a, 1414b, and 1414c may have a width equal to that of the other coding units 1414a and 1414c and a height which is two times that of the other coding units 1414a and 1414c. That is, in this case, the coding unit 1414b at the center location may include two of the other coding unit 1414a or 1414c. Therefore, when a PID of the coding unit 1414b at the center location is 1 based on a scan order, a PID of the coding unit 1414c located next to the coding unit 1414b may be increased by 2 and thus, may be 3. That is, discontinuity in PID values may be present. According to an embodiment of the present disclosure, the image decoding apparatus 100 may determine whether an odd number of split coding units do not have equal sizes, based on whether discontinuity is present in PIDs for identifying the split coding units.

According to an embodiment of the present disclosure, the image decoding apparatus 100 may determine whether to use a specific splitting method, based on PID values for identifying a plurality of coding units determined by splitting a current coding unit. Referring to FIG. 14, the image decoding apparatus 100 may determine an even number of coding units 1412a and 1412b or an odd number of coding units 1414a, 1414b, and 1414c by splitting the first coding unit 1410 having a rectangular shape, a height of which is longer than a width. The image decoding apparatus 100 may use PIDs indicating respective coding units so as to identify the respective coding units. According to an embodiment of the present disclosure, the PID may be obtained from a sample of a preset location of each coding unit (e.g., an upper left sample).

According to an embodiment of the present disclosure, the image decoding apparatus 100 may determine a coding unit at a preset location from among the split coding units, by using the PIDs for distinguishing the coding units. According to an embodiment of the present disclosure, when the split shape mode information of the first coding unit 1410 having a rectangular shape, a height of which is longer than a width, indicates to split a coding unit into three coding units, the image decoding apparatus 100 may split the first coding unit 1410 into three coding units 1414a, 1414b, and 1414c. The image decoding apparatus 100 may assign a PID to each of the three coding units 1414a, 1414b, and 1414c. The image decoding apparatus 100 may compare PIDs of an odd number of split coding units so as to determine a coding unit at a center location from among the coding units. The image decoding apparatus 100 may determine the coding unit 1414b having a PID corresponding to a middle value among the PIDs of the coding units, as the coding unit at the preset location from among the coding units determined by splitting the first coding unit 1410. According to an embodiment of the present disclosure, the image decoding apparatus 100 may determine PIDs for distinguishing split coding units, based on a size ratio between the coding units when the split coding units do not have equal sizes. Referring to FIG. 14, the coding unit 1414b generated by splitting the first coding unit 1410 may have a width equal to that of the other coding units 1414a and 1414c and a height which is two times that of the other coding units 1414a and 1414c. In this case, when the PID of the coding unit 1414b at the center location is 1, the PID of the coding unit 1414c located next to the coding unit 1414b may be increased by 2 and thus, may be 3. When the PID is not uniformly increased as described above, the image decoding apparatus 100 may determine that a coding unit is split into a plurality of coding units including a coding unit having a size different from that of the other coding units. According to an embodiment of the present disclosure, when the split shape mode information indicates to split a coding unit into an odd number of coding units, the image decoding apparatus 100 may split a current coding unit in such a manner that a coding unit of a preset location among an odd number of coding units (e.g., a coding unit of a center location) has a size different from that of the other coding units. In this case, the image decoding apparatus 100 may determine the coding unit of the center location, which has a different size, by using PIDs of the coding units. However, the PIDs and the size or location of the coding unit of the preset location are specified to describe an embodiment of the present discourse, and thus, are not limited to the above-described examples, and various PIDs and various locations and sizes of coding units may be used.

According to an embodiment of the present disclosure, the image decoding apparatus 100 may use a preset data unit where a coding unit starts to be recursively split.

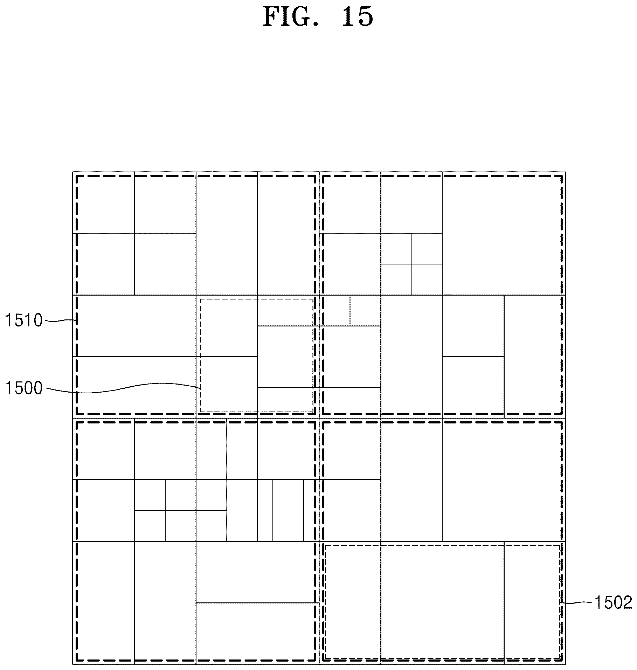

FIG. 15 illustrates that a plurality of coding units are determined based on a plurality of preset data units included in a picture, according to an embodiment of the present disclosure.

According to an embodiment of the present disclosure, a preset data unit may be defined as a data unit where a coding unit starts to be recursively split by using split shape mode information. That is, the preset data unit may correspond to a coding unit of an uppermost depth, which is used to determine a plurality of coding units split from a current picture. In the following descriptions, for convenience of descriptions, the preset data unit is referred to as a reference data unit.

According to an embodiment of the present disclosure, the reference data unit may have a preset size and a preset size shape. According to an embodiment of the present disclosure, the reference data unit may include $M \times N$ samples. Herein, M and N may be equal to each other, and may be integers expressed as powers of 2. That is, the reference data unit may have a square or non-square shape, and may be split into an integer number of coding units.

According to an embodiment of the present disclosure, the image decoding apparatus 100 may split the current picture into a plurality of reference data units. According to an embodiment of the present disclosure, the image decoding apparatus 100 may split the plurality of reference data units, which are split from the current picture, by using the split shape mode information of each reference data unit. The operation of splitting the reference data unit may correspond to a splitting operation using a quadtree structure.

According to an embodiment of the present disclosure, the image decoding apparatus 100 may previously determine the smallest size allowed for the reference data units included in the current picture. Accordingly, the image decoding apparatus 100 may determine various reference data units having sizes equal to or greater than the smallest size, and may determine one or more coding units by using the split shape mode information with reference to the determined reference data unit.

Referring to FIG. 15, the image decoding apparatus 100 may use a square reference coding unit 1500 or a non-square reference coding unit 1502. According to an embodiment of the present disclosure, the shape and size of reference coding units may be determined based on various data units capable of including one or more reference coding units (e.g., sequences, pictures, slices, slice segments, tiles, tile groups, largest coding units, or the like).

According to an embodiment of the present disclosure, the receiver 110 of the image decoding apparatus 100 may obtain, from a bitstream, at least one of reference coding unit shape information and reference coding unit size information with respect to each of the various data units. An operation of splitting the square reference coding unit 1500 into one or more coding units is described above with reference to the operation of splitting the current coding unit 300 of FIG. 3, and an operation of splitting the non-square reference coding unit 1502 into one or more coding units is described above with reference to the operation of splitting the current coding unit 400 or 450 of FIG. 4. Thus, detailed descriptions thereof are not provided here.

According to an embodiment of the present disclosure, the image decoding apparatus 100 may use a PID for identifying the size and shape of reference coding units, to determine the size and shape of reference coding units according to some data units previously determined based on a preset condition. That is, the receiver 110 may obtain, from the bitstream, only the PID for identifying the size and shape of reference coding units with respect to each slice, slice segment, tile, tile group, or largest coding unit which is a data unit satisfying a preset condition (e.g., a data unit having a size equal to or smaller than a slice) among the various data units (e.g., sequences, pictures, slices, slice segments, tiles, tile groups, largest coding units, or the like). The image decoding apparatus 100 may determine the size and shape of reference data units with respect to each data unit, which satisfies the preset condition, by using the PID. When the reference coding unit shape information and the reference coding unit size information are obtained and used from the bitstream according to each data unit having a relatively small size, efficiency of using the bitstream may not be high, and therefore, only the PID may be obtained and used instead of directly obtaining the reference coding unit shape information and the reference coding unit size information. In this case, at least one of the size and shape of reference coding units corresponding to the PID for identifying the size and shape of reference coding units may be previously determined. That is, the image decoding apparatus 100 may determine at least one of the size and the shape of reference coding units included in a data unit serving as a unit for obtaining the PID, by selecting the previously determined at least one of the size and the shape of reference coding units based on the PID.

According to an embodiment of the present disclosure, the image decoding apparatus 100 may use one or more reference coding units included in a largest coding unit. That is, a largest coding unit split from a picture may include one or more reference coding units, and coding units may be determined by recursively splitting each reference coding unit. According to an embodiment of the present disclosure, at least one of a width and a height of the largest coding unit may be integer times at least one of the width and the height of the reference coding units. According to an embodiment of the present disclosure, the size of reference coding units may be obtained by splitting the largest coding unit n times based on a quadtree structure. That is, the image decoding apparatus 100 may determine the reference coding units by splitting the largest coding unit n times based on a quadtree structure, and may split the reference coding unit based on at least one of the block shape information and the split shape mode information according to various embodiments.

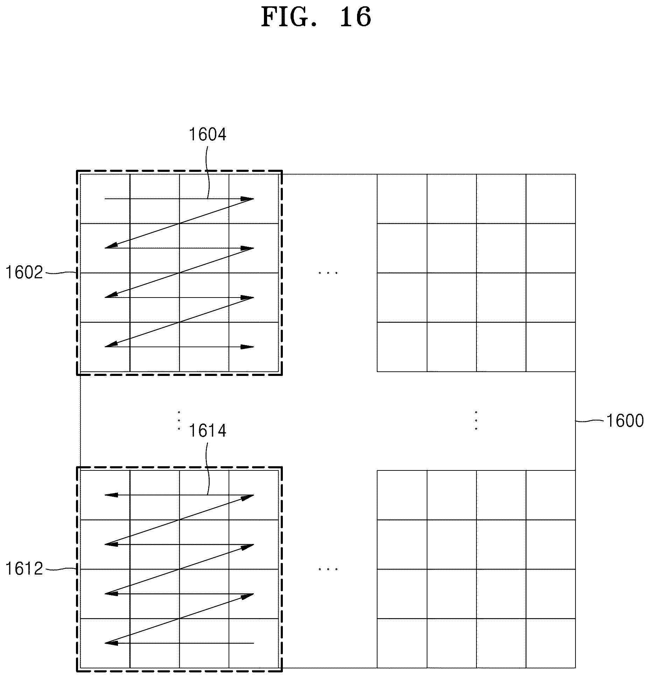

FIG. 16 illustrates a processing block serving as a unit for determining a determination order of reference coding units included in a picture, according to an embodiment of the present disclosure.

According to an embodiment of the present disclosure, the image decoding apparatus 100 may determine one or more processing blocks split from a picture. The processing block is a data unit including one or more reference coding units split from a picture, and the one or more reference coding units included in the processing block may be determined according to a specific order. That is, a determination order of one or more reference coding units determined in each processing block may correspond to one of various types of orders for determining reference coding units, and may vary depending on the processing block. The determination order of reference coding units, which is determined with respect to each processing block, may be one of various orders, e.g., raster scan order, Z-scan, N-scan, up-right diagonal scan, horizontal scan, and vertical scan, but is not limited to the above-mentioned scan orders.

According to an embodiment of the present disclosure, the image decoding apparatus 100 may obtain processing block size information and may determine the size of one or more processing blocks included in the picture. The image decoding apparatus 100 may obtain the processing block size information from a bitstream and may determine the size of one or more processing blocks included in the picture. The size of processing blocks may be a preset size of data units, which is indicated by the processing block size information.

According to an embodiment of the present disclosure, the receiver 110 of the image decoding apparatus 100 may obtain the processing block size information from the bitstream according to each specific data unit. For example, the processing block size information may be obtained from the bitstream in a data unit such as an image, sequence, picture, slice, slice segment, tile, or tile group. That is, the receiver 110 may obtain the processing block size information from the bitstream according to each of the various data units, and the image decoding apparatus 100 may determine the size of one or more processing blocks, which are split from the picture, by using the obtained processing block size information. The size of the processing blocks may be integer times that of the reference coding units.

According to an embodiment of the present disclosure, the image decoding apparatus 100 may determine the size of processing blocks 1602 and 1612 included in the picture 1600. For example, the image decoding apparatus 100 may determine the size of processing blocks based on the processing block size information obtained from the bitstream. Referring to FIG. 16, according to an embodiment of the present disclosure, the image decoding apparatus 100 may determine a width of the processing blocks 1602 and 1612 to be four times the width of the reference coding units, and may determine a height of the processing blocks 1602 and 1612 to be four times the height of the reference coding units. The image decoding apparatus 100 may determine a determination order of one or more reference coding units in one or more processing blocks.

According to an embodiment of the present disclosure, the image decoding apparatus 100 may determine the processing blocks 1602 and 1612, which are included in the picture 1600, based on the size of processing blocks, and may determine a determination order of one or more reference coding units in the processing blocks 1602 and 1612. According to an embodiment of the present disclosure, determination of reference coding units may include determination of the size of the reference coding units.

According to an embodiment of the present disclosure, the image decoding apparatus 100 may obtain, from the bitstream, determination order information of one or more reference coding units included in one or more processing blocks, and may determine a determination order with respect to one or more reference coding units based on the obtained determination order information. The determination order information may be defined as an order or direction for determining the reference coding units in the processing block. That is, the determination order of reference coding units may be independently determined with respect to each processing block.

According to an embodiment of the present disclosure, the image decoding apparatus 100 may obtain, from the bitstream, the determination order information of reference coding units according to each specific data unit. For example, the receiver 110 may obtain the determination order information of reference coding units from the bitstream according to each data unit such as an image, sequence, picture, slice, slice segment, tile, tile group, or processing block. Because the determination order information of reference coding units indicates an order for determining reference coding units in a processing block, the determination order information may be obtained with respect to each specific data unit including an integer number of processing blocks.

According to an embodiment of the present disclosure, the image decoding apparatus 100 may determine one or more reference coding units based on the determined determination order.

According to an embodiment of the present disclosure, the receiver 110 may obtain the determination order information of reference coding units from the bitstream as information related to the processing blocks 1602 and 1612, and the image decoding apparatus 100 may determine a determination order of one or more reference coding units included in the processing blocks 1602 and 1612 and determine one or more reference coding units, which are included in the picture 1600, based on the determination order. Referring to FIG. 16, the image decoding apparatus 100 may determine determination orders 1604 and 1614 of one or more reference coding units in the processing blocks 1602 and 1612, respectively. For example, when the determination order information of reference coding units is obtained with respect to each processing block, different types of the determination order information of reference coding units may be obtained for the processing blocks 1602 and 1612. When the determination order 1604 of reference coding units in the processing block 1602 is a raster scan order, reference coding units included in the processing block 1602 may be determined according to a raster scan order. On the contrary, when the determination order 1614 of reference coding units in the other processing block 1612 is a backward raster scan order, reference coding units included in the processing block 1612 may be determined according to the backward raster scan order.

According to an embodiment of the present disclosure, the image decoding apparatus 100 may decode the determined one or more reference coding units. The image decoding apparatus 100 may decode an image, based on the reference coding units determined in the embodiment described above. A method of decoding the reference coding units may include various image decoding methods.

According to an embodiment of the present disclosure, the image decoding apparatus 100 may obtain block shape information indicating the shape of a current coding unit or split shape mode information indicating a splitting method of the current coding unit, from the bitstream, and may use the obtained information. The split shape mode information may be included in the bitstream related to various data units. For example, the image decoding apparatus 100 may use the split shape mode information included in a sequence parameter set, a picture parameter set, a video parameter set, a slice header, a slice segment header, a tile header, or a tile group header. Furthermore, the image decoding apparatus 100 may obtain, from the bitstream, a syntax element corresponding to the block shape information or the split shape mode information according to each largest coding unit, each reference coding unit, or each processing block, and may use the obtained syntax element.

Hereinafter, a method of determining a split rule according to an embodiment of the present disclosure will be described in detail.

The image decoding apparatus 100 may determine a split rule of an image. The split rule may be predetermined between the image decoding apparatus 100 and the image encoding apparatus 2200. The image decoding apparatus 100 may determine the split rule of the image, based on information obtained from a bitstream. The image decoding apparatus 100 may determine the split rule based on the information obtained from at least one of a sequence parameter set, a picture parameter set, a video parameter set, a slice header, a slice segment header, a tile header, or a tile group header. The image decoding apparatus 100 may determine the split rule differently according to frames, slices, tiles, temporal layers, largest coding units, or coding units.

The image decoding apparatus 100 may determine the split rule based on a block shape of a coding unit. The block shape may include a size, shape, a ratio of width and height, and a direction of the coding unit. The image encoding apparatus 2200 and the image decoding apparatus 100 may pre-determine to determine the split rule based on the block shape of the coding unit. However, the present disclosure is not limited thereto. The image decoding apparatus 100 may determine the split rule based on the information obtained from the bitstream received from the image encoding apparatus 2200.

The shape of the coding unit may include a square and a non-square. When the lengths of the width and height of the coding unit are the same, the image decoding apparatus 100 may determine the shape of the coding unit to be a square. Also, when the lengths of the width and height of the coding unit are not the same, the image decoding apparatus 100 may determine the shape of the coding unit to be a non-square.

The size of the coding unit may include various sizes such as 4x4, 8x4, 4x8, 8x8, 16x4, 16x8, ... , 256x256. The size of the coding unit may be classified based on the length of a long side of the coding unit, the length of a short side, or the area. The image decoding apparatus 100 may apply the same split rule to coding units classified as the same group. For example, the image decoding apparatus 100 may classify coding units having the same lengths of the long sides as having the same size. Also, the image decoding apparatus 100 may apply the same split rule to coding units having the same lengths of long sides.

The ratio of the width and height of the coding unit may include 1:2, 2:1, 1:4, 4:1, 1:8, 8:1, 1:16, 16:1, 32:1, 1:32, or the like. Also, a direction of the coding unit may include a horizontal direction and a vertical direction. The horizontal direction may indicate a case in which the length of the width of the coding unit is longer than the length of the height thereof. The vertical direction may indicate a case in which the length of the width of the coding unit is shorter than the length of the height thereof.

The image decoding apparatus 100 may adaptively determine the split rule based on the size of the coding unit. The image decoding apparatus 100 may differently determine an allowable split shape mode based on the size of the coding unit. For example, the image decoding apparatus 100 may determine whether splitting is allowed based on the size of the coding unit. The image decoding apparatus 100 may determine a split direction according to the size of the coding unit. The image decoding apparatus 100 may determine an allowable split type according to the size of the coding unit.

The split rule determined based on the size of the coding unit may be a split rule predetermined between the image encoding apparatus 2200 and the image decoding apparatus 100. Also, the image decoding apparatus 100 may determine the split rule based on the information obtained from the bitstream.

The image decoding apparatus 100 may adaptively determine the split rule based on a location of the coding unit. The image decoding apparatus 100 may adaptively determine the split rule based on the location of the coding unit in the image.

Also, the image decoding apparatus 100 may determine the split rule such that coding units generated via different splitting paths do not have the same block shape. However, the present disclosure is not limited thereto, and the coding units generated via different splitting paths have the same block shape. The coding units generated via the different splitting paths may have different decoding processing orders. Because the decoding processing orders is described above with reference to FIG. 12, details thereof are not provided again.

FIG. 17 is a diagram illustrating a process of encoding and decoding an image.

An encoding apparatus 1710 transmits, to a decoding apparatus 1750, a bitstream generated via encoding with respect to an image, and the decoding apparatus 1750 receives and decodes the bitstream, and thus, reconstructs the image.

In detail, a prediction encoder 1715 in the encoding apparatus 1710 outputs a prediction block via inter prediction and intra prediction, and a transformer and quantizer 1720 performs transformation and quantization on residual samples of a residual block between the prediction block and a current block, and thus, outputs a quantized transform coefficient. An entropy encoder 1725 encodes and outputs the quantized transform coefficient as a bitstream.

The quantized transform coefficient is reconstructed, via an inverse quantizer and inverse transformer 1730, as a residual block including residual samples of a spatial domain. A reconstructed block obtained by combining the prediction block and the residual block is output as a filtered block via a deblocking filter 1735 and a loop filter 1740. A reconstructed image including the filtered block may be used as a reference image of a next input image, in a prediction encoder 1715.

The bitstream received by the decoding apparatus 1750 is reconstructed, via an entropy decoder 1755 and an inverse quantizer and inverse transformer 1760, as a residual block including residual samples of a spatial domain. A prediction block and the residual block output from a prediction decoder 1775 are combined to generate a reconstructed block, and the reconstructed block is output as a filtered block via a deblocking filter 1765 and a loop filter 1770. A reconstructed image including the filtered block may be used as a reference image for a next image, in a prediction decoder 1775.

The loop filter 1740 of encoding apparatus 1710 performs loop filtering by using filter information input via a user input or according to system setting. The filter information used by the loop filter 1740 is transmitted to the decoding apparatus 1750 via the entropy encoder 1725. The loop filter 1770 of the decoding apparatus 1750 may perform loop filtering, based on the filter information input from the entropy decoder 1755.

Here, deblocking filtering and loop filtering may be referred to as in-loop filtering. Also, the loop filtering may include sample adaptive offset (SAO) filtering and adaptive loop filtering (ALF) filtering. The SAO filtering may be performed after the deblocking filtering is performed, and the ALF filtering may be performed after the SAO filtering is performed.

For in-loop filtering, the legacy codec uses only reconstructed samples of a block. However, recently, methods of additionally using residual samples for in-loop filtering are provided. Accordingly, a method of using a residual sample so as to determine or classify one in-loop filter among a plurality of in-loop filters for in-loop filtering is provided.

Hereinafter, a method of determining one in-loop filter among a plurality of in-loop filters will be described below.

FIG. 18 is a diagram for describing a method of determining an in-loop filter of a current block, based on residual samples, according to an embodiment of the present disclosure.

Referring to FIG. 18, in order to determine an in-loop filter for in-loop filtering on a current block 1800, residual samples of the current block 1800 and residual samples of neighboring pixels 1810 adjacent to the current block may be used.

In detail, the in-loop filter for the 2x2-size current block 1800 may be determined based on the sum of absolute values of residual samples within an 8x8 size window including the current block 1800 and the neighboring pixels 1810.

For example, as in Equation 1 below, a filter index classIdx indicating a filter may be derived based on the sum of absolute values of residual samples.

[Equation 1]

$$classIdx = sum \gg (sample\ bit\ depth-2),\ classIdx <= 24$$

In this regard, sum refers to the sum of the absolute values of the residual samples in the 8x8 window, and sample bit depth refers to a bit depth of the residual samples.

Accordingly, for in-loop filtering on the current block, an in-loop filter of the current block may be determined among a plurality of in-loop filters, based on the derived filter index.

A maximum value of the filter index classIdx in Equation 1 is 24, but the present disclosure is not limited thereto.

As such, in a case where a filter of in-loop filtering is determined by using residual samples, values of the residual samples for in-loop filtering have to be all stored in a buffer, such that there is a problem in which an amount of data stored in the buffer is increased and a required size of the buffer is also increased.

In detail, a size of the buffer may be determined as below.

According to an embodiment of the present disclosure, a range of a value of a residual sample may be [-1<<bitdepth, 1<<bitdepth], and a bit depth in codec may be 10 bits.

Based on what is described above, a size of a buffer for a luma component may be determined to be W x H x Size_pix, and in this regard, W may refer to a width of a slice of the luma component, H may refer to a height of the slice of the luma component, and Size_pix may be 11 bits that is the sum of a bit depth and a sign bit for determining a sign, i.e., 2 bytes.

Also, a size of a buffer for a chroma component may be determined to be Wc x Hc x Size_pix x 2, and in this regard, Wc may refer to a width of a slice of the chroma component, Hc may refer to a height of the slice of the chroma component, and Size_pix may be 11 bits that is the sum of a bit depth and a sign bit for determining a sign, i.e., 2 bytes, where 2 may be the number of chroma components.

According to the legacy codec, a buffer is provided to store a reconstructed picture, and residual samples or prediction samples used in a reconstruction process are not separately stored. Therefore, in order to store residual samples used to determine in-loop filtering, an additional slice-level buffer is required in encoding, and at least a CTU-level buffer is required in decoding corresponding to encoding, however, it is not appropriate in hardware implementation.

As residual samples are derived by subtracting prediction samples from reconstructed samples, prediction samples may be used instead of residual samples. However, even in this case, an additional slice-level buffer is required in encoding so as to store the prediction samples, and at least a CTU-level buffer is required in decoding corresponding to encoding.

Also, there is a problem in which input information about residual samples or prediction samples has to be additionally stored even for in-loop filtering based on a neural network.

In appropriate hardware implementation, in order to decrease a size of an additional buffer, information about residual samples or information about prediction samples with a precision coarser than a current pixel level may be used. That is, the information about residual samples or the information about prediction samples with the precision coarser than a precision of a current pixel may be used.

Instead of residual information or prediction information of each pixel, when information about residual samples or information about prediction samples with a low precision with respect to a block of a size of 2x2, 4x4, ..., MxN is used, a size of buffer of residual information or prediction information for hardware implementation may be decreased without a high performance loss.

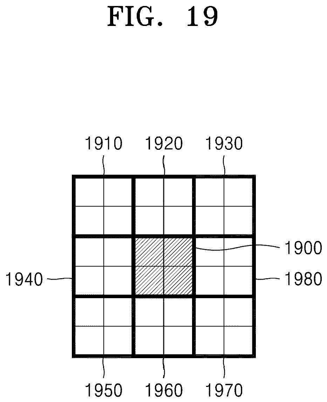

FIG. 19 is a diagram for describing a method of determining an in-loop filter of a current block, based on a representative value of residual samples, according to an embodiment of the present disclosure.

Referring to FIG. 19, instead of sample values of residual samples of a current block 1900 and sample values of residual samples of each of neighboring blocks 1910, 1920, 1930, 1940, 1950, 1960, 1970, and 1980 of the current block 1900 being obtained, a representative value of the residual samples of the current block 1900 and a representative value of the residual samples of each of the neighboring blocks 1910, 1920, 1930, 1940, 1950, 1960, 1970, and 1980 may be obtained and used.

In detail, when the sum of absolute values of the residual samples of the 2x2-size current block 1900 and each of the 2x2-size neighboring blocks 1910, 1920, 1930, 1940, 1950, 1960, 1970, and 1980 is pre-calculated and stored in a buffer, an amount of data stored in the buffer may be reduced by 1/4, compared to a case where the residual samples of the 2x2-size current block 1900 and each of the 2x2-size neighboring blocks 1910, 1920, 1930, 1940, 1950, 1960, 1970, and 1980 are all stored. That is, sum is determined by using the sum of absolute values of respective blocks, the absolute values being pre-calculated according to Equation 1 and stored, and thus, a filter index indicating a filter may be determined.

Also, compared to FIG. 18, as a representative value stored in a 2x2 block unit in a buffer is used, a window for determining an in-loop filter in the 2x2 block unit has to be determined, and thus, calculation is performed to determine a filter index indicating an in-loop filter as 6x6 including a 2x2 current block and 2x2 neighboring blocks adjacent to the current block.

According to an embodiment of the present disclosure, instead of the sum of absolute values of residual samples, a quantization value of an absolute value of each of the residual samples may be stored in a buffer. Accordingly, a value stored in the buffer is determined by using Equation 2 below.

[Equation 2]

$$R`(x, y) = |R(x, y)| >> (bitdepth-8)$$

In this regard, R'(x, y) indicates a location (x, y) of the buffer in which a value is stored, and R(x, y) indicates a location of a residual sample, based on x coordinate and y coordinate of the buffer.

A range of a value stored in the buffer according to Equation 2 above corresponds to [0, 1<<8]. Accordingly, a size of a value stored in the buffer cannot exceed 1 byte.

As a result, a size of a buffer for a luma component corresponds to W x H x 1byte, and a size of a buffer for a chroma component corresponds to Wc x Hc x 1byte x 2. The size of the buffer may be 1/2, compared to a size of a buffer as in FIG. 18.

Here, quantization may indicate clipping of N bits.

In this case, sum in Equation 1 used to determine a filter may be determined to be the sum of quantized absolute values of residual samples, but the present disclosure is not limited thereto.

According to an embodiment of the present disclosure, instead of the sum of absolute values of residual samples, a mean of an absolute value of each of the residual samples may be stored in the buffer. Accordingly, a value stored in the buffer is determined by using Equation 3 below.

[Equation 3]

$$R`(x, y) =mean(|R(2x, 2y)|, |R(2x+1, 2y)|, |R(2x, 2y+1)|, |R(2x+1, 2y+1)|)$$

In this regard, R'(x, y) indicates a location (x, y) of the buffer in which a value is stored, and R(2x, 2y), R(2x+1, 2y), R(2x, 2y+1), and R(2x+1, 2y+1) indicate locations of residual samples, based on x coordinate and y coordinate of the buffer.

A range of a value stored in the buffer according to Equation 3 above corresponds to [0, 1<<bitdepth]. Accordingly, a size of a value stored in the buffer is bitdepth. As 10 bits are generally used as a bit depth, the bit depth is 2 bytes.

As a result, a size of a buffer for a luma component corresponds to W/2 x H/2 x 2byte, and a size of a buffer for a chroma component corresponds to Wc/2 x Hc/2 x 2byte x 2. The size of the buffer may be 1/4, compared to a size of a buffer as in FIG. 18.

In this case, sum in Equation 1 used to determine a filter may be determined to be the sum of all values obtained by multiplying 4 by a mean of absolute values of residual samples, but the present disclosure is not limited thereto.

According to an embodiment of the present disclosure, a median value may be stored, instead of the mean.

According to an embodiment of the present disclosure, instead of the sum of absolute values of residual samples, a quantized mean of respective absolute values of the residual samples may be stored in the buffer. Accordingly, a value stored in the buffer is determined by using Equation 4 below.

[Equation 4]

$$R`(x, y) =mean(|R(2x, 2y)|, |R(2x+1, 2y)|, |R(2x, 2y+1)|, |R(2x+1, 2y+1)|)>>(bitdepth-8)$$

In this regard, R'(x, y) indicates a location (x, y) of the buffer in which a value is stored, and R(2x, 2y), R(2x+1, 2y), R(2x, 2y+1), and R(2x+1, 2y+1) indicate locations of residual samples, based on x coordinate and y coordinate of the buffer.

A range of a value stored in the buffer according to Equation 4 above corresponds to [0, 1<<8]. Accordingly, a size of a value stored in the buffer cannot exceed 1 byte.

As a result, a size of a buffer for a luma component corresponds to W/2 x H/2 x 1byte, and a size of a buffer for a chroma component corresponds to Wc/2 x Hc/2 x 1byte x 2. The size of the buffer may be 1/8, compared to a size of a buffer as in FIG. 18.

In this case, sum in Equation 1 used to determine a filter may be determined to be the sum of all values obtained by multiplying 4 by a quantized mean of absolute values of residual samples, but the present disclosure is not limited thereto.

According to an embodiment of the present disclosure, a quantized median value may be stored, instead of the quantized mean.

According to an embodiment of the present disclosure, instead of the sum of absolute values of residual samples, a maximum value among respective absolute values of the residual samples may be stored in the buffer. Accordingly, a value stored in the buffer is determined by using Equation 5 below.

[Equation 5]

$$R`(x, y) = \max(|R(2x, 2y)|, |R(2x+1, 2y)|, |R(2x, 2y+1)|, |R(2x+1, 2y+1)|)$$

In this regard, R'(x, y) indicates a location (x, y) of the buffer in which a value is stored, and R(2x, 2y), R(2x+1, 2y), R(2x, 2y+1), and R(2x+1, 2y+1) indicate locations of residual samples, based on x coordinate and y coordinate of the buffer.

A range of a value stored in the buffer according to Equation 5 above corresponds to [0, 1<<bitdepth]. Accordingly, a size of a value stored in the buffer is bitdepth. As 10 bits are generally used as a bit depth, the bit depth is 2 bytes.

As a result, a size of a buffer for a luma component corresponds to W/2 x H/2 x 2byte, and a size of a buffer for a chroma component corresponds to Wc/2 x Hc/2 x 2byte x 2. The size of the buffer may be 1/4, compared to a size of a buffer as in FIG. 18.

In this case, instead of Equation 1 in which the sum of absolute values of residual sample is used to determine a filter, a largest value among maximum values of a current block and neighboring blocks may be used or a mean of the maximum values may be used, but the present disclosure is not limited thereto.

According to an embodiment of the present disclosure, instead of the sum of absolute values of residual samples, a quantized maximum value among respective absolute values of the residual samples may be stored in the buffer. Accordingly, a value stored in the buffer is determined by using Equation 6 below.

[Equation 6]

$$R`(x, y) = \max(|R(2x, 2y)|, |R(2x+1, 2y)|, |R(2x, 2y+1)|, |R(2x+1, 2y+1)|) >> (bitdepth-8)$$

In this regard, R'(x, y) indicates a location (x, y) of the buffer in which a value is stored, and R(2x, 2y), R(2x+1, 2y), R(2x, 2y+1), and R(2x+1, 2y+1) indicate locations of residual samples, based on x coordinate and y coordinate of the buffer.

A range of a value stored in the buffer according to Equation 6 above corresponds to [0, 1<<8]. Accordingly, a size of a value stored in the buffer cannot exceed 1 byte.

As a result, a size of a buffer for a luma component corresponds to W/2 x H/2 x 1byte, and a size of a buffer for a chroma component corresponds to Wc/2 x Hc/2 x 1byte x 2. The size of the buffer may be 1/8, compared to a size of a buffer as in FIG. 18.

In this case, in order to determine a filter, instead of Equation 1 in which the sum of absolute values of residual sample is used, a largest value among quantized maximum values of a current block and neighboring blocks may be used or a mean of the quantized maximum values may be used, but the present disclosure is not limited thereto.

According to an embodiment of the present disclosure, instead of the sum of absolute values of residual samples, a maximum value and a minimum value among respective absolute values of the residual samples may be stored in the buffer. Accordingly, a value stored in the buffer is determined by using Equation 7 below.

[Equation 7]

$$R`\max(x, y) = \max(|R(2x, 2y)|, |R(2x+1, 2y)|, |R(2x, 2y+1)|, |R(2x+1, 2y+1)|)$$

$$R`\min(x, y) = \min(|R(2x, 2y)|, |R(2x+1, 2y)|, |R(2x, 2y+1)|, |R(2x+1, 2y+1)|)$$

In this regard, R'max(x, y) indicates a location (x, y) of a buffer in which a maximum value is stored, R'min(x, y) indicates a location (x, y) of a buffer in which a minimum value is stored, and R(2x, 2y), R(2x+1, 2y), R(2x, 2y+1), and R(2x+1, 2y+1) indicate locations of residual samples, based on x coordinate and y coordinate of the buffer.

A range of a value stored in the buffer according to Equation 7 above corresponds to [0, 1<<bitdepth]. Accordingly, a size of a value stored in the buffer is bitdepth. As 10 bits are generally used as a bit depth, the bit depth is 2 bytes.

As a result, a size of a buffer for a luma component corresponds to W/2 x H/2 x 2byte, and a size of a buffer for a chroma component corresponds to Wc/2 x Hc/2 x 2byte x 2. As two buffers are required to respectively store a maximum value and a minimum value, a size of a buffer may be 1/2, compared to a size of a buffer as in FIG. 18.

In this case, in order to determine a filter, depending on cases, any one of or both a maximum value and a minimum value may be used to determine a filter index, but the present disclosure is not limited thereto.

According to an embodiment of the present disclosure, instead of the sum of absolute values of residual samples, a quantized maximum value and a quantized minimum value among respective absolute values of the residual samples may be stored in the buffer. Accordingly, a value stored in the buffer is determined by using Equation 8 below.

[Equation 8]

$$R`max(x, y) = max(|R(2x, 2y)|, |R(2x+1, 2y)|, |R(2x, 2y+1)|, |R(2x+1, 2y+1)|)>>(bitdepth-8)$$

$$R`min(x, y) = min(|R(2x, 2y)|, |R(2x+1, 2y)|, |R(2x, 2y+1)|, |R(2x+1, 2y+1)|)>>(bitdepth-8)$$

In this regard, R'max(x, y) indicates a location (x, y) of a buffer in which a maximum value is stored, R'min(x, y) indicates a location (x, y) of a buffer in which a minimum value is stored, and R(2x, 2y), R(2x+1, 2y), R(2x, 2y+1), and R(2x+1, 2y+1) indicate locations of residual samples, based on x coordinate and y coordinate of the buffer.

A range of a value stored in the buffer according to Equation 8 above corresponds to [0, 1<<8]. Accordingly, a size of a value stored in the buffer cannot exceed 1 byte.

As a result, a size of a buffer for a luma component corresponds to W/2 x H/2 x 1byte, and a size of a buffer for a chroma component corresponds to Wc/2 x Hc/2 x 1byte x 2. As two buffers are required to respectively store a maximum value and a minimum value, a size of a buffer may be 1/4, compared to a size of a buffer as in FIG. 18.

In this case, in order to determine a filter, depending on cases, any one of or both a maximum value and a minimum value may be used to determine a filter index.

According to an embodiment of the present disclosure, instead of the sum of absolute values of residual samples, a mean of respective absolute values of the residual samples and a maximum value among respective absolute values of the residual samples may be stored in the buffer. Accordingly, a value stored in the buffer is determined by using Equation 9 below.

[Equation 9]

$$R`mean(x, y) = mean(|R(2x, 2y)|, |R(2x+1, 2y)|, |R(2x, 2y+1)|, |R(2x+1, 2y+1)|)$$

$$R`max(x, y) = max(|R(2x, 2y)|, |R(2x+1, 2y)|, |R(2x, 2y+1)|, |R(2x+1, 2y+1)|)$$

In this regard, R'mean(x, y) indicates a location (x, y) of a buffer in which a mean is stored, R'max(x, y) indicates a location (x, y) of a buffer in which a maximum value is stored, and R(2x, 2y), R(2x+1, 2y), R(2x, 2y+1), and R(2x+1, 2y+1) indicate locations of residual samples, based on x coordinate and y coordinate of the buffer.

A range of a value stored in the buffer according to Equation 9 above corresponds to [0, 1<<bitdepth]. Accordingly, a size of a value stored in the buffer is bitdepth. As 10 bits are generally used as a bit depth, the bit depth is 2 bytes.

As a result, a size of a buffer for a luma component corresponds to W/2 x H/2 x 2byte, and a size of a buffer for a chroma component corresponds to Wc/2 x Hc/2 x 2byte x 2. As two buffers are required to respectively store a mean and a maximum value, a size of a buffer may be 1/2, compared to a size of a buffer as in FIG. 18.

In this case, in order to determine a filter, depending on cases, any one of or both a mean and a maximum value may be used to determine a filter index, but the present disclosure is not limited thereto.

According to an embodiment of the present disclosure, instead of the sum of absolute values of residual samples, a quantized mean of respective absolute values of the residual samples and a quantized maximum value among respective absolute values of the residual samples may be stored in the buffer. Accordingly, a value stored in the buffer is determined by using Equation 10 below.

[Equation 10]

$$R`mean(x, y) = mean(|R(2x, 2y)|, |R(2x+1, 2y)|, |R(2x, 2y+1)|, |R(2x+1, 2y+1)|) >> (bitdepth-8)$$

$$R`max(x, y) = max(|R(2x, 2y)|, |R(2x+1, 2y)|, |R(2x, 2y+1)|, |R(2x+1, 2y+1)|) >> (bitdepth-8)$$

In this regard, R'mean(x, y) indicates a location (x, y) of a buffer in which a mean is stored, R'max(x, y) indicates a location (x, y) of a buffer in which a maximum value is stored, and R(2x, 2y), R(2x+1, 2y), R(2x, 2y+1), and R(2x+1, 2y+1) indicate locations of residual samples, based on x coordinate and y coordinate of the buffer.

A range of a value stored in the buffer according to Equation 10 above corresponds to [0, 1 <<8]. Accordingly, a size of a value stored in the buffer cannot exceed 1 byte.

As a result, a size of a buffer for a luma component corresponds to W/2 x H/2 x 1byte, and a size of a buffer for a chroma component corresponds to Wc/2 x Hc/2 x 1byte x 2. As two buffers are required to respectively store a mean and a maximum value, a size of a buffer may be 1/4, compared to a size of a buffer as in FIG. 18.

In this case, in order to determine a filter, depending on cases, any one of or both a quantized mean and a quantized maximum value may be used to determine a filter index, but the present disclosure is not limited thereto.

According to an embodiment of the present disclosure, instead of the sum of absolute values of residual samples, a quantized mean of respective absolute values of the residual samples, a quantized maximum value among respective absolute values of the residual samples, and a quantized minimum value among respective absolute values of the residual samples may be stored in the buffer. Accordingly, a value stored in the buffer is determined by using Equation 11 below.

[Equation 11]

$$R`mean(x, y) = mean(|R(2x, 2y)|, |R(2x+1, 2y)|, |R(2x, 2y+1)|, |R(2x+1, 2y+1)|)$$

$$R`max(x, y) = max(|R(2x, 2y)|, |R(2x+1, 2y)|, |R(2x, 2y+1)|, |R(2x+1, 2y+1)|)$$

$$R`min(x, y) = min(|R(2x, 2y)|, |R(2x+1, 2y)|, |R(2x, 2y+1)|, |R(2x+1, 2y+1)|)$$

In this regard, R'mean(x, y) indicates a location (x, y) of a buffer in which a mean is stored, R'max(x, y) indicates a location (x, y) of a buffer in which a maximum value is stored, R'min(x, y) indicates a location (x, y) of a buffer in which a minimum value is stored, and R(2x, 2y), R(2x+1, 2y), R(2x, 2y+1), and R(2x+1, 2y+1) indicate locations of residual samples, based on x coordinate and y coordinate of the buffer.

A range of a value stored in the buffer according to Equation 11 above corresponds to [0, 1<<bitdepth]. Accordingly, a size of a value stored in the buffer is bitdepth. As 10 bits are generally used as a bit depth, the bit depth is 2 bytes.

As a result, a size of a buffer for a luma component corresponds to W/2 x H/2 x 2byte, and a size of a buffer for a chroma component corresponds to Wc/2 x Hc/2 x 2byte x 2. As three buffers are required to respectively store a mean, a maximum value, and a minimum value, a size of a buffer may be 3/4, compared to a size of a buffer as in FIG. 18.

In this case, in order to determine a filter, depending on cases, any one of, two of, or all of a mean, a maximum value, and a maximum value may be used to determine a filter index, but the present disclosure is not limited thereto.

According to an embodiment of the present disclosure, instead of the sum of absolute values of residual samples, a quantized mean of respective absolute values of the residual samples, a quantized maximum value among respective absolute values of the residual samples, and a quantized minimum value among respective absolute values of the residual samples may be stored in the buffer. Accordingly, a value stored in the buffer is determined by using Equation 12 below.

[Equation 12]

R`mean(x, y) =mean(|R(2x, 2y)|, |R(2x+1, 2y)|, |R(2x, 2y+1)|, |R(2x+1, 2y+1)|)>>(bitdepth-8)

R`max(x, y) =max(|R(2x, 2y)|, |R(2x+1, 2y)|, |R(2x, 2y+1)|, |R(2x+1, 2y+1)|)>>(bitdepth-8)

R`min(x, y) =min(|R(2x, 2y)|, |R(2x+1, 2y)|, |R(2x, 2y+1)|, |R(2x+1, 2y+1)|)>>(bitdepth-8)

In this regard, R'mean(x, y) indicates a location (x, y) of a buffer in which a mean is stored, R'max(x, y) indicates a location (x, y) of a buffer in which a maximum value is stored, R'min(x, y) indicates a location (x, y) of a buffer in which a minimum value is stored, and R(2x, 2y), R(2x+1, 2y), R(2x, 2y+1), and R(2x+1, 2y+1) indicate locations of residual samples, based on x coordinate and y coordinate of the buffer.

A range of a value stored in the buffer according to Equation 12 above corresponds to [0, 1 <<8]. Accordingly, a size of a value stored in the buffer cannot exceed 1 byte.

As a result, a size of a buffer for a luma component corresponds to W/2 x H/2 x 1byte, and a size of a buffer for a chroma component corresponds to Wc/2 x Hc/2 x 1byte x 2. As three buffers are required to respectively store a mean, a maximum value, and a minimum value, a size of a buffer may be 3/8, compared to a size of a buffer as in FIG. 18.

In this case, in order to determine a filter, depending on cases, any one of, two of, or all of a quantized mean, a quantized maximum value, and a quantized maximum value may be used to determine a filter index, but the present disclosure is not limited thereto.

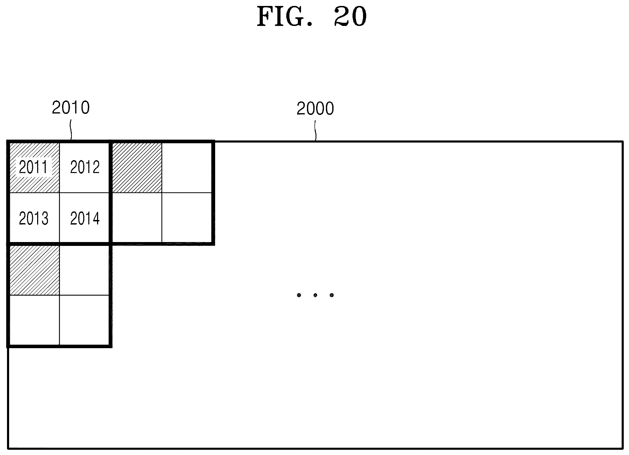

FIG. 20 is a diagram for describing a method of determining an in-loop filter of a current block, based on a representative value of residual samples, according to an embodiment of the present disclosure.

Referring to FIG. 20, only a top left residual sample 2011 located in the top left among residual samples 2011, 2012, 2013, and 2014 of a current block 2010 of a current frame 2000 may be stored in a buffer and may be used as a representative value of residual samples of the current block 2010. That is, by performing subsampling by 2 in vertical and horizontal directions, a sample value of one sample among four samples may be used as a representative value.

Accordingly, a value stored in the buffer is determined by using Equation 13 below.

[Equation 13]

R`(x, y) =R(2x, 2y)

In this regard, R'(x, y) indicates a location (x, y) of a buffer in which a mean is stored, and R(2x, 2y) indicates a location of a residual sample, based on x coordinate and y coordinate of the buffer.

A range of a value stored in the buffer according to Equation 13 above corresponds to [-1<<bitdepth, 1<<bitdepth]. As 10 bits are generally used as a bit depth, and a sign bit indicating a sign is 1 bit, a size of a value stored in the buffer may be 11 bits, i.e., 2 bytes.

As a result, a size of a buffer for a luma component corresponds to W/2 x H/2 x 2byte, and a size of a buffer for a chroma component corresponds to Wc/2 x Hc/2 x 2byte x 2. Accordingly, the size of the buffer may be 1/4, compared to a size of a buffer as in FIG. 18.

In this case, in order to determine a filter, a filter index may be determined by using the sum of values obtained by multiplying 4 by a sample value of a top left residual sample of a block which is a representative value of the block.

In an embodiment of the present disclosure described with reference to FIGS. 19 and 20, a size of a block is described to be 2x2, but the size of the block is not limited thereto and may be 1x1, 2x1, 1x2, 4x2, 2x4, 4x4, etc.

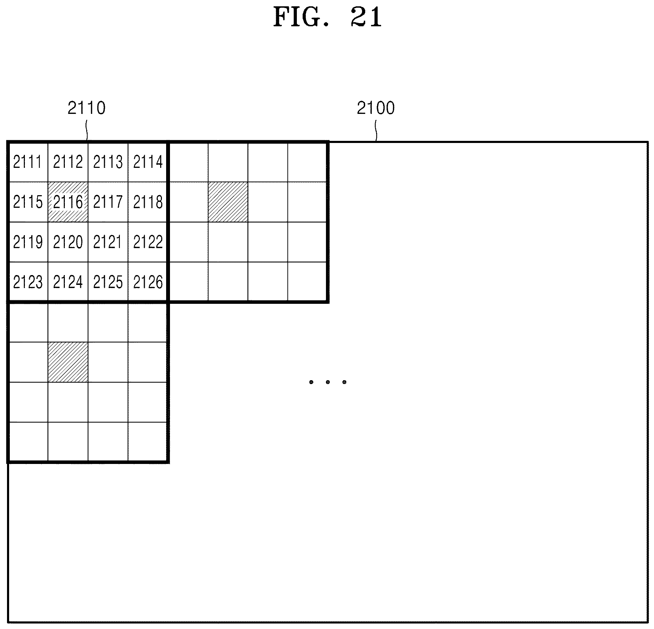

Hereinafter, with reference to FIG. 21, a method of determining an in-loop filter of a current block, based on a representative value of residual samples when a size of the current block is 4x4, will now be described.

FIG. 21 is a diagram for describing a method of determining an in-loop filter of a current block, based on a representative value of residual samples, according to an embodiment of the present disclosure.

Referring to FIG. 21, only a residual sample 2116 that is located adjacent to the top left of the center of a current block 2110 and is among residual samples 2111, 2112, 2113, 2114, 2115, 2116, 2117, 2118, 2119, 2120, 2121, 2122, 2123, 2124, 2125, and 2126 of the current block 2110 of a current frame 2100 may be stored in a buffer and may be used as a representative value of residual samples of the current block 2110. That is, by performing subsampling by 4 in vertical and horizontal directions, a sample value of one sample among 16 samples may be used as a representative value.

Accordingly, a value stored in the buffer is determined by using Equation 14 below.

$$[Equation\ 14]$$

$$R`(x,\ y) = R(4x+1,\ 4y+1)$$

In this regard, R'(x, y) indicates a location (x, y) of a buffer in which a mean is stored, and R(4x+1, 4y+1) indicates a location of a residual sample, based on x coordinate and y coordinate of the buffer.

A range of a value stored in the buffer according to Equation 14 above corresponds to [-1<<bitdepth, 1<<bitdepth]. As 10 bits are generally used as a bit depth, and a sign bit indicating a sign is 1 bit, a size of a value stored in the buffer may be 11 bits, i.e., 2 bytes.

As a result, a size of a buffer for a luma component corresponds to W/4 x H/4 x 2byte, and a size of a buffer for a chroma component corresponds to Wc/4 x Hc/4 x 2byte x 2. Accordingly, the size of the buffer may be 1/16, compared to a size of a buffer as in FIG. 18.

In this case, in order to determine a filter, a filter index may be determined by using the sum of values obtained by multiplying 16 by a sample value of a residual sample located adjacent to the top left of the center of a block which is a representative value of the block, but the present disclosure is not limited thereto.

Also, as a representative value is stored in a 4x4-block unit, a size of a window for determining a filter may be 12x12 including neighboring blocks of 4x4.

According to an embodiment of the present disclosure, the methods described with reference to FIGS. 19 to 21 may be combined to be performed.

With reference to FIGS. 19 to 21, an in-loop filter is determined based on a representative value of residual samples of a current block, but the present disclosure is not limited thereto.

According to an embodiment of the present disclosure, the in-loop filter may be determined based on a representative value of prediction samples of the current block, instead of the representative value of the residual samples of the current block.

According to an embodiment of the present disclosure, when the in-loop filter is an SAO filter, a representative value of reconstructed samples before deblocking filtering may be used, instead of the representative value of the residual samples of the current block.

According to an embodiment of the present disclosure, when the in-loop filter is an ALF filter, the representative value of reconstructed samples before deblocking filtering or a representative value of reconstructed samples before SAO filtering may be used, instead of the representative value of the residual samples of the current block.

A buffer of FIGS. 19 to 21 may be a slice level, a tile level, a CTU row level, a CTU level.

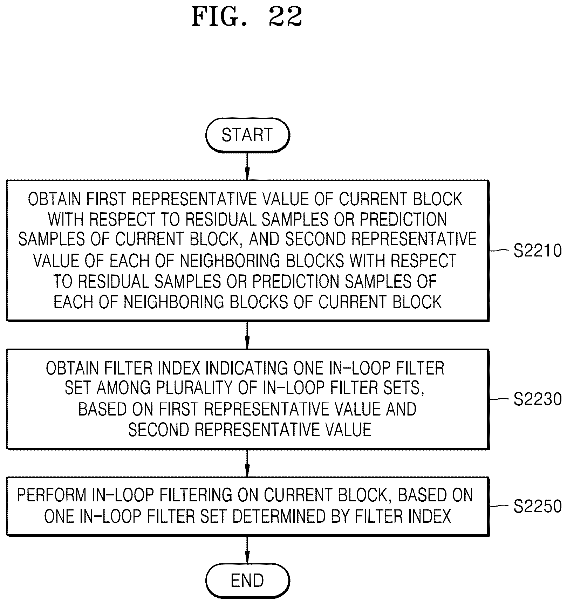

FIG. 22 is a flowchart of an image decoding method according to an embodiment of the present disclosure.

Referring to FIG. 22, in S2210, an image decoding apparatus 2300 may obtain a first representative value of a current block with respect to residual samples or prediction samples of the current block, and a second representative value of each of neighboring blocks with respect to residual samples or prediction samples of each of the neighboring blocks of the current block.

According to an embodiment of the present disclosure, the first representative value may have the lower precision than a pixel level unit of the residual samples or the prediction samples of the current block, and the second representative value may have the lower precision than a pixel level unit of the residual samples or the prediction samples of each neighboring block.

According to an embodiment of the present disclosure, the first representative value may include respective quantized absolute values of the residual samples or the prediction samples of the current block, and the second representative value may include respective quantized absolute values of the residual samples or the prediction samples of each neighboring block.

According to an embodiment of the present disclosure, the first representative value may include a mean of absolute values of the residual samples or the prediction samples in the current block, and the second representative value may include a mean of absolute values of the residual samples or the prediction samples of each neighboring block.

According to an embodiment of the present disclosure, the first representative value may include a quantized mean of the absolute values of the residual samples or the prediction samples in the current block, and the second representative value may include a quantized mean of the absolute values of the residual samples or the prediction samples of each neighboring block.

According to an embodiment of the present disclosure, a size of the current block may be 2x2, and a size of each neighboring block may be 2x2.

According to an embodiment of the present disclosure, a size of the current block may be 4x4, and a size of each neighboring block may be 4x4.

According to an embodiment of the present disclosure, a size of the current block and each of the neighboring blocks may be one of 1x1, 2x1, 1x2, 4x2, or 2x4.

According to an embodiment of the present disclosure, the neighboring blocks may include a top left neighboring block adjacent to the top left of the current block, a top neighboring block adjacent to the top of the current block, a top right neighboring block adjacent to the top right of the current block, a left neighboring block adjacent to the left of the current block, a bottom left neighboring block adjacent to the bottom left of the current block, a bottom neighboring block adjacent to the bottom of the current block, a bottom right neighboring block adjacent to the bottom right of the current block, and a right neighboring block adjacent to the right of the current block.

In S2230, the image decoding apparatus 2300 may obtain a filter index indicating one in-loop filter set among a plurality of in-loop filter sets, based on the first representative value and the second representative value.

According to an embodiment of the present disclosure, the filter index may be determined based on the sum of absolute values based on the first representative value and the second representative value.

In S2250, the image decoding apparatus 2300 may perform in-loop filtering on the current block, based on the one in-loop filter set determined by the filter index.

According to an embodiment of the present disclosure, the in-loop filtering may be one of deblocking filtering, SAO filtering, or ALF filtering.

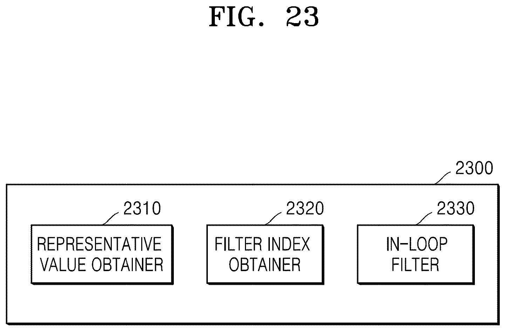

FIG. 23 is a block diagram illustrating a configuration of an image decoding apparatus according to an embodiment of the present disclosure.

Referring to FIG. 23, the image decoding apparatus 2300 may include a representative value obtainer 2310, a filter index obtainer 2320, and an in-loop filter 2330.

The representative value obtainer 2310, the filter index obtainer 2320, and the in-loop filter 2330 may be implemented as one or more processors. The representative value obtainer 2310, the filter index obtainer 2320, and the in-loop filter 2330 may operate according to an instruction stored in memory. The instruction may cause the one or more processors to perform one or more operations.

While FIG. 23 shows the representative value obtainer 2310, the filter index obtainer 2320, and the in-loop filter 2330 as separate elements, the representative value obtainer 2310, the filter index obtainer 2320, and the in-loop filter 2330 may be implemented via one processor. For example, the representative value obtainer 2310, the filter index obtainer 2320, and the in-loop filter 2330 may be implemented as a dedicated processor, or may be implemented via a combination of a general-purpose processor such as an application processor (AP), a central processing unit (CPU), or a graphics processing unit (GPU) and software. Also, the dedicated processor may include memory including instructions for implementation of an embodiment of the present disclosure, or may include a memory processor for using external memory.

The representative value obtainer 2310, the filter index obtainer 2320, and the in-loop filter 2330 may be configured as a plurality of processors. In this case, they may be implemented via a combination of dedicated processors, or may be implemented via a combination of a plurality of dedicated processors including an AP, a CPU, or a GPU and software. Also, a processor may include an artificial intelligence dedicated processor. In another example, an artificial intelligence dedicated processor may be configured as a separate chip from a processor.

The representative value obtainer 2310 may obtain a first representative value of a current block with respect to residual samples or prediction samples of the current block, and a second representative value of each of neighboring blocks with respect to residual samples or prediction samples of each of the neighboring blocks of the current block.

According to an embodiment of the present disclosure, the first representative value may have the lower precision than a pixel level unit of the residual samples or the prediction samples of the current block, and the second representative value may have the lower precision than a pixel level unit of the residual samples or the prediction samples of each neighboring block.

According to an embodiment of the present disclosure, the first representative value may include respective quantized absolute values of the residual samples or the prediction samples of the current block, and the second representative value may include respective quantized absolute values of the residual samples or the prediction samples of each neighboring block.

According to an embodiment of the present disclosure, the first representative value may include a mean of absolute values of the residual samples or the prediction samples in the current block, and the second representative value may include a mean of absolute values of the residual samples or the prediction samples of each neighboring block.

According to an embodiment of the present disclosure, the first representative value may include a quantized mean of the absolute values of the residual samples or the prediction samples in the current block, and the second representative value may include a quantized mean of the absolute values of the residual samples or the prediction samples of each neighboring block.

According to an embodiment of the present disclosure, a size of the current block may be 2x2, and a size of each neighboring block may be 2x2.

According to an embodiment of the present disclosure, a size of the current block may be 4x4, and a size of each neighboring block may be 4x4.

According to an embodiment of the present disclosure, a size of the current block and each of the neighboring blocks may be one of 1x1, 2x1, 1x2, 4x2, or 2x4.

According to an embodiment of the present disclosure, the neighboring blocks may include a top left neighboring block adjacent to the top left of the current block, a top neighboring block adjacent to the top of the current block, a top right neighboring block adjacent to the top right of the current block, a left neighboring block adjacent to the left of the current block, a bottom left neighboring block adjacent to the bottom left of the current block, a bottom neighboring block adjacent to the bottom of the current block, a bottom right neighboring block adjacent to the bottom right of the current block, and a right neighboring block adjacent to the right of the current block.

The filter index obtainer 2320 may obtain a filter index indicating one in-loop filter set among a plurality of in-loop filter sets, based on the first representative value and the second representative value.

According to an embodiment of the present disclosure, the filter index may be determined based on the sum of absolute values based on the first representative value and the second representative value.

The in-loop filter 2330 may perform in-loop filtering on the current block, based on the one in-loop filter set determined by the filter index.

According to an embodiment of the present disclosure, the in-loop filtering may be one of deblocking filtering, SAO filtering, or ALF filtering.

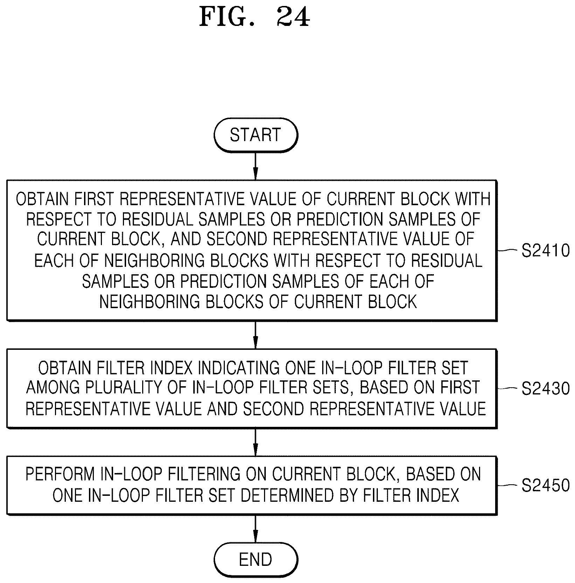

FIG. 24 is a flowchart of an image encoding method according to an embodiment of the present disclosure.

Referring to FIG. 24, in S2410, an image encoding apparatus 2500 may obtain a first representative value of a current block with respect to residual samples or prediction samples of the current block, and a second representative value of each of neighboring blocks with respect to residual samples or prediction samples of each of the neighboring blocks of the current block.

According to an embodiment of the present disclosure, the first representative value may have the lower precision than a pixel level unit of the residual samples or the prediction samples of the current block, and the second representative value may have the lower precision than a pixel level unit of the residual samples or the prediction samples of each neighboring block.

According to an embodiment of the present disclosure, the first representative value may include respective quantized absolute values of the residual samples or the prediction samples of the current block, and the second representative value may include respective quantized absolute values of the residual samples or the prediction samples of each neighboring block.

According to an embodiment of the present disclosure, the first representative value may include a mean of absolute values of the residual samples or the prediction samples in the current block, and the second representative value may include a mean of absolute values of the residual samples or the prediction samples of each neighboring block.

According to an embodiment of the present disclosure, the first representative value may include a quantized mean of the absolute values of the residual samples or the prediction samples in the current block, and the second representative value may include a quantized mean of the absolute values of the residual samples or the prediction samples of each neighboring block.

According to an embodiment of the present disclosure, a size of the current block may be 2x2, and a size of each neighboring block may be 2x2.

According to an embodiment of the present disclosure, a size of the current block may be 4x4, and a size of each neighboring block may be 4x4.

According to an embodiment of the present disclosure, a size of the current block and each of the neighboring blocks may be one of 1x1, 2x1, 1x2, 4x2, or 2x4.

According to an embodiment of the present disclosure, the neighboring blocks may include a top left neighboring block adjacent to the top left of the current block, a top neighboring block adjacent to the top of the current block, a top right neighboring block adjacent to the top right of the current block, a left neighboring block adjacent to the left of the current block, a bottom left neighboring block adjacent to the bottom left of the current block, a bottom neighboring block adjacent to the bottom of the current block, a bottom right neighboring block adjacent to the bottom right of the current block, and a right neighboring block adjacent to the right of the current block.

In S2430, the image encoding apparatus 2500 may obtain a filter index indicating one in-loop filter set among a plurality of in-loop filter sets, based on the first representative value and the second representative value.

According to an embodiment of the present disclosure, the filter index may be determined based on the sum of absolute values based on the first representative value and the second representative value.

In S2450, the image encoding apparatus 2500 may perform in-loop filtering on the current block, based on the one in-loop filter set determined by the filter index.

According to an embodiment of the present disclosure, the in-loop filtering may be one of deblocking filtering, SAO filtering, or ALF filtering.

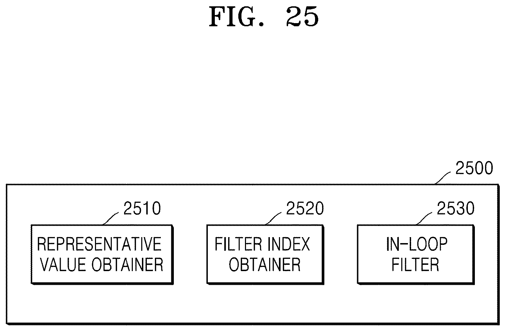

FIG. 25 is a block diagram illustrating a configuration of an image encoding apparatus according to an embodiment of the present disclosure.

Referring to FIG. 25, the image encoding apparatus 2500 may include a representative value obtainer 2510, a filter index obtainer 2520, and an in-loop filter 2530.

The representative value obtainer 2510, the filter index obtainer 2520, and the in-loop filter 2530 may be implemented as one or more processors. The representative value obtainer 2510, the filter index obtainer 2520, and the in-loop filter 2530 may operate according to an instruction stored in memory. The instruction may cause the one or more processors to perform one or more operations.

While FIG. 25 shows the representative value obtainer 2510, the filter index obtainer 2520, and the in-loop filter 2530 as separate elements, the representative value obtainer 2510, the filter index obtainer 2520, and the in-loop filter 2530 may be implemented via one processor. For example, the representative value obtainer 2510, the filter index obtainer 2520, and the in-loop filter 2530 may be implemented as a dedicated processor, or may be implemented via a combination of a general-purpose processor such as an AP, a CPU, or a GPU and software. Also, the dedicated processor may include memory including instructions for implementation of an embodiment of the present disclosure, or may include a memory processor for using external memory.

The representative value obtainer 2510, the filter index obtainer 2520, and the in-loop filter 2530 may be configured as a plurality of processors. In this case, they may be implemented via a combination of dedicated processors, or may be implemented via a combination of a plurality of dedicated processors including an AP, a CPU, or a GPU and software. Also, a processor may include an artificial intelligence dedicated processor. In another example, an artificial intelligence dedicated processor may be configured as a separate chip from a processor.

The representative value obtainer 2510 may obtain a first representative value of a current block with respect to residual samples or prediction samples of the current block, and a second representative value of each of neighboring blocks with respect to residual samples or prediction samples of each of the neighboring blocks of the current block.

According to an embodiment of the present disclosure, the first representative value may have the lower precision than a pixel level unit of the residual samples or the prediction samples of the current block, and the second representative value may have the lower precision than a pixel level unit of the residual samples or the prediction samples of each neighboring block.

According to an embodiment of the present disclosure, the first representative value may include respective quantized absolute values of the residual samples or the prediction samples of the current block, and the second representative value may include respective quantized absolute values of the residual samples or the prediction samples of each neighboring block.

According to an embodiment of the present disclosure, the first representative value may include a mean of absolute values of the residual samples or the prediction samples in the current block, and the second representative value may include a mean of absolute values of the residual samples or the prediction samples of each neighboring block.

According to an embodiment of the present disclosure, the first representative value may include a quantized mean of the absolute values of the residual samples or the prediction samples in the current block, and the second representative value may include a quantized mean of the absolute values of the residual samples or the prediction samples of each neighboring block.

According to an embodiment of the present disclosure, a size of the current block may be 2x2, and a size of each neighboring block may be 2x2.

According to an embodiment of the present disclosure, a size of the current block may be 4x4, and a size of each neighboring block may be 4x4.

According to an embodiment of the present disclosure, a size of the current block and each of the neighboring blocks may be one of 1x1, 2x1, 1x2, 4x2, or 2x4.

According to an embodiment of the present disclosure, the neighboring blocks may include a top left neighboring block adjacent to the top left of the current block, a top neighboring block adjacent to the top of the current block, a top right neighboring block adjacent to the top right of the current block, a left neighboring block adjacent to the left of the current block, a bottom left neighboring block adjacent to the bottom left of the current block, a bottom neighboring block adjacent to the bottom of the current block, a bottom right neighboring block adjacent to the bottom right of the current block, and a right neighboring block adjacent to the right of the current block.

The filter index obtainer 2520 may obtain a filter index indicating one in-loop filter set among a plurality of in-loop filter sets, based on the first representative value and the second representative value.

According to an embodiment of the present disclosure, the filter index may be determined based on the sum of absolute values based on the first representative value and the second representative value.

The in-loop filter 2530 may perform in-loop filtering on the current block, based on the one in-loop filter set determined by the filter index.

According to an embodiment of the present disclosure, the in-loop filtering may be one of deblocking filtering, SAO filtering, or ALF filtering.

According to an embodiment of the present disclosure, an image decoding method may include: obtaining a first representative value of a current block with respect to residual samples or prediction samples of the current block, and a second representative value of each of neighboring blocks with respect to residual samples or prediction samples of each of the neighboring blocks of the current block; obtaining a filter index indicating one in-loop filter set among a plurality of in-loop filter sets, based on the first representative value and the second representative value; and performing in-loop filtering on the current block, based on the one in-loop filter set determined by the filter index.

According to an embodiment of the present disclosure, the image decoding method may include obtaining a representative value of residual samples or prediction samples of a current block and each of neighboring blocks, obtaining a filter index based on the representative value, and performing in-loop filtering based on the filter index, so that an amount of data of the residual sample or the prediction samples stored in a buffer may be decreased, and a size of the buffer may be reduced.

According to an embodiment of the present disclosure, the first representative value may have a lower precision than a pixel level unit of the residual samples or the prediction samples of the current block, and the second representative value may have a lower precision than a pixel level unit of the residual samples or the prediction samples of each of the neighboring blocks.

In the image decoding method according to an embodiment of the present disclosure, a representative value of a block may have a lower precision than a pixel level unit of residual samples or prediction samples of the block, so that a size of the buffer may be reduced.

According to an embodiment of the present disclosure, the first representative value may include respective quantized absolute values of the residual samples or the prediction samples of the current block, and the second representative value may include respective quantized absolute values of the residual samples or the prediction samples of each of the neighboring blocks.

According to an embodiment of the present disclosure, the image decoding method may include obtaining respective quantized absolute values of the residual samples or the prediction samples of the block as representative values of the block, thereby reducing a size of the buffer by 1/2.

According to an embodiment of the present disclosure, the first representative value may include a mean of absolute values of the residual samples or the prediction samples in the current block, and the second representative value may include a mean of absolute values of the residual samples or the prediction samples of each of the neighboring blocks.

According to an embodiment of the present disclosure, the image decoding method may include obtaining a mean of respective absolute values of the residual samples or the prediction samples of the block as a representative value of the block, thereby reducing a size of the buffer by 1/4.

According to an embodiment of the present disclosure, the first representative value may include a quantized mean of absolute values of the residual samples or the prediction samples in the current block, and the second representative value may include a quantized mean of absolute values of the residual samples or the prediction samples of each of the neighboring blocks.

According to an embodiment of the present disclosure, the image decoding method may include obtaining a quantized mean of respective absolute values of the residual samples or the prediction samples of the block as a representative value of the block, thereby reducing a size of the buffer by 1/8.

According to an embodiment of the present disclosure, a size of the current block may be 2x2, and a size of each of the neighboring blocks may be 2x2.

According to an embodiment of the present disclosure, the image decoding method may include using a representative value of four residual samples or four prediction samples of a 2x2-size block, thereby reducing a size of the buffer.

According to an embodiment of the present disclosure, the filter index may be determined based on the sum of absolute values based on the first representative value and the second representative value.

According to an embodiment of the present disclosure, the image decoding method may include determining a filter index, based on a representative value of residual samples or prediction samples of a current block and each of neighboring blocks, thereby reducing a size of a buffer.

According to an embodiment of the present disclosure, the neighboring blocks may include a top left neighboring block adjacent to the top left of the current block, a top neighboring block adjacent to the top of the current block, a top right neighboring block adjacent to the top right of the current block, a left neighboring block adjacent to the left of the current block, a bottom left neighboring block adjacent to the bottom left of the current block, a bottom neighboring block adjacent to the bottom of the current block, a bottom right neighboring block adjacent to the bottom right of the current block, and a right neighboring block adjacent to the right of the current block.

According to an embodiment of the present disclosure, the image decoding method may include determining a filter index, based on a representative value of residual samples or prediction samples of a current block and each of neighboring blocks adjacent to the current block, and performing in-loop filtering on the current block, thereby reducing a size of a buffer.

According to an embodiment of the present disclosure, an image decoding apparatus may include: memory storing one or more instructions; and at least one processor configured to operate according to the one or more instructions, wherein the at least one processor is configured to: obtain a first representative value of a current block with respect to residual samples or prediction samples of the current block, and a second representative value of each of neighboring blocks with respect to residual samples or prediction samples of each of the neighboring blocks of the current block; obtain a filter index indicating one in-loop filter set among a plurality of in-loop filter sets, based on the first representative value and the second representative value; and perform in-loop filtering on the current block, based on the one in-loop filter set determined by the filter index.

According to an embodiment of the present disclosure, the image decoding apparatus may obtain a representative value of residual samples or prediction samples of a current block and each of neighboring blocks, may obtain a filter index based on the representative value, and may perform in-loop filtering based on the filter index, so that an amount of data of the residual sample or the prediction samples stored in a buffer may be decreased, and a size of the buffer may be reduced.

According to an embodiment of the present disclosure, the first representative value may have a lower precision than a pixel level unit of the residual samples or the prediction samples of the current block, and the second representative value may have a lower precision than a pixel level unit of the residual samples or the prediction samples of each of the neighboring blocks.

In the image decoding apparatus according to an embodiment of the present disclosure, a representative value of a block may have lower precision than a pixel level unit of residual samples or prediction samples of the block, so that a size of the buffer may be reduced.

According to an embodiment of the present disclosure, the first representative value may include respective quantized absolute values of the residual samples or the prediction samples of the current block, and the second representative value may include respective quantized absolute values of the residual samples or the prediction samples of each of the neighboring blocks.

According to an embodiment of the present disclosure, the image decoding apparatus may obtain respective quantized absolute values of the residual samples or the prediction samples of the block as representative values of the block, thereby reducing a size of the buffer by 1/2.

According to an embodiment of the present disclosure, the first representative value may include a mean of absolute values of the residual samples or the prediction samples in the current block, and the second representative value may include a mean of absolute values of the residual samples or the prediction samples of each of the neighboring blocks.

According to an embodiment of the present disclosure, the image decoding apparatus may obtain a mean of respective absolute values of the residual samples or the prediction samples of the block as a representative value of the block, thereby reducing a size of the buffer by 1/4.

According to an embodiment of the present disclosure, the first representative value may include a quantized mean of absolute values of the residual samples or the prediction samples in the current block, and the second representative value may include a quantized mean of absolute values of the residual samples or the prediction samples of each of the neighboring blocks.

According to an embodiment of the present disclosure, the image decoding apparatus may obtain a quantized mean of respective absolute values of the residual samples or the prediction samples of the block as a representative value of the block, thereby reducing a size of the buffer by 1/8.

According to an embodiment of the present disclosure, a size of the current block may be 2x2, and a size of each of the neighboring blocks may be 2x2.

According to an embodiment of the present disclosure, the image decoding apparatus may use a representative value of four residual samples or four prediction samples of a 2x2-size block, thereby reducing a size of the buffer.

According to an embodiment of the present disclosure, the filter index may be determined based on the sum of absolute values based on the first representative value and the second representative value.

According to an embodiment of the present disclosure, the image decoding apparatus may determine a filter index, based on a representative value of residual samples or prediction samples of a current block and each of neighboring blocks, thereby reducing a size of a buffer.

According to an embodiment of the present disclosure, the neighboring blocks may include a top left neighboring block adjacent to the top left of the current block, a top neighboring block adjacent to the top of the current block, a top right neighboring block adjacent to the top right of the current block, a left neighboring block adjacent to the left of the current block, a bottom left neighboring block adjacent to the bottom left of the current block, a bottom neighboring block adjacent to the bottom of the current block, a bottom right neighboring block adjacent to the bottom right of the current block, and a right neighboring block adjacent to the right of the current block.

According to an embodiment of the present disclosure, the image decoding apparatus may determine a filter index, based on a representative value of residual samples or prediction samples of a current block and each of neighboring blocks adjacent to the current block, and may perform in-loop filtering on the current block, thereby reducing a size of a buffer.

According to an embodiment of the present disclosure, an image encoding method may include: obtaining a first representative value of a current block with respect to residual samples or prediction samples of the current block, and a second representative value of each of neighboring blocks with respect to residual samples or prediction samples of each of the neighboring blocks of the current block; obtaining a filter index indicating one in-loop filter set among a plurality of in-loop filter sets, based on the first representative value and the second representative value; and performing in-loop filtering on the current block, based on the one in-loop filter set determined by the filter index.

According to an embodiment of the present disclosure, the image encoding method may include obtaining a representative value of residual samples or prediction samples of a current block and each of neighboring blocks, obtaining a filter index based on the representative value, and performing in-loop filtering based on the filter index, so that an amount of data stored in a buffer may be decreased, and a size of the buffer may be reduced.

According to an embodiment of the present disclosure, the first representative value may have a lower precision than a pixel level unit of the residual samples or the prediction samples of the current block, and the second representative value may have a lower precision than a pixel level unit of the residual samples or the prediction samples of each of the neighboring blocks.

In the image encoding method according to an embodiment of the present disclosure, a representative value of a block may have a lower precision than a pixel level unit of residual samples or prediction samples of the block, so that a size of the buffer may be reduced.

According to an embodiment of the present disclosure, the first representative value may include respective quantized absolute values of the residual samples or the prediction samples of the current block, and the second representative value may include respective quantized absolute values of the residual samples or the prediction samples of each of the neighboring blocks.

According to an embodiment of the present disclosure, the image encoding method may include obtaining respective quantized absolute values of the residual samples or the prediction samples of the block as representative values of the block, thereby reducing a size of the buffer by 1/2.

According to an embodiment of the present disclosure, the first representative value may include a mean of absolute values of the residual samples or the prediction samples in the current block, and the second representative value may include a mean of absolute values of the residual samples or the prediction samples of each of the neighboring blocks.

According to an embodiment of the present disclosure, the image encoding method may include obtaining a mean of respective absolute values of the residual samples or the prediction samples of the block as a representative value of the block, thereby reducing a size of the buffer by 1/4.

According to an embodiment of the present disclosure, the first representative value may include a quantized mean of absolute values of the residual samples or the prediction samples in the current block, and the second representative value may include a quantized mean of absolute values of the residual samples or the prediction samples of each of the neighboring blocks.

According to an embodiment of the present disclosure, the image encoding method may include obtaining a quantized mean of respective absolute values of the residual samples or the prediction samples of the block as a representative value of the block, thereby reducing a size of the buffer by 1/8.

According to an embodiment of the present disclosure, a size of the current block may be 2x2, and a size of each of the neighboring blocks may be 2x2.

According to an embodiment of the present disclosure, the image encoding method may include using a representative value of four residual samples or four prediction samples of a 2x2-size block, thereby reducing a size of the buffer.

According to an embodiment of the present disclosure, the filter index may be determined based on the sum of absolute values based on the first representative value and the second representative value.

According to an embodiment of the present disclosure, the image encoding method may include determining a filter index, based on a representative value of residual samples or prediction samples of a current block and each of neighboring blocks, thereby reducing a size of a buffer.

According to an embodiment of the present disclosure, the neighboring blocks may include a top left neighboring block adjacent to the top left of the current block, a top neighboring block adjacent to the top of the current block, a top right neighboring block adjacent to the top right of the current block, a left neighboring block adjacent to the left of the current block, a bottom left neighboring block adjacent to the bottom left of the current block, a bottom neighboring block adjacent to the bottom of the current block, a bottom right neighboring block adjacent to the bottom right of the current block, and a right neighboring block adjacent to the right of the current block.

According to an embodiment of the present disclosure, the image encoding method may include determining a filter index, based on a representative value of residual samples or prediction samples of a current block and each of neighboring blocks adjacent to the current block, and performing in-loop filtering on the current block, thereby reducing a size of a buffer.

According to an embodiment of the present disclosure, an image encoding apparatus may include: memory storing one or more instructions; and at least one processor configured to operate according to the one or more instructions, wherein the at least one processor is configured to: obtain a first representative value of a current block with respect to residual samples or prediction samples of the current block, and a second representative value of each of neighboring blocks with respect to residual samples or prediction samples of each of the neighboring blocks of the current block; obtain a filter index indicating one in-loop filter set among a plurality of in-loop filter sets, based on the first representative value and the second representative value; and perform in-loop filtering on the current block, based on the one in-loop filter set determined by the filter index.

According to an embodiment of the present disclosure, the image encoding apparatus may obtain a representative value of residual samples or prediction samples of a current block and each of neighboring blocks, may obtain a filter index based on the representative value, and may perform in-loop filtering based on the filter index, so that an amount of data of the residual sample or the prediction samples stored in a buffer may be decreased, and a size of the buffer may be reduced.

According to an embodiment of the present disclosure, the first representative value may have a lower precision than a pixel level unit of the residual samples or the prediction samples of the current block, and the second representative value may have a lower precision than a pixel level unit of the residual samples or the prediction samples of each of the neighboring blocks.

In the image encoding apparatus according to an embodiment of the present disclosure, a representative value of a block may have a lower precision than a pixel level unit of residual samples or prediction samples of the block, so that a size of the buffer may be reduced.

According to an embodiment of the present disclosure, the first representative value may include respective quantized absolute values of the residual samples or the prediction samples of the current block, and the second representative value may include respective quantized absolute values of the residual samples or the prediction samples of each of the neighboring blocks.

According to an embodiment of the present disclosure, the image encoding apparatus may obtain respective quantized absolute values of the residual samples or the prediction samples of the block as representative values of the block, thereby reducing a size of the buffer by 1/2.

According to an embodiment of the present disclosure, the first representative value may include a mean of absolute values of the residual samples or the prediction samples in the current block, and the second representative value may include a mean of absolute values of the residual samples or the prediction samples of each of the neighboring blocks.

According to an embodiment of the present disclosure, the image encoding apparatus may obtain a mean of respective absolute values of the residual samples or the prediction samples of the block as a representative value of the block, thereby reducing a size of the buffer by 1/4.

According to an embodiment of the present disclosure, the first representative value may include a quantized mean of absolute values of the residual samples or the prediction samples in the current block, and the second representative value may include a quantized mean of absolute values of the residual samples or the prediction samples of each of the neighboring blocks.

According to an embodiment of the present disclosure, the image encoding apparatus may obtain a quantized mean of respective absolute values of the residual samples or the prediction samples of the block as a representative value of the block, thereby reducing a size of the buffer by 1/8.

According to an embodiment of the present disclosure, a size of the current block may be 2x2, and a size of each of the neighboring blocks may be 2x2.

According to an embodiment of the present disclosure, the image encoding apparatus may use a representative value of four residual samples or four prediction samples of a 2x2-size block, thereby reducing a size of the buffer.

According to an embodiment of the present disclosure, the filter index may be determined based on the sum of absolute values based on the first representative value and the second representative value.

According to an embodiment of the present disclosure, the image encoding apparatus may determine a filter index, based on a representative value of residual samples or prediction samples of a current block and each of neighboring blocks, thereby reducing a size of a buffer.

According to an embodiment of the present disclosure, the neighboring blocks may include a top left neighboring block adjacent to the top left of the current block, a top neighboring block adjacent to the top of the current block, a top right neighboring block adjacent to the top right of the current block, a left neighboring block adjacent to the left of the current block, a bottom left neighboring block adjacent to the bottom left of the current block, a bottom neighboring block adjacent to the bottom of the current block, a bottom right neighboring block adjacent to the bottom right of the current block, and a right neighboring block adjacent to the right of the current block.

According to an embodiment of the present disclosure, the image encoding apparatus may determine a filter index, based on a representative value of residual samples or prediction samples of a current block and each of neighboring blocks adjacent to the current block, and may perform in-loop filtering on the current block, thereby reducing a size of a buffer.

A machine-readable storage medium may be provided in a form of a non-transitory storage medium. Here, the

## EP 4 723 644 A1

"non-transitory storage medium" only denotes a tangible device and does not contain a signal (for example, electromagnetic waves). This term does not distinguish a case where data is stored in the storage medium semi-permanently and a case where the data is stored in the storage medium temporarily. For example, the "non-transitory storage medium" may include a buffer where data is temporarily stored.

According to an embodiment, a method according to various embodiments disclosed in the present specification may be provided by being included in a computer program product. The computer program products are products that can be traded between sellers and buyers. The computer program product may be distributed in a form of machine-readable storage medium (for example, a compact disc read-only memory (CD-ROM)), or distributed (for example, downloaded or uploaded) through an application store or directly or online between two user devices (for example, smart phones). In the case of online distribution, at least a part of the computer program product (for example, a downloadable application) may be at least temporarily generated or temporarily stored in a machine-readable storage medium, such as a server of a manufacturer, a server of an application store, or memory of a relay server.

## Claims

1. An image decoding method comprising:

   obtaining a first representative value of a current block with respect to residual samples or prediction samples of the current block, and a second representative value of each of neighboring blocks with respect to residual samples or prediction samples of each of the neighboring blocks of the current block (S2210);
   obtaining a filter index indicating one in-loop filter set among a plurality of in-loop filter sets, based on the first representative value and the second representative value (S2230); and
   performing in-loop filtering on the current block, based on the one in-loop filter set determined by the filter index (S2250).

2. The image decoding method of claim 1, wherein
   the first representative value has a lower precision than a pixel level unit of the residual samples or the prediction samples of the current block, and the second representative value has a lower precision than a pixel level unit of the residual samples or the prediction samples of each of the neighboring blocks.

3. The image decoding method of claim 1 or 2, wherein

   the first representative value comprises respective quantized absolute values of the residual samples or the prediction samples of the current block, and
   the second representative value comprises respective quantized absolute values of the residual samples or the prediction samples of each of the neighboring blocks.

4. The image decoding method of claim 1 or 2, wherein

   the first representative value comprises a mean of absolute values of the residual samples or the prediction samples in the current block, and
   the second representative value comprises a mean of absolute values of the residual samples or the prediction samples of each of the neighboring blocks.

5. The image decoding method of claim 1 or 2, wherein

   the first representative value comprises a quantized mean of absolute values of the residual samples or the prediction samples in the current block, and
   the second representative value comprises a quantized mean of absolute values of the residual samples or the prediction samples of each of the neighboring blocks.

6. The image decoding method of any one of claims 1 to 5, wherein a size of the current block is 2x2, and a size of each of the neighboring blocks is 2x2.

7. The image decoding method of any one of claims 1 to 6, wherein the filter index is determined based on a sum of absolute values based on the first representative value and the second representative value.

8. The image decoding method of any one of claims 1 to 7, wherein the neighboring blocks comprise a top left neighboring block adjacent to the top left of the current block, a top neighboring block adjacent to the top of the current block, a top right neighboring block adjacent to the top right of the current block, a left neighboring block adjacent to the left of the current block, a bottom left neighboring block adjacent to the bottom left of the current block, a bottom neighboring block adjacent to the bottom of the current block, a bottom right neighboring block adjacent to the bottom right of the current block, and a right neighboring block adjacent to the right of the current block.

9. An image decoding apparatus comprising:

memory storing one or more instructions; and
at least one processor configured to operate according to the one or more instructions,
wherein the at least one processor is configured to:

obtain a first representative value of a current block with respect to residual samples or prediction samples of the current block, and a second representative value of each of neighboring blocks with respect to residual samples or prediction samples of each of the neighboring blocks of the current block;
obtain a filter index indicating one in-loop filter set among a plurality of in-loop filter sets, based on the first representative value and the second representative value; and
perform in-loop filtering on the current block, based on the one in-loop filter set determined by the filter index.

10. The image decoding apparatus of claim 9, wherein

the first representative value has a lower precision than a pixel level unit of the residual samples or the prediction samples of the current block, and
the second representative value has a lower precision than a pixel level unit of the residual samples or the prediction samples of each of the neighboring blocks.

11. The image decoding apparatus of claim 9 or 10, wherein

the first representative value comprises respective quantized absolute values of the residual samples or the prediction samples of the current block, and
the second representative value comprises respective quantized absolute values of the residual samples or the prediction samples of each of the neighboring blocks.

12. The image decoding apparatus of claim 9 or 10, wherein

the first representative value comprises a mean of absolute values of the residual samples or the prediction samples in the current block, and
the second representative value comprises a mean of absolute values of the residual samples or the prediction samples of each of the neighboring blocks.

13. The image decoding apparatus of claim 9 or 10, wherein

the first representative value comprises a quantized mean of absolute values of the residual samples or the prediction samples in the current block, and
the second representative value comprises a quantized mean of absolute values of the residual samples or the prediction samples of each of the neighboring blocks.

14. The image decoding apparatus of any one of claims 9 to 13, wherein
the filter index is determined based on a sum of absolute values based on the first representative value and the second representative value.

15. An image encoding method comprising:

obtaining a first representative value of a current block with respect to residual samples or prediction samples of the current block, and a second representative value of each of neighboring blocks with respect to residual samples or prediction samples of each of the neighboring blocks of the current block (S2410);
obtaining a filter index indicating one in-loop filter set among a plurality of in-loop filter sets, based on the first representative value and the second representative value (S2430); and
performing in-loop filtering on the current block, based on the one in-loop filter set determined by the filter index (S2450).

# FIG. 1

BITSTREAM

100

110

RECEIVER

120

DECODER

OUTPUT IMAGE

# FIG. 2

```
                    ┌─────────┐
                    │  START  │
                    └────┬────┘
                         │
                         ▼
       ┌──────────────────────────────────────┐
       │           OBTAIN BIN STRING          │
       │  CORRESPONDING TO SPLIT SHAPE MODE    │──── 210
       └──────────────────┬───────────────────┘
                          │
                          ▼
       ┌──────────────────────────────────────┐
       │          DETERMINE SPLIT RULE         │──── 220
       └──────────────────┬───────────────────┘
                          │
                          ▼
       ┌──────────────────────────────────────┐
       │          SPLIT CODING UNIT INTO       │
       │        PLURALITY OF CODING UNITS      │──── 230
       └──────────────────┬───────────────────┘
                          │
                          ▼
                    ┌─────────┐
                    │   END   │
                    └─────────┘
```

# FIG. 3

EP 4 723 644 A1

# FIG. 4

400 —

410

420a

420b

430a

430b

430c

450

460

470a  470b

480a  480b  480c

FIG. 5

# FIG. 6

# FIG. 7

# FIG. 8

# FIG. 9

# FIG. 10

**FIG. 11**

# FIG. 12

1200

1210a 1210b

1220a

1220b

1216a 1216b

1217

1216c 1216d

1226a 1226b

1226c 1226d

1227

# FIG. 13

| DEPTH＼BLOCK SHAPE | 0: SQUARE | 1: NS_VER | 2: NS_HOR |
|---|---|---|---|
| DEPTH D | 1300 | 1310 | 1320 |
| DEPTH D+1 | 1302 | 1312 | 1322 |
| DEPTH D+2 | 1304 | 1314 | 1324 |
| … | … | … | … |

FIG. 14

FIG. 15

# FIG. 16

# FIG. 17

EP 4 723 644 A1

FIG. 18

FIG. 19

# FIG. 20

2010

2000

| 2011 | 2012 | | |
| 2013 | 2014 | | |

. . .

FIG. 21

2110

2100

| 2111 | 2112 | 2113 | 2114 |
| 2115 | 2116 | 2117 | 2118 |
| 2119 | 2120 | 2121 | 2122 |
| 2123 | 2124 | 2125 | 2126 |

# FIG. 22

START

OBTAIN FIRST REPRESENTATIVE VALUE OF CURRENT BLOCK
WITH RESPECT TO RESIDUAL SAMPLES OR PREDICTION
SAMPLES OF CURRENT BLOCK, AND SECOND REPRESENTATIVE
VALUE OF EACH OF NEIGHBORING BLOCKS WITH RESPECT
TO RESIDUAL SAMPLES OR PREDICTION SAMPLES OF
EACH OF NEIGHBORING BLOCKS OF CURRENT BLOCK ⎯ S2210

OBTAIN FILTER INDEX INDICATING ONE IN-LOOP FILTER
SET AMONG PLURALITY OF IN-LOOP FILTER SETS,
BASED ON FIRST REPRESENTATIVE VALUE AND
SECOND REPRESENTATIVE VALUE ⎯ S2230

PERFORM IN-LOOP FILTERING ON CURRENT BLOCK, BASED ON
ONE IN-LOOP FILTER SET DETERMINED BY FILTER INDEX ⎯ S2250

END

# FIG. 23

```
                                                           2300

      2310              2320              2330
┌─────────────┐  ┌─────────────┐  ┌─────────────┐
│REPRESENTATIVE│  │FILTER INDEX │  │  IN-LOOP    │
│VALUE OBTAINER│  │  OBTAINER   │  │   FILTER    │
└─────────────┘  └─────────────┘  └─────────────┘
```

# FIG. 24

START

OBTAIN FIRST REPRESENTATIVE VALUE OF CURRENT BLOCK WITH RESPECT TO RESIDUAL SAMPLES OR PREDICTION SAMPLES OF CURRENT BLOCK, AND SECOND REPRESENTATIVE VALUE OF EACH OF NEIGHBORING BLOCKS WITH RESPECT TO RESIDUAL SAMPLES OR PREDICTION SAMPLES OF EACH OF NEIGHBORING BLOCKS OF CURRENT BLOCK — S2410

OBTAIN FILTER INDEX INDICATING ONE IN-LOOP FILTER SET AMONG PLURALITY OF IN-LOOP FILTER SETS, BASED ON FIRST REPRESENTATIVE VALUE AND SECOND REPRESENTATIVE VALUE — S2430

PERFORM IN-LOOP FILTERING ON CURRENT BLOCK, BASED ON ONE IN-LOOP FILTER SET DETERMINED BY FILTER INDEX — S2450

END

FIG. 25

2500

2510

2520

2530

| REPRESENTATIVE VALUE OBTAINER | FILTER INDEX OBTAINER | IN-LOOP FILTER |

# EP 4 723 644 A1

## INTERNATIONAL SEARCH REPORT

| | |
|---|---|
| International application No. | |
| | **PCT/KR2024/005142** |

| A. | CLASSIFICATION OF SUBJECT MATTER |
|---|---|

**H04N 19/82**(2014.01)i; **H04N 19/132**(2014.01)i; **H04N 19/176**(2014.01)i; **H04N 19/70**(2014.01)i; **H04N 19/124**(2014.01)i; **H04N 19/426**(2014.01)i; **H04N 19/117**(2014.01)i; **H04N 19/186**(2014.01)i

According to International Patent Classification (IPC) or to both national classification and IPC

| B. | FIELDS SEARCHED |
|---|---|

Minimum documentation searched (classification system followed by classification symbols)

H04N 19/82(2014.01); H04N 19/00(2014.01); H04N 19/105(2014.01); H04N 19/117(2014.01); H04N 19/176(2014.01); H04N 7/24(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인-루프 필터링(in-loop filtering), 현재 블록(current block), 주변 블록(neighboring block), 대표 값(representative value), 필터 인덱스(filter index)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2013-0095279 A (MEDIATEK INC.) 27 August 2013 (2013-08-27)<br>See claim 1. | 1-15 |
| A | KR 10-2015-0027731 A (SAMSUNG ELECTRONICS CO., LTD.) 12 March 2015 (2015-03-12)<br>See claims 1 and 5. | 1-15 |
| A | KR 10-2018-0107087 A (SAMSUNG ELECTRONICS CO., LTD.) 01 October 2018 (2018-10-01)<br>See claims 1-2. | 1-15 |
| A | US 2021-0218962 A1 (ELECTRONICS AND TELECOMMUNICATIONS RESEARCH INSTITUTE) 15 July 2021 (2021-07-15)<br>See paragraphs [0702]-[0714]; and figures 40A-55D. | 1-15 |
| A | KR 10-0966494 B1 (DONGGUK UNIVERSITY INDUSTRY-ACADEMIC COOPERATION FOUNDATION) 29 June 2010 (2010-06-29)<br>See claim 1. | 1-15 |

| ☐ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 July 2024** | **17 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| | International application No. |
|---|---|
| | **PCT/KR2024/005142** |

| Patent document cited in search report | | | Publication date (day/month/year) | Patent family member(s) | | | Publication date (day/month/year) |
|---|---|---|---|---|---|---|---|
| KR 10-2013-0095279 | A | | 27 August 2013 | CN | 102742275 | A | 17 October 2012 |
| | | | | CN | 102742275 | B | 10 September 2014 |
| | | | | CN | 102804776 | A | 28 November 2012 |
| | | | | CN | 102804776 | B | 06 June 2017 |
| | | | | CN | 103141094 | A | 05 June 2013 |
| | | | | CN | 103141094 | B | 26 October 2016 |
| | | | | CN | 103155557 | A | 12 June 2013 |
| | | | | CN | 103155557 | B | 01 March 2017 |
| | | | | CN | 103283234 | A | 04 September 2013 |
| | | | | CN | 103283234 | B | 24 August 2016 |
| | | | | CN | 103392338 | A | 13 November 2013 |
| | | | | CN | 103404137 | A | 20 November 2013 |
| | | | | CN | 103404137 | B | 19 October 2016 |
| | | | | CN | 103535035 | A | 22 January 2014 |
| | | | | CN | 103535035 | B | 15 March 2017 |
| | | | | CN | 105120270 | A | 02 December 2015 |
| | | | | CN | 105120270 | B | 04 September 2018 |
| | | | | CN | 106028050 | A | 12 October 2016 |
| | | | | CN | 106028050 | B | 26 April 2019 |
| | | | | CN | 106131552 | A | 16 November 2016 |
| | | | | CN | 106131552 | B | 18 February 2020 |
| | | | | CN | 106131579 | A | 16 November 2016 |
| | | | | CN | 106131579 | B | 28 August 2020 |
| | | | | CN | 106162186 | A | 23 November 2016 |
| | | | | CN | 106162186 | B | 23 June 2020 |
| | | | | CN | 106162200 | A | 23 November 2016 |
| | | | | CN | 106162200 | B | 22 March 2019 |
| | | | | CN | 106331709 | A | 11 January 2017 |
| | | | | CN | 106331709 | B | 03 July 2020 |
| | | | | CN | 106454357 | A | 22 February 2017 |
| | | | | CN | 106878729 | A | 20 June 2017 |
| | | | | CN | 106878729 | B | 24 September 2019 |
| | | | | CN | 107087180 | A | 22 August 2017 |
| | | | | CN | 107087180 | B | 29 October 2019 |
| | | | | CN | 107257458 | A | 17 October 2017 |
| | | | | CN | 107257458 | B | 05 January 2021 |
| | | | | EP | 2458862 | A2 | 30 May 2012 |
| | | | | EP | 2458862 | A3 | 31 October 2012 |
| | | | | EP | 2625859 | A1 | 14 August 2013 |
| | | | | EP | 2625859 | A4 | 02 March 2016 |
| | | | | EP | 2625860 | A1 | 14 August 2013 |
| | | | | EP | 2625860 | A4 | 03 June 2015 |
| | | | | EP | 2661879 | A1 | 13 November 2013 |
| | | | | EP | 2661879 | A4 | 08 July 2015 |
| | | | | EP | 2661879 | B1 | 10 July 2019 |
| | | | | EP | 2661887 | A1 | 13 November 2013 |
| | | | | EP | 2661887 | A4 | 15 June 2016 |
| | | | | EP | 2661891 | A1 | 13 November 2013 |
| | | | | EP | 2661891 | A4 | 06 July 2016 |
| | | | | EP | 3082339 | A1 | 19 October 2016 |

Form PCT/ISA/210 (patent family annex) (July 2022)

**INTERNATIONAL SEARCH REPORT**
Information on patent family members

International application No.

**PCT/KR2024/005142**

| Patent document cited in search report | Publication date (day/month/year) | Patent family member(s) | | Publication date (day/month/year) |
|---|---|---|---|---|
| | | EP | 3082339 B1 | 25 August 2021 |
| | | EP | 3242483 A1 | 08 November 2017 |
| | | JP | 2012-005113 A | 05 January 2012 |
| | | JP | 2013-534388 A | 02 September 2013 |
| | | JP | 2013-541918 A | 14 November 2013 |
| | | JP | 5165083 B2 | 21 March 2013 |
| | | JP | 5524423 B2 | 18 June 2014 |
| | | JP | 5792305 B2 | 07 October 2015 |
| | | KR | 10-1433501 B1 | 25 August 2014 |
| | | KR | 10-1438471 B1 | 16 September 2014 |
| | | KR | 10-1526349 B1 | 05 June 2015 |
| | | KR | 10-1547201 B1 | 25 August 2015 |
| | | KR | 10-2013-0019423 A | 26 February 2013 |
| | | KR | 10-2013-0030294 A | 26 March 2013 |
| | | KR | 10-2013-0102603 A | 17 September 2013 |
| | | US | 10291921 B2 | 14 May 2019 |
| | | US | 10405004 B2 | 03 September 2019 |
| | | US | 10567751 B2 | 18 February 2020 |
| | | US | 11064209 B2 | 13 July 2021 |
| | | US | 2011-0274158 A1 | 10 November 2011 |
| | | US | 2011-0305274 A1 | 15 December 2011 |
| | | US | 2011-0305277 A1 | 15 December 2011 |
| | | US | 2012-0082241 A1 | 05 April 2012 |
| | | US | 2012-0082244 A1 | 05 April 2012 |
| | | US | 2012-0177103 A1 | 12 July 2012 |
| | | US | 2012-0177107 A1 | 12 July 2012 |
| | | US | 2012-0294353 A1 | 22 November 2012 |
| | | US | 2013-0215959 A1 | 22 August 2013 |
| | | US | 2013-0259117 A1 | 03 October 2013 |
| | | US | 2015-0124866 A1 | 07 May 2015 |
| | | US | 2015-0124869 A1 | 07 May 2015 |
| | | US | 2015-0350648 A1 | 03 December 2015 |
| | | US | 2016-0156938 A1 | 02 June 2016 |
| | | US | 2016-0360211 A1 | 08 December 2016 |
| | | US | 2017-0163982 A1 | 08 June 2017 |
| | | US | 2018-0109785 A1 | 19 April 2018 |
| | | US | 2019-0149846 A1 | 16 May 2019 |
| | | US | 2019-0261008 A1 | 22 August 2019 |
| | | US | 8660174 B2 | 25 February 2014 |
| | | US | 8861617 B2 | 14 October 2014 |
| | | US | 9055305 B2 | 09 June 2015 |
| | | US | 9094658 B2 | 28 July 2015 |
| | | US | 9154778 B2 | 06 October 2015 |
| | | US | 9161041 B2 | 13 October 2015 |
| | | US | 9432670 B2 | 30 August 2016 |
| | | US | 9456111 B2 | 27 September 2016 |
| | | US | 9615093 B2 | 04 April 2017 |
| | | US | 9641863 B2 | 02 May 2017 |
| | | US | 9813738 B2 | 07 November 2017 |
| | | US | 9877019 B2 | 23 January 2018 |

Form PCT/ISA/210 (patent family annex) (July 2022)

| INTERNATIONAL SEARCH REPORT | | International application No. |
|---|---|---|
| Information on patent family members | | **PCT/KR2024/005142** |

| Patent document cited in search report | Publication date (day/month/year) | Patent family member(s) | | | Publication date (day/month/year) |
|---|---|---|---|---|---|
| | | US | 9998737 | B2 | 12 June 2018 |
| | | WO | 2011-140960 | A1 | 17 November 2011 |
| | | WO | 2011-157084 | A1 | 22 December 2011 |
| | | WO | 2012-045269 | A1 | 12 April 2012 |
| | | WO | 2012-045270 | A1 | 12 April 2012 |
| | | WO | 2012-092777 | A1 | 12 July 2012 |
| | | WO | 2012-092787 | A1 | 12 July 2012 |
| | | WO | 2012-092841 | A1 | 12 July 2012 |
| | | WO | 2012-155553 | A1 | 22 November 2012 |
| KR  10-2015-0027731  A | 12 March 2015 | CN | 105684443 | A | 15 June 2016 |
| | | CN | 105684443 | B | 18 October 2019 |
| | | US | 2016-0205409 | A1 | 14 July 2016 |
| | | WO | 2015-034303 | A1 | 12 March 2015 |
| KR  10-2018-0107087  A | 01 October 2018 | CN | 108702502 | A | 23 October 2018 |
| | | EP | 3393126 | A1 | 24 October 2018 |
| | | EP | 3393126 | A4 | 17 April 2019 |
| | | JP | 2019-508944 | A | 28 March 2019 |
| | | US | 11277615 | B2 | 15 March 2022 |
| | | US | 2021-0195199 | A1 | 24 June 2021 |
| | | WO | 2017-142327 | A1 | 24 August 2017 |
| US  2021-0218962  A1 | 15 July 2021 | CN | 111615828 | A | 01 September 2020 |
| | | CN | 111615828 | B | 10 January 2023 |
| | | CN | 115802034 | A | 14 March 2023 |
| | | CN | 115941941 | A | 07 April 2023 |
| | | CN | 115955562 | A | 11 April 2023 |
| | | CN | 116055748 | A | 02 May 2023 |
| | | EP | 3720129 | A1 | 07 October 2020 |
| | | EP | 3720129 | A4 | 25 August 2021 |
| | | JP | 2021-505074 | A | 15 February 2021 |
| | | JP | 2023-138676 | A | 02 October 2023 |
| | | JP | 7330184 | B2 | 21 August 2023 |
| | | KR | 10-2019-0063452 | A | 07 June 2019 |
| | | KR | 10-2643115 | B1 | 04 March 2024 |
| | | US | 11290715 | B2 | 29 March 2022 |
| | | US | 11943436 | B2 | 26 March 2024 |
| | | US | 2022-0295058 | A1 | 15 September 2022 |
| | | WO | 2019-107994 | A1 | 06 June 2019 |
| KR  10-0966494  B1 | 29 June 2010 | None | | | |

Form PCT/ISA/210 (patent family annex) (July 2022)